# EUROPÄISCHE PATENTSCHRIFT

(11) **EP 4 208 695 B1**
(45) Veröffentlichungstag und Bekanntmachung des Hinweises auf die Patenterteilung: **26.11.2025**
(21) Anmeldenummer: 21763055.7
(22) Anmeldetag: 16.08.2021
(51) Int. Cl.: G01F 1/84, G01N 9/32, G01N 11/02, G01N 11/16, G01N 9/00

(54) **VIBRONISCHES MESSSYSTEM**
VIBRONIC MEASURING SYSTEM
SYSTÈME DE MESURE VIBRONIQUE

(30) Priorität: 03.09.2020 DE 102020123067; 30.11.2020 DE 102020131649
(43) Veröffentlichungstag der Anmeldung: 12.07.2023
(73) Patentinhaber: Endress+Hauser Flowtec AG, 4153 Reinach (CH)
(72) Erfinder: KIRST, Michael, 79540 Lörrach (DE)
(74) Vertreter: Endress + Hauser Group Services (Deutschland) AG+Co. KG
(86) Internationale Anmeldenummer: PCT/EP2021/072663
(87) Internationale Veröffentlichungsnummer: WO 2022/048888

(56) Entgegenhaltungen:
- EP-A1- 2 638 367
- EP-B1- 2 638 367
- AU-B2- 717 965
- DE-A1- 19 634 663
- US-A1- 2016 116 319
- US-B2- 9 052 225
- US-B2- 9 372 107

## Beschreibung

Die Erfindung betrifft ein mittels eines Meßwandlers vom Vibrationstyp und einer daran elektrisch angeschlossenen Meßsystem-Elektronik gebildetes vibronisches Meßsystem, insb. ein Coriolis-Massedurchfluß-Meßgerät oder Coriolis-Massedurchfluß-/Dichte-Meßgerät, zum Messen und/oder Überwachen wenigstens einer Meßgröße eines strömenden Meßstoffs, insb. nämlich eines Gases, einer Flüssigkeit oder einer Dispersion. Meßgröße kann beispielsweise ein zeitlich veränderlicher Strömungsparameter, beispielsweise ein Massenstrom, ein Volumenstrom bzw. eine Strömungsgeschwindigkeit, und/oder ein zeitlich veränderlicher Stoffparameter, beispielsweise eine Dichte und/oder eine Viskosität, des jeweiligen Meßstoffs sein. Derartige - typischerweise als ein In-Line-Meßgeräts in Kompaktbauweise ausgebildete - Meßsysteme sind seit langem bekannt und haben sich im industriellen Einsatz, nicht zuletzt auch im Bereich der Regelung und Überwachung von automatisierten verfahrenstechnischen Prozessen bzw. Prozeßanlagen oder im Bereich von Übergabestellen des ggf. auch eichpflichtigen Güterverkehrs, bewährt. Beispiele für vibronische Meßsysteme der in Rede stehenden Art und/oder deren Verwendung, sind z.B. in der EP-A 317 340, der EP-A 816 807, der JP-A 8-136311, der JP-A 9-015015, der US-A 2003/0154804, der US-A 2005/0125167, der US-A 2006/0000293, der US-A 2006/0112774, der US-A 2006/0266129, der US-A 2007/0062308, der US-A 2007/0113678, der US-A 2007/0119264, der US-A 2007/0119265, der US-A 2007/0151370, der US-A 2007/0151371, der US-A 2007/0186685, der US-A 2008/0034893, der US-A 2008/0041168, der US-A 2008/0141789, der US-A 2010/0011882, der US-A 2010/0050783, der US-A 2010/0101333, der US-A 2010/0139416, der US-A 2010/0139417, der US-A 2010/0236338, der US-A 2010/0242623, der US-A 2010/0242624, der US-A 2010/0251830, der US-A 2011/0167907, der US-A 2012/0123705, der US-A 2014/0352454, der US-A 2016/0033314, der US-A 2016/0123836, der US-A 2016/0138997, der US-A 2016/0349091, der US-A 2017/0030870, der US-A 2017/0356777, der US-A 2020/0132529, der US-A 46 80 974, der US-A 47 38 144, der US-A 47 68 384, der US-A 47 77 833, der US-A 47 93 191, der US-A 48 01 897, der US-A 48 23 614, der US-A 48 31 885, der US-A 48 79 911, der US-A 50 09 109, der US-A 50 24 104, der US-A 50 50 439, der US-A 52 91 792, der US-A 53 59 881, der US-A 53 98 554, der US-A 54 76 013, der US-A 55 31 126, der US-A 56 02 345, der US-A 56 91 485, der US-A 57 28 952, der US-A 57 34 112, der US-A 57 96 010, der US-A 57 96 011, der US-A 57 96 012, der US-A 58 04 741, der US-A 58 31 178, der US-A 58 61 561, der US-A 58 69 770, der US-A 59 26 096, der US-A 59 45 609, der US-A 59 79 246, der US-A 60 47 457, der US-A 60 73 495, der US-A 60 92 429, der US-B 62 23 605, der US-B 63 11 136, der US-B 63 30 832, der US-B 63 97 685, der US-B 65 13 393, der US-B 65 57 422, der US-B 66 51 513, der US-B 66 66 098, der US-B 66 91 583, der US-B 68 40 109, der US-B 68 68 740, der US-B 68 83 387, der US-B 70 17 424, der US-B 70 40 179, der US-B 70 73 396, der US-B 70 77 014, der US-B 70 80 564, der US-B 71 34 348, der US-B 72 99 699, der US-B 73 05 892, der US-B 73 60 451, der US-B 73 92 709, der US-B 74 06 878, der US-B 75 62 586, der WO-A 00/14485, der WO-A 01/02816, der WO-A 03/021204, der WO-A 03/021205, der WO-A 2004/072588, der WO-A 2005/040734, der WO-A 2005/050145, der WO-A 2006/036139, der WO-A 2007/097760, der WO-A 2008/013545, der WO-A 2008/077574, der WO2009/134827, der WO-A 2009/134829, der WO-A 2009/134830, der WO-A 2009/136943, der WO-A 2011/019345, der WO-A 2013/002759, der WO-A 2013/009307, der WO-A 2017/019016, der WO-A 2017/069749, der WO-A 2017/108283, der WO-A 2017/194278, der WO-A 2019/017891, der WO-A 2019/081169, der WO-A 2019/081170, der WO-A 2020/126287, der WO-A 87/06691, der WO-A 93/01472, der WO-A 95/16897, der WO-A 95/29386, der WO-A 96/05484, der WO-A 96/08697, der WO-A 97/26508, der WO-A 99/39164, der WO-A 99/40394, der WO-A 99/44018 oder den eigenen nicht vorveröffentlichten Patentanmeldungen DE102019124709.8, PCT/EP2020/059050 und PCT/EP2020/071817 beschrieben und werden u.a. auch durch die Anmelderin selbst seit langem hergestellt und als Coriolis-Massendurchfluß-Meßgerät bzw. als Coriolis-Massendurchfluß-/Dichte-Meßgerät, beispielsweise unter der Warenbezeichnung "PROMASS G 100", "PROMASS O 100", "PROMASS E 200", "PROMASS F 300", "PROMASS X 500", "CNGmass", "LPGmass" oder "Dosimass" (https://www.endress.com/de/search?filter.text=promass), angeboten.

Jeder der Meßwandler der darin gezeigten Meßsysteme umfaßt jeweils wenigstens eine Rohranordnung zum Führen des strömenden Meßstoffs, eine Erregeranordnung zum Wandeln elektrischer Leistung in dem Anregen und Aufrechterhalten erzwungener mechanischer Schwingungen der Rohranordnung dienliche mechanische Leistung und eine Sensoranordnung zum Erfassen von mechanischen Schwingungen der Rohranordnung und zum Bereitstellen von jeweils Schwingungsbewegungen der Rohranordnung repräsentierenden Schwingungsmeßsignalen auf. Sowohl die Erregeranordnung als auch die Sensoranordnung ist jeweils mit der Meßsystem-Elektronik elektrisch gekoppelt, die wiederum dazu dient, den Meßwandler, insb. nämlich dessen Erregeranordnung, anzusteuern sowie davon gelieferte Meßsignale, insb. nämlich von dessen Sensoranordnung gelieferte Schwingungsmeßsignale, zu empfangen und auszuwerten, insb. nämlich die wenigstens eine Meßgröße repräsentierende Meßwerte zu ermitteln. Zum Schutz vor äußeren Einflüssen ist die Rohranordnung zusammen mit der Erreger- und der Sensoranordnung in einem typischerweise metallischen Wandler-Schutzgehäuse und ist die Meßsystem-Elektronik in einem, beispielsweise ebenfalls metallischen, Elektronik- Schutzgehäuse untergebracht; letzteres kann beispielsweise unter Bildung eines Coriolis-Massedurchfluß-/Dichte-Meßgerät in Kompaktbauweise auch direkt am vorbezeichneten Wandler-Schutzgehäuse gehaltert sein. Bei in der WO-A 96/08697 oder WO-A 2019/017891 gezeigten Meßsystemen sind das Wandler-Schutzgehäuse und die Rohranordnung im besonderen wieder lösbar miteinander verbunden, beispielsweise um ein nachträgliches Einsetzen der Rohranordnung bzw. einen Austausch einer defekten oder verschlissenen Rohranordnung gegen eine intakte Rohranordnung vor Ort zu ermöglichen.

Die vorbezeichneten Rohranordnungen sind jeweils dafür vorgesehen, in den Verlauf einer Prozeßleitung eingegliedert zu werden und weisen jeweils wenigstens ein Rohr - beispielsweise nämlich genau ein Rohr oder genau zwei Rohre oder genau vier Rohre - auf, das sich jeweils von einem jeweiligen ersten Rohrende bis zu einem jeweiligen zweiten Rohrende mit einer Rohrlänge erstreckt und ein von einer - typischerweise metallischen - Rohrwandung umschlossenes, sich vom ersten Rohrende bis zum zweiten Rohrende erstreckendes Lumen aufweist. Das zumindest abschnittsweise gekrümmte und/oder zumindest abschnittsweise gerade Rohr ist - Meßprinzip bedingt - eingerichtet, zumindest in einer vom ersten Rohrende zum zweiten Rohrende weisenden Strömungsrichtung von dem via angeschlossener Prozeßleitung zu- bzw. wieder abgeführten Meßstoff durchströmt und währenddessen, beispielsweise zwecks Generierung vom Massenstrom abhängiger Corioliskräfte, von der Dichte des Meßstoffs abhängiger Trägheitskräfte und/oder von der Viskosität des Meßstoffs abhängiger Reibungskräfte, vibrieren gelassen zu werden, beispielsweise nämlich Biegeschwingungen um ein statische Ruhelage auszuführen. Die Rohre marktgängiger (Standard-)Meßsysteme weisen typischerweise wenigstens zwei zueinander orthogonale Symmetrieebenen auf und können beispielsweise eine U- oder V- bzw. Rechteck- oder Triangel-Form, seltener auch eine Ω- oder Helix-Form aufweisen. Zudem bestehen deren jeweilige Rohrwandung typischerweise aus einem Stahl, beispielsweise nämlich einem Edelstahl, Duplexstahl oder Superduplexstahl, aus einer Titan-Legierung, einer Zirconium-Legierung, beispielsweise einem Zircaloy, und/oder einer Tantal-Legierung. Die Rohrlänge solcher Rohre kann in einem Bereich zwischen etwa 100 mm und 2000 mm und ein Kaliber (Rohrinnendurchmesser) solcher Rohre kann im Bereich zwischen etwa 0,1 mm und etwa 100 mm, typischerweise derart, daß das jeweilige Rohr ein Kaliber-zu-Rohrlänge-Verhältnis aufweist, das im Bereich zwischen etwa 0,08 und 0,25 liegt. Bei Meßwandlern mit einem einzigen Rohr kommuniziert dieses zumeist über ein einlaßseitig einmündendes im wesentlichen gerades Verbindungsrohrstück sowie über ein auslaßseitig einmündendes im wesentlichen gerades Verbindungsrohrstück mit der vorbezeichneten Prozeßleitung. Ferner umfaßt die Rohranordnung solcher Meßwandler mit einem einzigen Rohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Rohr gekoppelt ist und der unter Bildung einer zweiten Kopplungszone auslaßseitig an das Rohr gekoppelt ist, und der im Betrieb im wesentlichen ruht oder zum Rohr gegengleich, also gleichfrequent und gegenphasig, oszilliert. Die mittels Rohr und Gegenschwinger gebildete Rohranordnung eines derartigen Meßwandlers ist zumeist allein mittels der zwei Verbindungsrohrstücke, über die das Rohr im Betrieb mit der Prozeßleitung kommuniziert, im vorbezeichneten Wandler-Schutzgehäuse schwingfähig gehaltert. Bei den beispielsweise in der US-A 52 91 792, der US-A 57 96 010, der US-A 59 45 609, der US-B 70 77 014, der US-A 2007/0119264, der WO-A 01/02816 oder auch der WO-A 99/40394 gezeigten (Standard-)Meßwandlern mit einem einzigen, im wesentlichen geraden Rohr sind letzteres und der Gegenschwinger, wie bei herkömmlichen Meßwandlern durchaus üblich, zueinander im wesentlichen koaxial ausgerichtet. Als Materialien für die Gegenschwinger kommen, nicht zuletzt auch bei Verwendung von Titan, Tantal oder Zirkonium für das Rohr, zumeist vergleichsweise kostengünstige Stahlsorten, wie etwa Baustahl oder Automatenstahl, zum Einsatz. Bei Meßwandlern mit zwei oder mehr Rohren weist die jeweilige Rohranordnung typischerweise jeweils einen sich zwischen den Rohren und einem einlaßseitigen Anschlußflansch erstreckenden einlaßseitig Strömungsteiler sowie über einen sich zwischen den Rohren und einem auslaßseitigen Anschlußflansch erstreckenden auslaßseitig Strömungsteiler auf, über den die Rohranordnung in die Prozeßleitung eingebunden werden kann. In der US-A 2012/0123705, der US-A 56 02 345, der US-A 59 26 096, der WO-A 2009/136943, der WO-A 87/06691, der WO-A 96/05484, der WO-A 96/08697, der WO-A 97/26508, der WO-A 99/39164 oder der WO-A 2019/017891 gezeigte Rohranordnungen weisen jeweils zwei Rohre, nämlich ein erstes Rohr sowie ein dazu baugleiches und paralleles zweites Rohr sowie einen - hier als Leitungsverzweigung dienlichen bzw. einlaßseitigen - ersten Strömungsteiler mit genau zwei Strömungsöffnungen und einen dem ersten Strömungsteiler baugleichen - hier als Leitungsvereinigung dienlichen bzw. auslaßseitigen - zweiten Strömungsteiler mit genau zwei Strömungsöffnungen auf, während in der US-A 56 02 345 oder der WO-A 96/08697 oder der US-A 2017/0356777 oder der WO-A 2019/081169 oder der WO-A 2019/081170 oder der erwähnten Patentanmeldung PCT/EP2019/082044 gezeigte Rohranordnungen jeweils einen - hier als Leitungsverzweigung dienlichen bzw. einlaßseitigen - ersten Strömungsteiler mit genau zwei Strömungsöffnungen, einen dem ersten Strömungsteiler baugleichen - hier als Leitungsvereinigung dienlichen bzw. auslaßseitigen - zweiten Strömungsteiler mit genau zwei Strömungsöffnungen sowie zwei Rohre, nämlich ein erstes Rohr sowie ein zweites Rohr aufweisen. Zudem ist jedes der zwei bzw. vier Rohre jeweils an jeden der ersten und zweiten Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers münden bzw. daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Die Strömungsteiler marktgängiger Meßwandler sind typischerweise zudem als integraler Bestandteil des vorbezeichneten Wandler-Schutzgehäuses ausgebildet.

Zum Generieren von durch die jeweils zu messenden Meßgröße beeinflußten bzw. damit entsprechend korrespondierenden Schwingungssignalen wird das wenigstens eine Rohr des Meßwandlers im Betrieb des Meßsystems mittels der Erregeranordnung aktiv zu Vibrationen in einer für die Messung der jeweiligen Meßgröße bzw. die Generierung der vorbezeichneten Coriolis-, Trägheits- bzw. Reibungskräfte geeigneten, gelegentlich auch als Antriebs- oder Nutzmode bezeichneten Schwingungsform angeregt und werden die entsprechenden Schwingungsantworten, nämlich die resultierende Schwingungsbewegungen des wenigstens ein Rohrs zeitgleich mittels der Sensoranordnung erfaßt.

Zum (aktiven) Anregen mechanischer Schwingungen des wenigstens einen Rohrs weist die Erregeranordnungen wenigstens einen elektro-mechanischen, typischerweise nämlich elektrodynamischen, Schwingungserreger auf, der anteilig mit dem Rohr mechanisch verbunden und dafür eingerichtet ist, elektrische Leistung mit einem zeitlich veränderlichen elektrischen Strom in mechanische Leistung zu wandeln, derart, daß an einem mittels des Schwingungserregers am damit mechanisch verbundenen Rohr gebildeten Antriebspunkt eine zeitlich veränderliche Antriebskraft auf das Rohr wirkt. Für den vorbezeichneten Fall, daß die Rohranordnung zumindest ein weiteres (zweites) Rohr aufweist, kann der wenigstens eine Schwingungserreger zudem anteilig auch daran befestigt sein, derart, daß der Schwingungserreger differenziell auf die beiden Rohre wirkt. Für den anderen vorbezeichneten Fall, daß die Rohranordnung einen Gegenschwinger aufweist, kann Schwingungserreger anteilig daran befestigt sein, derart, daß der Schwingungserreger differenziell auf Rohr und Gegenschwinger wirkt. Der Schwingungserreger kann aber beispielsweise auch anteilig am vorbezeichneten Wandler-Schutzgehäuse angebracht sein. Bei Meßwandlern konventioneller (Standard-)Meßsystemen ist der wenigstens eine Schwingungserreger typischerweise zudem so ausgestaltet und angeordnet, daß die damit generierten Antriebskraft praktisch lediglich punktuell auf das jeweilige Rohr wirkt bzw. daß eine Wirklinie der damit generierten Antriebskraft im wesentlichen senkrecht zu einer Normalen einer Antriebs-Querschnittsfläche, nämlich einer Querschnittsfläche des Rohrs, die von einer durch den vorbezeichneten Antriebspunkt hindurchführende gedachten Umfangslinie umschlossen ist, verläuft.

Bei (Standard-)Meßwandlern marktgängiger (Standard-)Meßsysteme sind die Erregeranordnungen, wie u.a. auch in der US-A 56 02 345, der US-A 57 96 010, der US-B 68 40 109, der US-B 70 77 014 oder der US-B 70 17 424, der US-A 2014/0352454, der WO-A 93/01472, der WO-A 2005/050145, der WO-A 2013/002759, der WO-A 2011/019345 gezeigt, typischerweise zudem so ausgebildet, daß jedes der Rohre mit genau einem Schwingungserreger (anteilig) verbunden ist, derart, daß die Erregeranordnung außer dem (einen) Schwingungserreger keinen weiteren mit dem jeweiligen Rohr verbunden Schwingungserreger aufweist. Nicht zuletzt für diesen (Standard-)Fall ist der Schwingungserreger typischerweise vom elektrodynamischen Typ, nämlich mittels einer Schwingspule gebildet, beispielsweise derart, daß deren magnetischer Anker unter Bildung des Antriebspunkts mechanisch mit dem wenigstens einen Rohr verbundenen ist und daß deren vom Magnetfeld des Ankers durchflutete Luftspule elektrisch an die Meßsystem-Elektronik angeschlossen und mechanisch mit dem anderen Rohr bzw. dem Gegenschwinger der Rohranordnung oder mit dem Wandler-Schutzgehäuse verbunden ist. Gleichwohl sind auch vibronische Meßsysteme bekannt, beispielsweise aus der WO-A 2017/069749, der WO-A 2017/019016, der WO-A 2006/036139, der US-A 59 26 096, der WO-A 99/28708, der WO-A 99/44018, der WO-A 99/02945, der US-A 2020/0132529, der US-A 48 31 885, der US-B 65 57 422, der US-A 60 92 429 oder auch der US-A 48 23 614, bei denen die Erregeranordnung zwei oder mehr mit jeweils ein und demselben der Rohre der jeweiligen Rohranordnung verbundene und/oder mittels einem oder mehreren Piezoelementen gebildete Schwingungserreger aufweist.

Zum Erfassen von Schwingungen des wenigstens einen Rohrs weist die Sensoranordnung zumindest zwei, beispielsweise elektrodynamische oder optische, Schwingungssensoren auf, von denen ein erster Schwingungssensor in Strömungsrichtung vom Schwingungserreger beabstandet einlaßseitig am Rohr positioniert und ein - typischerweise zum ersten Schwingungssensor baugleicher - zweiter Schwingungssensor in Strömungsrichtung vom Schwingungserreger beabstandet auslaßseitig am Rohr positioniert ist. Jeder der wenigstens zwei Schwingungssensoren ist zudem eingerichtet, Schwingungsbewegungen des Rohrs zu erfassen und in ein nämliche Schwingungsbewegungen repräsentierendes, insb. elektrisches bzw. optisches, erstes bzw. zweites Schwingungsmeßsignal zu wandeln, beispielsweise mit einer von den Schwingungen des Rohrs abhängigen elektrischen Spannung. Im Falle elektrodynamischer Schwingungssensoren können diese beispielsweise jeweils mittels einer elektrisch an die Meßsystem-Elektronik angeschlossenen Tauchspule gebildet sein, beispielsweise nämlich derart, daß deren magnetischer Anker mechanisch mit dem wenigstens einen Rohr verbundenen ist und daß deren vom Magnetfeld des Ankers durchflutete Luftspule elektrisch an die Meßsystem-Elektronik angeschlossen und mechanisch mit dem anderen Rohr bzw. dem Gegenschwinger der Rohranordnung oder mit dem Wandlerschutz-Gehäuse verbunden ist.

Die Meßsystem-Elektronik jedes der vorbezeichneten Meßsysteme ist zudem dafür eingerichtet, im Betrieb den wenigstens einen Schwingungserreger entsprechend dem anzuregenden Nutzmode zu bestromen, nämlich mittels wenigstens eines einen zeitlich veränderlichen, z.B. mit einem hinsichtlich (Wechselstrom-)Frequenz, Phasenwinkel und Amplitude geregelten, elektrischen Strom aufweisenden elektrischen Treibersignals elektrische Leistung in den wenigstens Schwingungserreger einzuspeisen, derart, daß das Rohr erzwungene mechanische Schwingungen, beispielsweise nämlich Biegeschwingungen, mit einer oder mehreren durch das Treibersignal vorgegebenen, typischerweise nämlich einer bzw. mehreren Resonanzfrequenzen des wenigstens einen Rohrs entsprechenden Schwingungsfrequenzen ausführt; dies beispielsweise auch mit konstant geregelter Schwingungsamplitude. Das Treibersignal kann dafür als harmonisches, nämlich genau die eine (Wechselstrom-)Frequenz aufweisendes Sinussignal oder beispielsweise auch als multifrequentes, nämlich mehrere Signalkomponenten mit voneinander abweichenden (Wechselstrom-)Frequenzen enthaltendes Signal ausgebildet sein. Infolgedessen enthält auch jedes der von der Sensoranordnung gelieferten ersten und zweiten Schwingungsmeßsignale jeweils eine oder mehrere sinusförmige Signalkomponenten mit jeweils einer einer Schwingungsfrequenz von Schwingungsbewegungen des Rohrs entsprechenden Frequenz, und zwar derart, daß jedes der ersten und zweiten Schwingungssignale, jeweils zumindest auch eine Nutz-Signalkomponente, nämlich eine sinusförmige Signalkomponente mit einer der ersten Nutzfrequenz entsprechenden (Signal-)Frequenz aufweist. Dementsprechend ist die Meßsystem-Elektronik zudem eingerichtet, das vorbezeichnete Treibersignal für den Schwingungserreger zumindest zeitweise mit einem eine (Wechselstrom-)Frequenz aufweisenden sinusförmigen (Nutz-)Strom bereitzustellen, derart, daß das wenigstens eine Rohr zumindest anteilig bzw. überwiegend Nutzschwingungen, nämlich durch den (bestromten) Schwingungserreger erzwungene mechanische Schwingungen mit einer Nutzfrequenz, nämlich einer der vorbezeichneten (Wechselstrom-)Frequenz entsprechenden (Schwingungs-)Frequenz ausführt.

Bei Meßsystemen der in Rede stehenden Art dient als Nutzmode typischerweise eine oder mehrere von einer Vielzahl von dem Rohr innewohnenden, jeweils eine zugehörige Eigen- bzw. Resonanzfrequenz aufweisenden natürlichen Schwingungsmoden, insb. nämlich eine oder mehrere symmetrische Schwingungsmoden, in denen das Rohr jeweils eine ungerade Anzahl Schwingungsbäuche und jeweils eine dementsprechend gerade Anzahl Schwingungsknoten aufweisende Schwingungsbewegungen ausführen kann bzw. ausführt. Nicht zuletzt aufgrund ihrer besonderen Eignung zur Messung sowohl des Massenstroms als auch der Dichte und auch der Viskosität des strömenden Meßstoffs werden bei solchen Meßsystemen, insbesondere auch bei marktgängigen Standard-Meßsystemen, als Nutzmode vorzugsweise eine oder mehrere natürliche symmetrische Biegeschwingungsmode genutzt. Bei Meßwandlern mit gekrümmtem Rohr bzw. gekrümmten Rohren wird typischerweise eine solche symmetrische Biegeschwingungsmode als Nutzmode gewählt, bei der das jeweilige Rohr um eine die ersten und zweiten Rohrenden imaginär verbindende gedachte erste Schwingungsachse nach Art eines lediglich endseits eingespannten Auslegers um eine statische Ruhelage pendelt (out-of-plane-Mode), während bei Meßwandlern mit geradem Rohr bzw. geraden Rohren als Nutzmode üblicherweise eine solche symmetrische Biegeschwingungsmode gewählt, bei der das jeweilige Rohr um eine mit einer von dessen Hauptträgheitsachsen (Längsachse) koinzidente, die ersten und zweiten Rohrenden imaginär verbindende gedachte Schwingungsachse nach Art einer eingespannten Saite um eine statische Ruhelage oszilliert (in-plane-Mode). In marktgängigen Meßsystemen hat sich im besonderen die Verwendung der, gelegentlich auch als Grund-Schwingunsgmode oder f1-Mode bezeichneten, (Biege-)Schwingungsmode erster Ordnung, in der Schwingungsbewegungen des Rohrs jeweils genau einen Schwingungsbauch und zwei Schwingungsknoten aufweisen, mithin symmetrisch sind, seltener auch die Verwendung der gleichermaßen symmetrischen, gelegentlich auch als f3-Mode bezeichneten, (Biege-)Schwingungsmode dritter Ordnung, in der Schwingungsbewegungen des Rohrs jeweils genau drei Schwingungsbäuche und vier Schwingungsknoten aufweisen, als Nutzmode etabliert.

Für den vorbezeichneten (Standard-)Fall, daß pro Rohr (bzw. pro Rohrpaar) genau ein einziger Schwingungserreger vorgesehen ist, ist dieser dementsprechend stets so positioniert und ausgerichtet, daß die vorbezeichnete Antriebs-Querschnittsfläche möglichst im Bereich einer halben Rohrlänge, mithin bei einer jeweiligen maximalen Schwingungsamplitude jeder der vorbezeichneten symmetrischen Schwingunsgmoden bzw. einer maximalen Amplitude der dementsprechenden Nutzschwingungen, gleichwohl bei einem Schwingungsknoten von dem Rohr ebenfalls innewohnenden asymmetrischen Schwingungsmode verortetet ist. Zwecks Erzielung einer höchstmöglichen Effizienz bei der Anregung der Nutzmode, aber auch zwecks Vermeidung einer unerwünschten Anregung auch von Schwingungen in einer oder mehreren der vorbezeichneten asymmetrische Schwingungsmoden ist der Schwingungserreger bei marktgängigen (Standard-)Meßsystemen zudem im besonderen so positioniert, daß ein Antriebsversatz, nämlich ein kleinster Abstand zwischen der Antriebs-Querschnittsfläche des Rohrs und einer vorgegebenen, nämlich bei einer maximalen Amplitude der Schwingungsbewegungen der Nutzschwingungen verorteten Referenz-Querschnittsfläche des wenigstens einen Rohrs so gering wie möglich, idealerweise nämlich Null ist. Bei marktgängigen (Standard-)Meßsystemen liegt typischerweise zudem eine Schnittgeraden zweier zueinander orthogonaler Symmetrieebenen des wenigstens einen Rohrs bzw. eine senkrecht zur Schwingungsrichtung der Schwingungsbewegungen des Rohrs in der Schwingungsmode zweiter Ordnung bzw. zur Antriebskraft stehende Hauptträgheitsachse des wenigstens einen Rohrs innerhalb der vorbezeichneten Referenz-Querschnittsfläche. Bei marktgängigen (Standard-)Meßsystemen ist der Antriebsversatz, nicht zuletzt bedingt durch die diverse Toleranzen der bei der Herstellung der Meßwandler bzw. der dafür benötigten Bauteile und Baugruppen, tatsächlich geringfügig von Null verschieden, beträgt typischerweise aber weniger als 5 mm und weniger als 0,5% der Rohrlänge, zumeist tatsächlich auch weniger als 2 mm und weniger als 0,2% der Rohrlänge.

Zwecks einer effizienten Anregung der Nutzmode ist die Meßsystem-Elektronik im besonderen auch dafür eingerichtet, die die Nutzfrequenz bestimmende (Wechselstrom-)Frequenz dementsprechend so einzustellen, daß sie möglichst genau einer Resonanzfrequenz (f1) der Schwingungsmode erster Ordnung oder einer Resonanzfrequenz (f3) der Schwingungsmode dritter Ordnung entspricht bzw. von der jeweils einzustellenden Resonanzfrequenz um weniger als 1% nämlicher Resonanzfrequenz und/oder um weniger als 1 Hz, mithin von der Resonanzfrequenz jeder anderen der natürlichen Schwingungsmoden des Rohrs jeweils um mehr als 5% nämlicher Resonanzfrequenz und/oder um mehr als 10 Hz abweicht, bzw. ist die Meßsystem-Elektronik entsprechend auch eingerichtet, einer Änderung der Resonanzfrequenz, beispielsweise infolge einer Änderung der Dichte des im Rohr geführten Meßstoffs, mit einer Änderung der (Wechselstrom-)Frequenz des Treibersignals zu folgen, derart, daß die angeregten Nutzschwingungen überwiegend Resonanzschwingungen des wenigstens einen Rohrs sind. Zum Einstellen der (Wechselstrom-)Frequenz kann die Meßsystem-Elektronik des jeweiligen Meßsystems, wie u.a. in den US-A 2016/0349091, US-A 2017/0030870, US-A 58 31 178 und US-A 48 01 897 jeweils gezeigt, beispielsweise eine, ggf. auch digitale Phasenregelschleife (PLL - phase locked loop) aufweisen.

Infolge der in der vorbezeichneten Weise angeregten Nutzschwingungen des wenigstens einen Rohrs werden im hindurchströmenden Meßstoff bekanntlich u.a. auch vom Massenstrom abhängige Corioliskräfte induziert, derart, daß den Nutzschwingungen Coriolisschwingungen, nämlich zusätzlich erzwungene Schwingungen mit Nutzfrequenz überlagert sind, die einer, gelegentlich auch als Coriolismode bezeichneten, natürlichen Schwingungsmode mit im Vergleich zur Ordnung der Nutzmode um Eins erhöhter Ordnung entsprechen, und daß die Nutz-Signalkomponenten der Schwingungsmeßsignale einer Änderung eines Massenstromes des im Rohr geführten Meßstoffs mit einer Änderung einer Phasendifferenz der Nutz-Signalkomponenten, nämlich einer Differenz zwischen einem Phasenwinkel der Nutz-Signalkomponente des ersten Schwingungsmeßsignals und einem Phasenwinkel der Nutz-Signalkomponente des zweiten Schwingungsmeßsignals folgen. Die Meßsystem-Elektronik jedes der vorbezeichneten Meßsystem ist zudem entsprechend eingerichtet, anhand der vorbezeichneten, durch die Schwingungen des Rohrs in der Coriolismode bewirkten Phasendifferenz der Nutz-Signalkomponenten den Massenstrom repräsentierende Massenstrom-Meßwerte zu generieren. Bei marktgängigen (Standard-)Meßsystemen dient im Falle der Verwendung der Grundschwingungsmode als Nutzmode typsicherweise der antisymmetrische Schwingungsmode zweiter Ordnung bzw. im Falle der Verwendung der Schwingungsmode dritter Ordnung als Nutzmode typischerweise der antisymmetrische Schwingungsmode vierter Ordnung als Coriolismode. Da die Resonanzfrequenz der als Nutzmode dienlichen Schwingungsmode im besonderen auch von der momentanen Dichte des Meßstoffs abhängig ist, kann mittels marktüblicher Coriolis-Massedurchflußmesser neben dem Massestrom zusätzlich so auch die Dichte vom jeweils hindurch strömenden Meßstoff anhand der (Wechselstrom-)Frequenz des Treibersignals und/oder anhand der (Signal-)Frequenz der Nutz-Signalkomponenten der Schwingungsmeßsignale direkt gemessen werden. Dementsprechend ist die Meßsystem-Elektronik von Meßsystemen der in Rede stehenden Art typischerweise auch eingerichtet, anhand der vorbezeichneten (Wechselstrom-)Frequenz des Treibersignals und/oder anhand der Signalfrequenz der vorbezeichneten Nutz-Signalkomponente wenigstens eines der Schwingungssignale die Dichte repräsentierende Dichte-Meßwerte zu generieren. Ferner ist es auch möglich, mittels vibronsicher Meßsysteme der in Rede stehenden Art die Viskosität des hindurchströmenden Meßstoffs direkt zu messen, beispielsweise basierend auf einer für die Aufrechterhaltung der Nutzschwingungen erforderlichen Erregerenergie bzw. Erregerleistung und/oder basierend auf einer aus einer Dissipation von Schwingungsenergie resultierenden Dämpfung der Nutzschwingungen. Darüberhinaus können aus den vorgenannten Strömungs- und/oder Stoffparametern weitere abgeleitete Meßgrößen, wie etwa die Reynoldszahl mittels solcher vibronischer Meßsysteme ohne weiteres zu ermittelt werden.

Wie u.a. auch in den eingangs erwähnten US-A 2003/0154804, US-A 2007/0186686, US-A 2010/0095783, US-A 2010/0095784, US-A 2010/0095785, US-A 2018/0231411, US-A 2019/0154485, WO2009/134827, WO-A 2009/134829, WO-A 2009/134830, WO-A 2017/108283, WO-A 2017/194278, WO-A 2020/126287 oder auch den internationalen Patentanmeldungen PCT/EP2020/059050 bzw. PCT/EP2020/071817 erörtert, kann die Meßgenauigkeit des Meßsystems, mit der dieses die zu erfassenden Meßgröße, nicht zuletzt den Massenstrom, die Dichte bzw. die Viskosität, in die entsprechenden Meßwerte schlußendlich abbildet u.a. auch von einer Qualität des Meßstoffs abhängig sein; dies gelegentlich auch in der Weise, daß Schwankungen der Qualität des Meßstoffs und/oder Abweichungen der der Qualität des Meßstoffs von einer für das jeweiligen Meßsystem vorgegebenen Spezifikation, beispielsweise, derart, daß ein oder mehrere die Qualität des Meßstoffs charakterisierender Stoffparameter von einem dafür spezifizierten Wertebereich abweichen, die Meßgenauigkeit des Meßsystems signifikant herabsetzen bzw. zu unzulässig hohen Ungenauigkeit der Meßergebnisse führen. Als Beispiele für solche Schwankungen der (Meßstoff-)Qualität bzw. Abweichungen der (Meßstoff-)Qualität von der (Meßstoff-)Spezifikation können eine zeitlich ändernde Beladung eines Meßstoffs mit einem Fremdstoff, wie z.B. Feststoffpartikel und/oder Gasblasen in einer Flüssigkeit, eine Bildung von Kondensat in einem gasförmigen Meßstoff, ein Ausgasen eines flüssigen Meßstoffs oder im Falle eines als Dispersion ausgebildeten Meßstoffs eine sich zeitlich ändernde Konzentration einzelner Phasen und/oder Komponenten des Meßstoffs und/oder eine gelegentliche Entmischung (Segregation) von Komponenten des Meßstoffs aufgeführt werden. Darüberhinaus kann die Qualität des Meßstoffs gelegentlich auch solchen Änderungen unterworfen sein, die zu unzulässigen Abweichungen von einer für den jeweilgen Meßstoff selbst bzw. den betreffenden (Verarbeitungs-)Prozeß vorgegebenen Spezifikation führen.

Zwecks einer Detektion solcher unerwünschten Schwankungen und/oder Abweichungen der (Meßstoff-)Qualität wird bei den US-A 2010/0095783, US-A 2010/0095784, US-A 2010/0095785 u.a. vorgeschlagen, die Qualität des Meßstoff dadurch zu überwachen, indem anhand eines einen symmetrischen Nutzmodes bewirkenden Treibersignals und der Nutz-Signalkomponenten wenigstens eines der damit generierten Schwingungsmeßsignale eine (modale) Dämpfung des antisymmetrischen Coriolismodes ermittelt und mit dafür entsprechend vorgegebenen Schwellenwerten verglichen wird, wobei die vorbezeichnete Dämpfung lediglich indirekt, nämlich anhand einer zeitlichen Ableitung einer zuvor ermittelten (modalen) Dämpfung des Nutzmodes berechnet wird. Ein Nachteil einer solchen Überwachung der Qualität des Meßstoffs ist u.a. darin zu sehen, daß dafür zunächst über einen längeren Zeitraum hinweg die Dämpfung des symmetrischen Nutzmodes ermittelt werden muß, mithin die Dämpfung des antisymmetrischen Coriolismodes und somit auch die zu überwachende Qualität des Meßstoffs lediglich für einen entsprechend weit zurückliegenden Zeitpunkt, ggf. auch verspätet bestimmt werden kann bzw. umgekehrt, lediglich langsame Änderungen der Qualität des Meßstoffs präzise detektiert werden können.

Ausgehend vom vorbezeichneten Stand der Technik besteht eine Aufgabe der Erfindung darin, vibronische Meßsysteme der vorgenannten Art, nicht zuletzt auch (Standard-)Meßsysteme, dahingehend zu verbessern, daß damit auch schnelle Änderungen und/oder erhebliche Schwankungen der Qualität des Meßstoffs möglichst frühzeitig und sicher detektiert, beispielsweise nämlich auch entsprechend vermeldet und/oder bei der Ermittlung der Meßwerte für die wenigstens eine Meßgröße entsprechend berücksichtigt werden können.

Zur Lösung der Aufgabe besteht die Erfindung in einem vibronischem Meßsystem, insb. einem Coriolis-Massedurchfluß-Meßgerät oder Coriolis-Massedurchfluß-/Dichte-Meßgerät, zum Messen und/oder Überwachen wenigstens einer Meßgröße, insb. eines Strömungsparameters, insb. nämlich eines Massenstroms und/oder eines Volumenstroms und/oder einer Strömungsgeschwindigkeit, und/oder eines Stoffparameters, insb. nämlich einer Dichte und/oder einer Viskosität, eines fluiden Meßstoffs, insb. eines Gases, einer Flüssigkeit oder einer Dispersion. Das, beispielsweise als In-Line-Meßgerät und/oder Meßgerät in Kompaktbauweise ausgebildete, erfindungsgemäße Meßsystem umfaßt: einen Meßwandler mit einer Rohranordnung zum Führen des strömenden Meßstoffs, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen, sowie eine mit dem Meßwandler, nämlich sowohl mit dessen Erregeranordnung als auch mit dessen Sensoranordnung, insb. mittels elektrischer Verbindungsleitungen, elektrisch gekoppelte, beispielsweise mittels wenigstens eines Mikroprozessors gebildete und/oder in Elektronik-Schutzgehäuse angeordnete, Meßsystem-Elektronik zum Ansteuern des Meßwandlers und zum Auswerten von vom Meßwandler gelieferten Schwingungsmeßsignalen.

Beim erfindungsgemäßen Meßsystem ist ferner vorgesehen, daß die Rohranordnung wenigstens ein, beispielsweise zumindest abschnittsweise gekrümmtes und/oder zumindest abschnittsweise gerades und/oder erstes, Rohr aufweist, welches Rohr sich von einem ersten Rohrende bis zu einem zweiten Rohrende mit einer, beispielsweise mehr als 100 mm betragenden, Rohrlänge erstreckt und ein von einer, beispielsweise metallischen, Rohrwandung umschlossenes, sich vom ersten Rohrende bis zum zweiten Rohrende erstreckendes Lumen aufweist, und welches Rohr eingerichtet ist, zumindest in einer vom ersten Rohrende zum zweiten Rohrende weisenden Strömungsrichtung von Meßstoff durchströmt und währenddessen vibrieren gelassen zu werden, wobei dem Rohr - naturgemäß - eine Vielzahl von jeweils eine zugehörige Resonanzfrequenz (f1, f2, ... , fx) aufweisenden Schwingungsmoden (Eigenschwingungsformen) innewohnt, in denen das Rohr jeweils ein oder mehr Schwingungsbäuche und jeweils zwei oder mehr Schwingungsknoten aufweisende Schwingungsbewegungen ausführen kann bzw. ausführt, derart, daß Schwingungsbewegungen des Rohrs in einer Grund-Schwingungsmode, nämlich einer Schwingungsmode erster Ordnung (f1-Mode), beispielsweise nämlich eine Biegeschwingungsmode erster Ordnung, genau einen Schwingungsbauch und zwei Schwingungsknoten aufweisen und daß Schwingungsbewegungen des Rohrs in einer Ober-Schwingungsmode, nämlich einer Schwingungsmode zweiter oder höherer Ordnung (f2-Mode, ... fx-Mode), beispielsweise nämlich eine Biegeschwingungsmode zweiter bzw. höherer Ordnung, zwei oder mehr Schwingungsbäuche und drei oder mehr Schwingungsknoten aufweisen.

Beim erfindungsgemäßen Meßsystem ist zudem vorgesehen, daß die Erregeranordnung einen, beispielsweise elektrodynamischen, Schwingungserreger aufweist, der mechanisch mit dem Rohr verbunden und eingerichtet ist, elektrische Leistung mit einem zeitlich veränderlichen elektrischen Strom in mechanische Leistung zu wandeln, derart, daß an einem mittels des Schwingungserregers am damit mechanisch verbundenen Rohr gebildeten Antriebspunkt eine zeitlich veränderliche Antriebskraft auf das Rohr wirkt, beispielsweise derart, daß eine Wirklinie der Antriebskraft senkrecht zu einer Normalen einer Antriebs-Querschnittsfläche des Rohrs verläuft, wobei der Schwingungserreger so positioniert und ausgerichtet ist, daß ein Antriebsversatz, nämlich ein kleinster Abstand zwischen einer von einer durch den Antriebspunkt hindurchführende gedachte Umfangslinie des Rohrs umschlossenen Antriebs-Querschnittsfläche des Rohrs und einer vorgegebenen, beispielsweise bei intaktem bzw. ursprünglichem Meßwandler ermittelten, Referenz-Querschnittsfläche des wenigstens einen Rohrs nicht mehr als 3°mm, beispielsweise weniger als 2 mm, und/oder weniger als 0,5% der Rohrlänge, beispielsweise nämlich weniger als 0,2% der Rohrlänge, beträgt, beispielsweise nämlich bei intaktem bzw. ursprünglichem Meßwandler gleich Null ist, wobei ein zwischen zwei Schwingungsbäuchen von Schwingungsbewegungen des wenigstens einen Rohrs in einer (von der Schwingungsmode erster Ordnung abweichenden) Schwingungsmode (zweiter oder höherer Ordnung) gebildeter, beispielsweise (nominell) bei einer halben Rohrlänge verorteter, Schwingungsknoten nämlicher Schwingungsbewegungen innerhalb der Referenz-Querschnittsfläche liegt.

Beim erfindungsgemäßen Meßsystem ist zudem vorgesehen, daß die Meßsystem-Elektronik eingerichtet ist, den Schwingungserreger zu bestromen, nämlich mittels eines einen zeitlich veränderlichen elektrischen Strom aufweisenden elektrischen Treibersignals elektrische Leistung in den Schwingungserreger einzuspeisen, derart, daß das Rohr erzwungene mechanische Schwingungen, beispielsweise Biegeschwingungen, mit einer oder mehreren durch das Treibersignal vorgegebenen Schwingungsfrequenzen ausführt.

Beim erfindungsgemäßen Meßsystem ist zudem vorgesehen, daß die Sensoranordnung einen, beispielsweise elektrodynamischen oder optischen, ersten Schwingungssensor aufweist, der, beispielsweise in Strömungsrichtung mehr als 10 mm und/oder mehr als ein Fünftel der Rohrlänge vom Schwingungserreger beabstandet, am Rohr positioniert, beispielsweise nämlich zumindest anteilig mit dem Rohr mechanisch verbunden, ist und der eingerichtet ist, Schwingungsbewegungen des Rohrs zu erfassen und in ein nämliche Schwingungsbewegungen repräsentierendes, beispielsweise elektrisches oder optisches, erstes Schwingungsmeßsignal zu wandeln, beispielsweise derart, daß das erste Schwingungsmeßsignal eine oder mehrere sinusförmige Signalkomponenten mit jeweils einer einer Schwingungsfrequenz von Schwingungsbewegungen des Rohrs entsprechenden Frequenz enthält, und ist ferner vorgesehen, daß die Sensoranordnung wenigstens einen, beispielsweise elektrodynamischen oder optischen, zweiten Schwingungssensor aufweist, der, beispielsweise in Strömungsrichtung mehr als 10 mm und/oder mehr als ein Fünftel der Rohrlänge vom Schwingungserreger beabstandet und/oder der in Strömungsrichtung vom ersten Schwingungssensor beabstandet, am Rohr positioniert, beispielsweise nämlich zumindest anteilig mit dem Rohr mechanisch verbunden, ist und der eingerichtet ist, Schwingungsbewegungen des Rohrs zu erfassen und in ein nämliche Schwingungsbewegungen repräsentierendes, beispielsweise elektrisches oder optisches, zweites Schwingungsmeßsignal zu wandeln, beispielsweise derart, daß das zweite Schwingungsmeßsignal eine oder mehrere sinusförmige Signalkomponenten mit jeweils einer einer Schwingungsfrequenz von Schwingungsbewegungen des Rohrs entsprechenden Frequenz enthält.

Beim erfindungsgemäßen Meßsystem ist zudem vorgesehen, daß die Meßsystem-Elektronik eingerichtet ist, die ersten und zweiten Schwingungsmeßsignale zu empfangen und auszuwerten, beispielsweise nämlich die wenigstens eine Meßgröße repräsentierende Meßwerte zu ermitteln und auszugeben. Darüberhinaus ist beim erfindungsgemäßen Meßsystem ferner vorgesehen, daß die Meßsystem-Elektronik eingerichtet ist, sowohl das Treibersignal zumindest zeitweise mit einem eine erste (Wechselstrom-)Frequenz aufweisenden sinusförmigen ersten (Nutz-)Strom bereitzustellen, derart, daß das Rohr zumindest anteilig, beispielsweise überwiegend, erste Nutzschwingungen, nämlich durch den (bestromten) Schwingungserreger erzwungene mechanische Schwingungen mit einer ersten Nutzfrequenz, nämlich einer der ersten (Wechselstrom-)Frequenz entsprechenden (Schwingungs-)Frequenz ausführt, beispielsweise derart, daß die erste Nutzfrequenz von einer Resonanzfrequenz, f1, der Grund-Schwingungsmode um weniger als 1% nämlicher Resonanzfrequenz, f1, und/oder um weniger als 1 Hz abweicht und/oder daß die erste Nutzfrequenz von einer Resonanzfrequenz, f2, der Schwingungsmode zweiter Ordnung um mehr als 5% nämlicher Resonanzfrequenz, f2, und/oder um mehr als 10 Hz abweicht und/oder daß die ersten Nutzschwingungen geeignet sind, im strömenden Meßstoff vom Massestrom abhängige Corioliskräfte zu bewirken, und daß jedes der ersten und zweiten Schwingungssignale, jeweils eine erste Nutz-Signalkomponente, nämlich eine sinusförmige Signalkomponente mit einer der ersten Nutzfrequenz entsprechenden (Signal-)Frequenz aufweist, als auch anhand zumindest der ersten Nutz-Signalkomponenten, beispielsweise anhand von deren (Signal-)Frequenz und/oder anhand von einer Amplitude wenigstens einer der ersten Nutz-Signalkomponenten und/oder anhand von einem Phasenwinkel wenigstens einer der ersten Nutz-Signalkomponenten, die wenigstens eine Meßgröße repräsentierende Meßwerte, beispielsweise den Massenstrom des Meßstoffs repräsentierende Massenstrom-Meßwerte und/oder die Dichte des Meßstoffs repräsentierende Dichte-Meßwerte, zu ermitteln. Desweiteren ist beim erfindungsgemäßen Meßsystem die Meßsystem-Elektronik eingerichtet, sowohl das Treibersignal zumindest zeitweise, beispielsweise während eines mehr als 10 ms andauernden und/oder zeitlich begrenzten und/oder wiederkehrend aufgestarteten Testintervalls, mit einem eine zweite (Wechselstrom-)Frequenz aufweisenden sinusförmigen zweiten (Nutz-)Strom bereitzustellen, derart, daß die zweite (Wechselstrom-)Frequenz, beispielsweise für zwei oder mehr Schwingungsperioden und/oder einen Zeitraum von mehr als 10 ms, von einer Resonanzfrequenz, f2, der Schwingungsmode zweiter Ordnung um weniger als 1%, beispielsweise um weniger als 0,1 %, nämlicher Resonanzfrequenz, f2, und/oder um weniger als 1 Hz, beispielsweise um weniger als 0,1 Hz, abweicht, und daß das Rohr zumindest anteilig - beispielsweise simultan mit den ersten Nutzschwingungen und/oder stationär, nämlich für zwei oder mehr Schwingungsperioden und/oder einen Zeitraum von mehr als 10 ms eine gleichbleibende, von Null verschiedene Schwingungsamplitude aufweisende - zweite Nutzschwingungen, nämlich durch den (bestromten) Schwingungserreger erzwungene mechanische Schwingungen mit einer zweiten Nutzfrequenz, nämlich einer der zweiten (Wechselstrom-)Frequenz entsprechenden (Schwingungs-)Frequenz ausführt, wodurch jedes der ersten und zweiten Schwingungssignale, jeweils eine zweite Nutz-Signalkomponente, nämlich eine sinusförmige Signalkomponente mit einer der zweiten Nutzfrequenz entsprechenden (Signal-)Frequenz aufweist, als auch anhand wenigstens einer der zweiten Nutz-Signalkomponenten, beispielsweise anhand von deren (Signal-)Frequenz und/oder anhand von einer (Signal-)Amplitude wenigstens einer der zweiten Nutz-Signalkomponenten und/oder anhand von einem Phasenwinkel wenigstens einer der zweiten Nutz-Signalkomponente, eine Qualität des Meßstoffs zu überwachen, beispielsweise nämlich festzustellen, ob eine Störung des Meßstoffs, nämlich eine unerwünschte Änderung eines oder mehrer Stoffparameter des Meßstoffs vorliegt und/oder ob aufgrund einer Störung des Meßstoffs bei der Ermittlung der Meßwerte ein Meßfehler vorliegt

Nach einer zweiten Ausgestaltung der Erfindung ist ferner vorgesehen, daß die erste Nutzfrequenz von einer Resonanzfrequenz, f1, der Grund-Schwingungsmode um weniger als 1% nämlicher Resonanzfrequenz, f1, und/oder um weniger als 1 Hz abweicht.

Nach einer ersten Ausgestaltung der Erfindung ist ferner vorgesehen, daß die erste Nutzfrequenz von einer Resonanzfrequenz, fr3, einer dem wenigstens einen Rohr innewohnenden Schwingungsmode dritter Ordnung, beispielsweise nämlich eine Biegeschwingungsmode dritter Ordnung, in welcher Schwingunsgmode die Schwingungsbewegungen des Rohrs genau drei Schwingungsbäuche und zwei Schwingungsknoten aufweisen, um weniger als 1% nämlicher Resonanzfrequenz, fr3, und/oder um weniger als 1 Hz abweicht, beispielsweise nämlich der Resonanzfrequenz, fr3, entspricht. Diese Ausgestaltung der Erfindung weiterbildend ist ferner vorgesehen, daß ein erster Schwingungsknoten von Schwingungsbewegungen des wenigstens einen Rohrs in der Schwingungsmode dritter Ordnung im ersten Rohrende und ein zweiter Schwingungsknoten Schwingungsmode dritter Ordnung im zweiten Rohrende verortet ist.

Nach einer dritten Ausgestaltung der Erfindung ist ferner vorgesehen, daß die Ober-Schwingungsmode einer Schwingungsmode zweiter Ordnung (f2-Mode), beispielsweise nämlich eine Biegeschwingungsmode zweiter Ordnung, entspricht, in welcher Schwingungsmode zweiter Ordnung die Schwingungsbewegungen des Rohrs genau zwei Schwingungsbäuche und drei Schwingungsknoten aufweisen. Diese Ausgestaltung der Erfindung weiterbildend ist ferner vorgesehen, daß ein zwischen den zwei Schwingungsbäuchen der Schwingungsbewegungen des wenigstens einen Rohrs in der Schwingungsmode zweiter Ordnung gebildeter, beispielsweise (nominell) bei einer halben Rohrlänge verorteter, Schwingungsknoten nämlicher Schwingungsbewegungen innerhalb der Referenz-Querschnittsfläche liegt und/oder daß eine senkrecht zur Schwingungsrichtung der Schwingungsbewegungen des Rohrs in der Schwingungsmode zweiter Ordnung stehende Hauptträgheitsachse des wenigstens einen Rohrs innerhalb der Referenz-Querschnittsfläche des wenigstens einen Rohrs liegt.

Nach einer vierten Ausgestaltung der Erfindung ist ferner vorgesehen, daß der Antriebsversatz einem Abstand zwischen einem Flächenschwerpunkt (Mittelpunkt) der Antriebs-Querschnittsfläche des Rohrs und einem Flächenschwerpunkt (Mittelpunkt) der Referenz-Querschnittsfläche des wenigstens einen Rohrs entspricht.

Nach einer fünften Ausgestaltung der Erfindung ist ferner vorgesehen, daß eine Wirklinie der Antriebskraft senkrecht zu einer Normalen einer Antriebs-Querschnittsfläche des Rohrs verläuft.

Nach einer sechsten Ausgestaltung der Erfindung ist ferner vorgesehen, daß eine Schnittgeraden zweier zueinander orthogonaler Symmetrieebenen des wenigstens einen Rohrs innerhalb der Referenz-Querschnittsfläche liegt.

Nach einer siebenten Ausgestaltung der Erfindung ist ferner vorgesehen, daß eine senkrecht zur Antriebskraft stehende Hauptträgheitsachse des wenigstens einen Rohrs innerhalb der Referenz-Querschnittsfläche des wenigstens einen Rohrs liegt.

Nach einer achten Ausgestaltung der Erfindung ist ferner vorgesehen, daß die Meßsystem-Elektronik eingerichtet ist, den zweiten Nutzstrom des Treibersignals zumindest zeitweise simultan mit dem ersten (Nutz-)Strom bereitzustellen, beispielsweise derart, daß eine Amplitude des ersten (Nutz-)Stroms nicht kleiner als eine Amplitude des zweiten (Nutz-)Stroms eingestellt ist und/oder daß eine Amplitude des zweiten (Nutz-)Stroms auf mehr als 40 %, beispielsweise nicht weniger als 50%, einer Amplitude des ersten (Nutz-)Stroms eingestellt ist.

Nach einer neunten Ausgestaltung der Erfindung ist ferner vorgesehen, daß die Meßsystem-Elektronik eingerichtet ist, die zweite (Wechselstrom-)Frequenz in Abhängigkeit von der ersten (Wechselstrom-)Frequenz einzustellen, beispielsweise derart, daß die zweite (Wechselstrom-)Frequenz innerhalb eines Frequenzeinstellintervall liegt, von dem eine obere Intervallgrenze und/oder eine untere Intervallgrenze und/oder eine Mittenfrequenz einem vorgegebenen Vielfachen der ersten (Wechselstrom-)Frequenz, beispielsweise nämlich mehr als 230 % der ersten (Wechselstrom-)Frequenz und/oder weniger als 300 % der ersten (Wechselstrom-)Frequenz entsprechenden Vielfachen der ersten (Wechselstrom-)Frequenz, entspricht.

Nach einer zehnten Ausgestaltung der Erfindung ist ferner vorgesehen, daß die Meßsystem-Elektronik eine dem Einstellen der ersten (Wechselstrom-)Frequenz dienliche, beispielsweise digitale, erste Phasenregelschleife (PLL1) aufweist und daß die Meßsystem-Elektronik eine dem Einstellen der zweiten (Wechselstrom-)Frequenz dienliche, beispielsweise digitale, zweite Phasenregelschleife (PLL2) aufweist. Diese Ausgestaltung der Erfindung weiterbildend ist ferner vorgesehen, daß die Meßsystem-Elektronik eingerichtet ist, einen Fangbereich der zweiten Phasenregelschleife (PLL2) mittels wenigstens eines Ausgangssignals der ersten Phasenregelschleife (PLL1), beispielsweise einem Ausgangssignal eines Schleifenfilters der ersten Phasenregelschleife (PLL1), und/oder anhand der ersten (Wechselstrom-)Frequenz einzustellen.

Nach einer elften Ausgestaltung der Erfindung ist ferner vorgesehen, daß die Meßsystem-Elektronik eingerichtet ist, zum Durchführen der Überwachung der Qualität des Meßstoffs anhand der zweiten Nutz-Signalkomponenten, beispielsweise anhand von deren (Signal-)Frequenz und/oder anhand von einer (Signal-)Amplitude wenigstens einer der zweiten Nutz-Signalkomponenten und/oder anhand von einem Phasenwinkel wenigstens einer der zweiten Nutz-Signalkomponente festzustellen, ob eine vorliegende Störung des Meßsystems auf eine, beispielsweise irreversible, Veränderung einer oder mehrerer Strömungseigenschaften der Rohranordnung, beispielsweise aufgrund einer Reduzierung eines Strömungsquerschnitts der Rohranordnung, beispielsweise infolge einer Verstopfung eines oder mehrerer der Rohre und/oder infolge eines Belags auf einer Innenseite der Rohrwandung eines oder mehrerer der Rohre, zurückzuführen ist.

Nach einer zwölften Ausgestaltung der Erfindung ist ferner vorgesehen, daß die Meßsystem-Elektronik eingerichtet ist, eine (Signal-)Amplitude einer der ersten Nutz-Signalkomponenten, beispielsweise einer Differenz der (Signal-)Amplituden der ersten Nutz-Signalkomponenten, entsprechende (modale) Auslenkung der ersten Nutzschwingungen zu ermitteln, beispielsweise nämlich anhand wenigstens eines der Schwingungsmeßsignale die Auslenkung der ersten Nutzschwingungen repräsentierende Auslenkungswerte zu ermitteln.

Nach einer dreizehnten Ausgestaltung der Erfindung ist ferner vorgesehen, daß die Meßsystem-Elektronik eingerichtet ist, eine (Signal-)Amplitude einer der zweiten Nutz-Signalkomponenten, beispielsweise einer Differenz der (Signal-)Amplituden der zweiten Nutz-Signalkomponenten, entsprechende (modale) Auslenkung der ersten Nutzschwingungen zu ermitteln, beispielsweise nämlich anhand wenigstens eines der Schwingungsmeßsignale die Auslenkung der zweiten Nutzschwingungen repräsentierende Auslenkungswerte zu ermitteln.

Nach einer vierzehnten Ausgestaltung der Erfindung ist ferner vorgesehen, daß die Meßsystem-Elektronik eingerichtet ist, ein einem Verhältnis einer (modalen) Auslenkung der ersten Nutzschwingungen und einer (modalen) Auslenkung der zweiten Nutzschwingungen entsprechendes Auslenkungsverhältnis zu ermitteln, beispielsweise nämlich anhand wenigstens eines der Schwingungsmeßsignale das Auslenkungsverhältnis repräsentierende Auslenkungsverhältniswerte zu ermitteln.

Nach einer fünfzehnten Ausgestaltung der Erfindung ist ferner vorgesehen, daß die Meßsystem-Elektronik eingerichtet ist, eine einem Verhältnis der (Signal-)Amplitude einer der ersten Nutz-Signalkomponenten, beispielsweise einer Summe oder einer Differenz der (Signal-)Amplituden der ersten Nutz-Signalkomponenten, und einer (Signal-)Amplitude des ersten (Nutz-)Stroms entsprechende (modale) Dämpfung der ersten Nutzschwingungen zu ermitteln, beispielsweise nämlich anhand des Treibersignals und wenigstens eines der Schwingungsmeßsignale die Dämpfung der ersten Nutzschwingungen repräsentierende Dämpfunsgwerte zu ermitteln.

Nach einer sechzehnten Ausgestaltung der Erfindung ist ferner vorgesehen, daß die Meßsystem-Elektronik eingerichtet ist, eine einem Verhältnis der (Signal-)Amplitude einer der zweiten Nutz-Signalkomponenten, beispielsweise einer Summe oder einer Differenz der (Signal-)Amplituden der zweiten Nutz-Signalkomponenten, und einer (Signal-)Amplitude des zweiten (Nutz-)Stroms entsprechende (modale) Dämpfung der zweiten Nutzschwingungen zu ermitteln, beispielsweise nämlich anhand des Treibersignals und wenigstens eines der Schwingungsmeßsignale die Dämpfung der zweiten Nutzschwingungen repräsentierende Dämpfunsgwerte zu ermitteln.

Nach einer siebzehnten Ausgestaltung der Erfindung ist ferner vorgesehen, daß die Meßsystem-Elektronik eingerichtet ist, ein einem Verhältnis der (modalen) Dämpfung der ersten Nutzschwingungen und der der (modalen) Dämpfung der zweiten Nutzschwingungen entsprechendes Dämpfungsverhältnis zu ermitteln, beispielsweise nämlich anhand des Treibersignals und/oder wenigstens eines der Schwingungsmeßsignale das Dämpfungsverhältnis repräsentierende Dämpfungsverhältniswerte zu ermitteln.

Nach einer achtzehnten Ausgestaltung der Erfindung ist ferner vorgesehen, daß die Meßsystem-Elektronik eingerichtet ist, anhand des Treibersignals und wenigstens eines der Schwingungsmeßsignale eine (modale) Dämpfung der zweiten Nutzschwingungen repräsentierende Dämpfunsgwerte zu ermitteln, beispielsweise nämlich einen oder mehrere der Dämpfungswerte mit einem dafür vorab ermittelten Bezugswert (Dämpfungsreferenzwert) zu vergleichen. Diese Ausgestaltung der Erfindung weiterbildend ist ferner vorgesehen, daß die Meßsystem-Elektronik eingerichtet ist, zum Durchführen der Überwachung der Qualität des Meßstoffs einen oder mehrere der Dämpfungswerte mit wenigstens einem dafür vorab und/oder mittels eines intakten Meßsystems ermittelten Bezugswert (Dämpfungsreferenzwert) zu vergleichen, beispielsweise auch bei einer Abweichung eines oder mehrerer der Dämpfungswerte vom Bezugswert eine dies repräsentierende, beispielsweise als (Störungs-)Alarm deklarierte, Meldung auszugeben, und/oder daß die Meßsystem-Elektronik eingerichtet ist, zum Durchführen der Überwachung der Qualität des Meßstoffs anhand mehrere der Dämpfungswerte eine zeitliche Änderung, beispielsweise nämlich einen Änderungstrend und/oder eine Änderungsrate und/oder eine Änderungsgeschwindigkeit, der Dämpfung der zweiten Nutzschwingungen zu ermitteln, beispielsweise nämlich bei kleiner werdender Dämpfung der zweiten Nutzschwingungen eine größer werdende Störung zu ermitteln und/oder eine Zunahme einer Störung repräsentierende, beispielsweise als (Störungs-)Alarm deklarierte, Meldung auszugeben, und/oder daß die Meßsystem-Elektronik eingerichtet ist, anhand einer Vielzahl von Dämpfungswerten ein Streuungsmaß, beispielsweise eine empirische Varianz und/oder eine Spannweite, für Dämpfung der zweiten Nutzschwingungen des wenigstens einen Rohrs zu ermitteln, beispielsweise auch auszugeben und/oder zum Durchführen der Überwachung der Qualität des Meßstoffs nämliches Streuungsmaß mit einem oder mehreren dafür vorgegebenen Bezugswerten zu vergleichen.

Nach einer neunzehnten Ausgestaltung der Erfindung ist ferner vorgesehen, daß die Meßsystem-Elektronik eingerichtet ist, ein die Resonanzfrequenz f1 der ersten Schwingungsmode des wenigstens einen Rohrs zu ermitteln, beispielsweise nämlich anhand des Treibersignals und/oder wenigstens eines der Schwingungsmeßsignale die Resonanzfrequenz repräsentierende Frequenzenwerte zu ermitteln.

Nach einer zwanzigsten Ausgestaltung der Erfindung ist ferner vorgesehen, daß die Meßsystem-Elektronik eingerichtet ist, ein die Resonanzfrequenz f2 der zweiten Schwingungsmode des wenigstens einen Rohrs zu ermitteln, beispielsweise nämlich anhand des Treibersignals und/oder wenigstens eines der Schwingungsmeßsignale die Resonanzfrequenz repräsentierende Frequenzenwerte zu ermitteln.

Nach einer einundzwanzigsten Ausgestaltung der Erfindung ist ferner vorgesehen, daß die Meßsystem-Elektronik eingerichtet ist, ein einem Verhältnis der Resonanzfrequenz der ersten Schwingungsmode des wenigstens einen Rohrs und der Resonanzfrequenz der zweiten Schwingungsmode des wenigstens einen Rohrs entsprechendes Resonanzfrequenzenverhältnis zu ermitteln, beispielsweise nämlich anhand der ersten und zweiten (Wechselstrom-)Frequenzen des Treibersignals und/oder anhand der Signalfrequenzen der ersten und zweiten Nutz-Signalkomponenten wenigstens eines der Schwingungsmeßsignale das Resonanzfrequenzenverhältnis repräsentierende Frequenzenverhältniswerte zu ermitteln.

Nach einer zweiundzwanzigsten Ausgestaltung der Erfindung ist ferner vorgesehen, daß die Meßsystem-Elektronik eingerichtet ist, anhand des Treibersignals und/oder wenigstens eines der Schwingungsmeßsignale die Resonanzfrequenz der zweiten Schwingungsmode des wenigstens einen Rohrs repräsentierende Frequenzwerte zu ermitteln, beispielsweise nämlich einen oder mehrere der Frequenzwerte mit einem oder mehreren dafür vorgegebenen Bezugswerten zu vergleichen und/oder mehrere der Frequenzwerte zum Ermitteln eines Streuungsmaßes für Resonanzfrequenz der zweiten Schwingungsmode des wenigstens einen Rohrs zu verwenden. Diese Ausgestaltung der Erfindung weiterbildend ist ferner vorgesehen, daß die Meßsystem-Elektronik eingerichtet ist, anhand einer Vielzahl von Frequenzwerten ein Streuungsmaß für die Resonanzfrequenz der zweiten Schwingungsmode des wenigstens einen Rohrs zu ermitteln, beispielsweise auch auszugeben und/oder zum Durchführen der Überwachung der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

Nach einer dreiundzwanzigsten Ausgestaltung der Erfindung ist ferner vorgesehen, daß die Meßsystem-Elektronik eingerichtet ist, anhand des Treibersignals und/oder wenigstens eines der Schwingungsmeßsignale ein Verhältnis der Resonanzfrequenz der ersten Schwingungsmode des wenigstens einen Rohrs und der Resonanzfrequenz der zweiten Schwingungsmode des wenigstens einen Rohrs repräsentierende Frequenzenverhältniswerte zu ermitteln, beispielsweise nämlich einen oder mehrere der Frequenzenverhältniswerte mit einem oder mehreren dafür vorgegebenen Bezugswerten zu vergleichen und/oder mehrere der Frequenzenverhältniswerte zum Ermitteln eines Streuungsmaßes für das Resonanzfrequenzenverhältnis des wenigstens einen Rohrs zu verwenden. Diese Ausgestaltung der Erfindung weiterbildend ist ferner vorgesehen, daß die Meßsystem-Elektronik eingerichtet ist, zum Durchführen der Überwachung der Qualität des Meßstoffs einen oder mehrere der Frequenzenverhältniswerte mit wenigstens einem dafür vorab ermittelten Bezugswert (Frequenzenverhältnisreferenzwert) zu vergleichen, beispielsweise bei auch bei einer Abweichung eines oder mehrerer der Frequenzenverhältniswerte vom Bezugswert eine dies repräsentierende, beispielsweise als (Störungs-)Alarm deklarierte, Meldung auszugeben, und/oder daß die Meßsystem-Elektronik eingerichtet ist, anhand einer Vielzahl von Frequenzenverhältniswerten ein Streuungsmaß, beispielsweise eine empirische Varianz und/oder eine Spannweite, für das Resonanzfrequenzenverhältnis des wenigstens einen Rohrs zu ermitteln, beispielsweise auch auszugeben und/oder zum Durchführen der Überwachung der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

Nach einer vierundzwanzigsten Ausgestaltung der Erfindung ist ferner vorgesehen, daß die Meßsystem-Elektronik eingerichtet ist, anhand der Schwingungsmeßsignale eine Phasendifferenz der zweiten Nutz-Signalkomponenten, nämlich eine Differenz zwischen einem Phasenwinkel der zweiten Nutz-Signalkomponente des ersten Schwingungsmeßsignals und einem Phasenwinkel der zweiten Nutz-Signalkomponente des zweiten Schwingungsmeßsignals repräsentierende Phasendifferenzwerte zu ermitteln, beispielsweise nämlich einen oder mehrere der Phasendifferenzwerte mit einem dafür vorab ermittelten Bezugswert (Phasendifferenzreferenzwert) zu vergleichen und/oder mehrere der Phasendifferenzwerte zum Ermitteln eines Streuungsmaßes für die Phasendifferenz der zweiten Nutz-Signalkomponenten des wenigstens einen Rohrs zu verwenden. Diese Ausgestaltung der Erfindung weiterbildend ist ferner vorgesehen, daß die Meßsystem-Elektronik eingerichtet ist, zum Durchführen der Überwachung der Qualität des Meßstoffs einen oder mehrere der Phasendifferenzwerte mit wenigstens einem dafür vorab ermittelten Bezugswert (Phasendifferenzreferenzwert) zu vergleichen, beispielsweise bei auch bei einer Abweichung eines oder mehrerer der Phasendifferenzwerte vom Bezugswert eine dies repräsentierende, beispielsweise als (Störungs-)Alarm deklarierte, Meldung auszugeben, und/oder daß die Meßsystem-Elektronik eingerichtet ist, anhand einer Vielzahl von Phasendifferenzwerten ein Streuungsmaß, beispielsweise eine empirische Varianz und/oder eine Spannweite, für die Phasendifferenz der zweiten Nutz-Signalkomponenten zu ermitteln, beispielsweise auch auszugeben und/oder zum Durchführen der Überwachung der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

Nach einer fünfundzwanzigsten Ausgestaltung der Erfindung ist ferner vorgesehen, daß die Meßsystem-Elektronik eingerichtet ist, anhand wenigstens eines der Schwingungsmeßsignale ein Verhältnis einer Auslenkung (Amplitude) der ersten Nutzschwingungen und einer Auslenkung (Amplitude) der zweiten Nutzschwingungen repräsentierende Auslenkungsverhältniswerte zu ermitteln, beispielsweise nämlich einen oder mehrere der Auslenkungsverhältniswerte mit einem oder mehreren dafür vorgegebenen Bezugswerten zu vergleichen und/oder mehrere der Auslenkungsverhältniswerte zum Ermitteln eines Streuungsmaßes für das Auslenkungsverhältnis des wenigstens einen Rohrs zu verwenden. Diese Ausgestaltung der Erfindung weiterbildend ist ferner vorgesehen, daß die Meßsystem-Elektronik eingerichtet ist, zum Durchführen der Überwachung der Qualität des Meßstoffs einen oder mehrere der Auslenkungsverhältniswerte mit wenigstens einem dafür vorab ermittelten Bezugswert (Auslenkungsverhältnisreferenzwert) zu vergleichen, beispielsweise bei auch bei einer Abweichung eines oder mehrerer der Auslenkungsverhältniswerte vom Bezugswert eine dies repräsentierende, beispielsweise als (Störungs-)Alarm deklarierte, Meldung auszugeben, und/oder daß die Meßsystem-Elektronik eingerichtet ist, anhand einer Vielzahl von Auslenkungsverhältniswerte ein Streuungsmaß, beispielsweise eine empirische Varianz und/oder eine Spannweite, für das Auslenkungsverhältnis des wenigstens einen Rohrs zu ermitteln, beispielsweise auch auszugeben und/oder zum Durchführen der Überwachung der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

Nach einer sechsundzwanzigsten Ausgestaltung der Erfindung ist ferner vorgesehen, daß die Meßsystem-Elektronik eingerichtet ist, den zweiten (Nutz-)Stroms (eN2) mit einer vorgegebenen (Strom-)Amplitude bereitzustellen. Diese Ausgestaltung der Erfindung weiterbildend ist ferner vorgesehen, daß die Meßsystem-Elektronik eingerichtet ist, zum Durchführen der Überwachung der Qualität des Meßstoffs wiederkehrend die (Signal-)Amplitude wenigstens einer der zweiten Nutz-Signalkomponenten mit einem von der (Signal-)Amplitude des zweiten (Nutz-)Stroms abhängigen und/oder dafür vorgegebenen, beispielsweise nämlich einer bei mit der vorgebebenen (Strom-)Amplitude des zweiten (Nutz-)Stroms ermittelten (Signal-)Amplitude der wenigstens einen zweiten Nutz-Signalkomponente entsprechenden, Bezugswert (Amplitudereferenzwert) zu vergleichen, beispielsweise nämlich festzustellen, ob oder inwieweit die (Signal-)Amplitude von nämlichem Bezugswert abweicht.

Nach einer siebenundzwanzigsten Ausgestaltung der Erfindung ist ferner vorgesehen, daß die Meßsystem-Elektronik eingerichtet ist, beispielsweise zum Durchführen der Überwachung der Qualität des Meßstoffs, anhand der zweiten Nutz-Signalkomponenten wenigstens eines der Schwingungsmeßsignale, beispielsweise anhand von deren (Signal-)Frequenz und/oder anhand von einer (Signal-)Amplitude wenigstens einer der zweiten Nutz-Signalkomponenten und/oder anhand von einem Phasenwinkel wenigstens einer der zweiten Nutz-Signalkomponente, einen oder mehrere Kennzahlenwerte für wenigstens eine Meßstoff-Kennzahl zu berechnen, die einen Zustand des Meßstoffs charakterisiert, beispielsweise derart, daß nämliche Meßstoff-Kennzahl von einem oder mehreren Parametern einer zwischen der zweiten Nutz-Stromkomponenten des Treibersignals und der zweiten Nutz-Signalkomponenten des wenigstens einen Schwingungsmeßsignals vermittelnden Systemfunktion des Meßsystems abhängig ist. Diese Ausgestaltung der Erfindung weiterbildend ist ferner vorgesehen, daß die Meßsystem-Elektronik eingerichtet ist, zum Durchführen der Überwachung der Qualität des Meßstoffs einen oder mehrere Kennzahlenwerte für die Meßstoff-Kennzahl jeweils mit einem oder mehreren für die Meßstoff-Kennzahl, beispielsweise vom Hersteller des Meßsystems und/oder bei der Herstellung und/oder einer Inbetriebnahme des Meßsystems und/oder in Abhängigkeit vom Treibersignal, ermittelten Bezugswerten zu vergleichen, beispielsweise eine Abweichung eines oder mehrere der Kennzahlenwerte von einem oder mehreren der Bezugswerte zu bewerten und/oder zu quantifizieren. Ferner kann die Meßsystem-Elektronik zudem eingerichtet sein, zu ermitteln, ob eine oder mehrere Kennzahlenwerte für die Meßstoff-Kennzahl größer als der wenigstens eine Bezugswert für die Meßsystem-Kennzahl ist, beispielsweise nämlich falls ein oder mehrere Kennzahlenwerte für die Meßstoff-Kennzahl größer als als ein oder mehrere eine verminderte Qualität des Meßstoffs repräsentierende Bezugswerte ist und/oder größer als ein ein außerhalb ein Spezifikation befindlichen Meßstoff repräsentierenden Bezugswerten ist, eine dies repräsentierende, beispielsweise als (Störungs-)Alarm deklarierte, Meldung auszugeben.

Nach einer achtundzwanzigsten Ausgestaltung der Erfindung ist ferner vorgesehen, daß die Meßsystem-Elektronik eingerichtet ist, zum Überwachen der Qualität des Meßstoffs anhand der zweiten Nutz-Signalkomponenten, beispielsweise anhand von sowohl der zweiten Nutz-Signalkomponenten als auch der ersten Nutz-Signalkomponenten festzustellen, ob und/oder inwieweit eine, beispielsweise auch eine Funktionstüchtigkeit des Meßsystems vermindernde und/oder eine Fehlfunktion des Meßsystems bewirkende und/oder einen Meßfehler der Meßwerte provozierende, Störung des Meßstoffs vorliegt, beispielsweise infolge einer (unerwünschte) Segregation des Meßstoffs und/oder infolge einer (unerwünschten) Belastung des Meßstoffs durch einen oder mehrerer Fremdstoffe.

Nach einer neunundzwanzigsten Ausgestaltung der Erfindung ist ferner vorgesehen, daß die Meßsystem-Elektronik eingerichtet ist, zum Durchführen der Überwachung der Qualität des Meßstoffs anhand der wenigstens einen zweiten Nutz-Signalkomponenten, beispielsweise anhand von deren (Signal-)Frequenz und/oder anhand von einer (Signal-)Amplitude wenigstens einer der zweiten Nutz-Signalkomponentenund/oder anhand von einem Phasenwinkel wenigstens einer der zweiten Nutz-Signalkomponente festzustellen, ob und/oder inwieweit aufgrund einer Störung des Meßstoffs bei der Ermittlung der Meßwerte ein Meßfehler vorliegt. Diese Ausgestaltung der Erfindung weiterbildend ist ferner vorgesehen, daß die Meßsystem-Elektronik eingerichtet ist, ein Störung des Meßstoffs zu detektieren sowie eine nämliche Störung des Meßstoffs repräsentierende, beispielsweise als (Störungs-)Alarm deklarierte, Meldung auszugeben.

Nach einer dreißigsten Ausgestaltung der Erfindung ist ferner vorgesehen, daß die Meßsystem-Elektronik eingerichtet ist, einer Änderung einer Dichte des im Rohr geführten Meßstoffs mit einer Änderung der ersten (Wechselstrom-)Frequenz des Treibersignals zu folgen, und daß die Meßsystem-Elektronik eingerichtet ist, anhand der ersten (Wechselstrom-)Frequenz des Treibersignals und/oder anhand der Signalfrequenz der ersten Nutz-Signalkomponente wenigstens eines der Schwingungssignale die Dichte repräsentierende Dichte-Meßwerte zu generieren.

Nach einer einunddreißigsten Ausgestaltung der Erfindung ist ferner vorgesehen, daß die ersten Nutz-Signalkomponenten der ersten und zweiten Schwingungsmeßsignale einer Änderung eines Massenstromes des im Rohr geführten Meßstoffs mit einer Änderung einer Phasendifferenz der ersten Nutz-Signalkomponenten, nämlich einer Differenz zwischen einem Phasenwinkel der ersten Nutz-Signalkomponente des ersten Schwingungsmeßsignals und einem Phasenwinkel der ersten Nutz-Signalkomponente des zweiten Schwingungsmeßsignals folgen, und daß die Meßsystem-Elektronik eingerichtet ist, anhand der Phasendifferenz der ersten Nutz-Signalkomponenten den Massenstrom repräsentierende Massenstrom-Meßwerte zu generieren. Diese Ausgestaltung der Erfindung weiterbildend ist ferner vorgesehen, daß die Meßsystem-Elektronik eingerichtet ist, beispielsweise zum Durchführen der Überwachung der Qualität des Meßstoffs, anhand der zweiten Nutz-Signalkomponenten wenigstens eines der Schwingungsmeßsignale, beispielsweise anhand eines Phasenwinkels wenigstens einer der zweiten Nutz-Signalkomponenten und/oder anhand einer Phasendifferenz der zweiten Nutz-Signalkomponenten, eine (Massenstrom-zu-Phasendifferenz-)Kennlinienfunktion des Meßwandlers, gemäß der die Phasendifferenz der ersten Nutz-Signalkomponenten vom Massenstrom abhängig ist, und/oder eine (Massenstrom-zu-Meßwert-)Kennlinienfunktion des Meßsystems, gemäß der anhand der Phasendifferenz der ersten Nutz-Signalkomponenten ermittelte Massenstrom-Meßwerte vom Massenstrom abhängig sind, zu überprüfen bzw. zu kalibrieren.

Nach einer zweiunddreißigsten Ausgestaltung der Erfindung ist ferner vorgesehen, daß die Meßsystem-Elektronik eingerichtet ist, das Treibersignal (e1) mit dem zweiten (Nutz-)Strom während eines, beispielsweise mehr als 10 ms andauernden und/oder zeitlich begrenzten und/oder wiederkehrend aufgestarteten, Testintervalls mit einem eine zweite (Wechselstrom-)Frequenz aufweisenden sinusförmigen bereitzustellen, beispielsweise derart, daß der zweite (Nutz-)Strom (eN2) nicht-flüchtig bzw. stationär ist, nämlich für zwei oder mehr Schwingungsperioden und/oder einen Zeitraum von mehr als 10 ms (Millisekunden) eine (im wesentlichen) gleichbleibende, von Null verschiedene Amplitude aufweist. Diese Ausgestaltung der Erfindung weiterbildend ist ferner vorgesehen, daß die Meßsystem-Elektronik eingerichtet ist, während des Testintervalls anhand der zweiten Nutz-Signalkomponenten, beispielsweise anhand von deren (Signal-)Frequenz und/oder anhand von einer (Signal-)Amplitude wenigstens einer der zweiten Nutz-Signalkomponenten (s1 N2) und/oder anhand von einem Phasenwinkel wenigstens einer der zweiten Nutz-Signalkomponente (s1N2), die wenigstens eine Meßgröße repräsentierende Meßwerte zu ermitteln, und/oder daß das Testintervall jeweils länger als 100 ms (Millisekunde), beispielsweise nicht weniger als 1 s (Sekunde), andauert, und/oder daß die Meßsystem-Elektronik eingerichtet ist, selbsttätig, beispielsweise zeitgesteuert, das Testintervall, beispielsweise wiederkehrend, aufzustarten und/oder zu beenden; und/oder daß die Meßsystem-Elektronik eingerichtet ist, einen oder mehrere Befehle zu empfangen und auszuführen, der das Testintervall startet.

Nach einer dreiunddreißigsten Ausgestaltung der Erfindung ist ferner vorgesehen, daß die Rohrwandung aus einem Stahl, beispielsweise einem Edelstahl, Duplexstahl oder Superduplexstahl, aus einer Titan-Legierung und/oder einer Zirconium-Legierung, beispielsweise einem Zircaloy, und/oder einer Tantal-Legierung besteht.

Nach einer vierunddreißigsten Ausgestaltung der Erfindung ist ferner vorgesehen, daß das Rohr ein Kaliber (Rohrinnendurchmesser) aufweist, das mehr als 0,1 mm, beispielsweise nämlich mehr als 0,5 mm, beträgt. Diese Ausgestaltung der Erfindung weiterbildend ist ferner vorgesehen, daß das Rohr ein Kaliber-zu-Rohrlänge-Verhältnis aufweist, das mehr als 0,08, beispielsweise mehr als 0,1, und/oder weniger als 0,25, beispielsweise weniger als 0,2, beträgt, und/oder daß die Rohrlänge des Rohrs mehr als 200 mm, beispielsweise mehr als 500 mm, und/oder weniger als 2000 mm, beispielsweise weniger als 1500 mm, beträgt, und/oder daß das Rohr ein Kaliber aufweist, das mehr als 10 mm, beispielsweise nämlich mehr als 15 mm, beträgt.

Nach einer fünfunddreißigsten Ausgestaltung der Erfindung ist ferner vorgesehen, daß die Erregeranordnung außer dem Schwingungserreger keinen weiteren mit dem Rohr verbunden Schwingungserreger aufweist.

Nach einer sechsunddreißigsten Ausgestaltung der Erfindung ist ferner vorgesehen, daß der Schwingungserreger so positioniert und ausgerichtet ist, daß Antriebsversatz weniger als 0,5 mm beträgt, beispielsweise nämlich Null ist, bzw. daß der Flächenschwerpunkt der Antriebs-Querschnittsfläche des Rohrs dem Antriebs-Referenzpunkt entspricht bzw. damit koinzidiert.

Nach einer siebenunddreißigsten Ausgestaltung der Erfindung ist ferner vorgesehen, daß jede der Schwingungsmoden erster und zweiter Ordnung des Rohrs jeweils einen im ersten Rohrende des wenigstens einen Rohrs verorteten ersten Schwingungsknoten und einen im zweiten Rohrende des wenigstens einen Rohrs verorteten zweiten Schwingungsknoten aufweist.

Nach einer achtunddreißigsten Ausgestaltung der Erfindung ist ferner vorgesehen, daß das Rohr abschnittsweise, beispielsweise kreisbogenförmig und/oder V-förmig, gekrümmt ist, beispielsweise derart, daß das Rohr ein zentrales Scheitelbogensegment aufweist und/oder daß genau eine Hauptträgheitsachse des wenigstens einen Rohrs innerhalb der Referenz-Querschnittsfläche des wenigstens einen Rohrs liegt.

Nach einer neununddreißigsten Ausgestaltung der Erfindung ist ferner vorgesehen, daß das Rohr abschnittsweise, beispielsweise über die gesamte Rohrlänge, gerade ist, beispielsweise derart, daß drei Hauptträgheitsachse des wenigstens einen Rohrs innerhalb der Referenz-Querschnittsfläche des wenigstens einen Rohrs liegt und/oder ein Massenschwerpunkt innerhalb der Referenz-Querschnittsfläche des wenigstens einen Rohrs liegt.

Nach einer vierzigsten Ausgestaltung der Erfindung ist ferner vorgesehen, daß der Schwingungserregermittels einer, beispielsweise eine Luftspule und einen Anker aufweisende, Schwingspule gebildet ist.

Nach einer einundvierzigsten Ausgestaltung der Erfindung ist ferner vorgesehen, daß jeder der ersten und zweiten Schwingungssensoren jeweils mittels einer, beispielsweise eine Luftspule und einen Anker aufweisende, Tauchspule gebildet ist.

Nach einer zweiundvierzigsten Ausgestaltung der Erfindung ist ferner vorgesehen, daß der Schwingungserreger einen, beispielsweise mittels eines Permanentmagneten gebildeten, magnetischen Anker sowie eine vom Magnetfeld des Ankers durchfluteten Spule, beispielsweise nämlich eine Luftspule, aufweist. Diese Ausgestaltung der Erfindung weiterbildend ist ferner vorgesehen, daß der magnetische Anker unter Bildung des Antriebspunkts mechanisch mit dem wenigstens einen Rohr verbundenen ist, und/oderdaß die Spule elektrisch an die Meßsystem-Elektronik angeschlossen und eingerichtet ist, das Treibersignal zu empfangen und dessen erste und zweite (Nutz-)Ströme zu führen.

Nach einer dreiundvierzigsten Ausgestaltung der Erfindung ist ferner vorgesehen, daß die Meßsystem-Elektronik einen nicht-flüchtigen elektronischen Datenspeicher aufweist, der dafür eingerichtet ist, digitale Daten, beispielsweise auch ohne eine angelegte Betriebsspannung, vorzuhalten.

Nach einer ersten Weiterbildung der Erfindung ist ferner vorgesehen, daß die Rohranordnung wenigstens ein, beispielsweise zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr aufweist.

Nach einer ersten Ausgestaltung der ersten Weiterbildung ist ferner vorgesehen, daß das zweite Rohr sich von einem ersten Rohrende bis zu einem zweiten Rohrende mit einer Rohrlänge erstreckt und ein von einer, beispielsweise metallischen, Rohrwandung umschlossenes, sich vom ersten Rohrende bis zum zweiten Rohrende erstreckendes Lumen aufweist, und daß das zweite Rohr eingerichtet ist, zumindest in einer vom ersten Rohrende zum zweiten Rohrende weisenden Strömungsrichtung, beispielsweise zeitgleich mit dem ersten Rohr, von Meßstoff durchströmt und währenddessen vibrieren gelassen zu werden.

Nach einer zweiten Ausgestaltung der ersten Weiterbildung ist ferner vorgesehen, daß dem zweiten Rohr eine Vielzahl von jeweils eine zugehörige Resonanzfrequenz aufweisenden Schwingungsmoden (Eigenschwingungsformen) innewohnt, in denen das zweite Rohr jeweils ein oder mehr Schwingungsbäuche und jeweils zwei oder mehr Schwingungsknoten aufweisende Schwingungsbewegungen ausführen kann bzw. ausführt, beispielsweise derart, daß Schwingungsbewegungen des zweiten Rohrs in der Schwingungsmode zweite Ordnung (f1-Mode) den Schwingungsbewegungen des ersten Rohrs in der Schwingungsmode zweiter Ordnung (f2-Mode) entgegengesetzt, beispielsweise gegengleich, sind und/oder daß Schwingungsbewegungen des zweiten Rohrs in der Schwingungsmode erster Ordnung (f1-Mode) den Schwingungsbewegungen des ersten Rohrs in der Schwingungsmode erster Ordnung entgegengesetzt, beispielsweise gegengleich, sind. Diese Ausgestaltung der Erfindung weiterbildend ist ferner vorgesehen, daß eine Resonanzfrequenz der Schwingungsmode erster Ordnung des ersten Rohrs gleich einer Resonanzfrequenz der Schwingungsmode erster Ordnung (f1-Mode) des zweiten Rohrs ist und daß eine Resonanzfrequenz der Schwingungsmode zweiter Ordnung des ersten Rohrs gleich einer Resonanzfrequenz der Schwingungsmode zweiter Ordnung des zweiten Rohrs ist.

Nach einer dritten Ausgestaltung der ersten Weiterbildung ist ferner vorgesehen, daß der erste Schwingungssensor sowohl am ersten Rohr als auch zweiten Rohr positioniert, beispielsweise nämlich sowohl anteilig mit dem ersten Rohr als auch anteilig mit dem zweiten Rohr mechanisch verbunden ist, und daß erste Schwingungssensor eingerichtet ist, Schwingungsbewegungen, beispielsweise nämlich gegengleiche Schwingungsbewegungen, sowohl des ersten Rohrs als auch des zweiten Rohrs, beispielsweise differenziell, zu erfassen und in das erste Schwingungsmeßsignal zu wandeln, derart, daß das Schwingungsmeßsignal, beispielsweise gegengleiche, Schwingungsbewegungen der ersten und zweiten Rohre repräsentiert.

Nach einer vierten Ausgestaltung der ersten Weiterbildung ist ferner vorgesehen, daß der zweite Schwingungssensor sowohl am ersten Rohr als auch zweiten Rohr positioniert, beispielsweise nämlich sowohl anteilig mit dem ersten Rohr als auch anteilig mit dem zweiten Rohr mechanisch verbunden ist, und daß zweite Schwingungssensor eingerichtet ist, Schwingungsbewegungen, beispielsweise nämlich gegengleiche Schwingungsbewegungen, sowohl des ersten Rohrs als auch des zweiten Rohrs, beispielsweise differenziell, zu erfassen und in das zweite Schwingungsmeßsignal zu wandeln, derart, daß das Schwingungsmeßsignal, beispielsweise gegengleiche, Schwingungsbewegungen der ersten und zweiten Rohre repräsentiert.

Nach einer fünften Ausgestaltung der ersten Weiterbildung ist ferner vorgesehen, daß die Rohranordnung einen, beispielsweise als Leitungsverzweigung dienlichen und/oder einlaßseitigen, ersten Strömungsteiler mit wenigstens zwei Strömungsöffnungen aufweist, und daß die Rohranordnung einen, beispielsweise dem ersten Strömungsteiler baugleichen und/oder als Leitungsvereinigung dienlichen und/oder auslaßseitigen, zweiten Strömungsteiler mit wenigstens zwei Strömungsöffnungen aufweist. Diese Ausgestaltung der Erfindung weiterbildend ist ferner vorgesehen, daß jedes der ersten und zweiten Rohre der Rohranordnung, beispielsweise unter Bildung fluidisch paralleler Strömungskanäle, jeweils an jeden der ersten und zweiten Strömungsteiler angeschlossen ist, derart, daß das erste Rohr mit dessen ersten Rohrende in eine erste Strömungsöffnung des ersten Strömungsteilers und mit dessen zweiten Rohrende in eine erste Strömungsöffnung des zweiten Strömungsteilers und das zweite Rohr mit dessen ersten Rohrende in eine zweite Strömungsöffnung des ersten Strömungsteilers und mit dessen zweiten Rohrende in eine zweite Strömungsöffnung des zweiten Strömungsteilers mündet.

Nach einer sechsten Ausgestaltung der ersten Weiterbildung ist ferner vorgesehen, daß der Schwingungserreger sowohl anteilig mit dem ersten Rohr als auch anteilig mit dem zweiten Rohr mechanisch verbunden ist.

Nach einer siebenten Ausgestaltung der ersten Weiterbildung ist ferner vorgesehen, daß der Schwingungserreger eingerichtet ist, differenziell auf die ersten und zweiten Rohre zu wirken, beispielsweise derart, daß die ersten und zweiten Rohre simultan Frequenz gleiche, entgegengesetzte erzwungene mechanische Schwingungen ausführen, und/oder daß der Schwingungserreger eingerichtet ist, elektrische Leistung mit einem zeitlich veränderlichen elektrischen Strom so in mechanische Leistung zu wandeln, daß an einem mittels des Schwingungserregers am damit mechanisch verbundenen zweiten Rohr gebildeten Antriebspunkt eine zeitlich veränderliche Antriebskraft auf das zweite Rohr wirkt, beispielsweise zeitgleich und/oder entgegengesetzt zu der am mittels des Schwingungserregers am damit mechanisch verbundenen ersten Rohr gebildeten Antriebspunkt auf das erste Rohr wirkende Antriebskraft, und/oder daß der Schwingungserreger eingerichtet ist, mittels des elektrischen Treibersignals eingespeiste elektrische Leistung zeitgleich in erzwungene mechanische Schwingungen der ersten und zweiten Rohre zu wandeln, beispielsweise derart, daß die ersten und zweiten Rohre erzwungene mechanische Schwingungen mit der ersten Nutzfrequenz und/oder mit der zweiten Nutzfrequenz simultan ausführen.

Nach einer zweiten Weiterbildung der Erfindung umfaßt das Meßsystem weiters ein, beispielsweise an einem Wandler-Schutzgehäuse des Meßwandlers befestigtes und/oder metallisches, Elektronik-Schutzgehäuse für die Meßsystem-Elektronik.

Nach einer dritten Weiterbildung der Erfindung umfaßt das Meßsystem weiters ein, beispielsweise metallisches, Wandler-Schutzgehäuse, wobei Wandler-Schutzgehäuse und Rohranordnung aneinander, beispielsweise wieder lösbar, befestigt ist.

Ein Grundgedanke der Erfindung besteht darin, bei vibronischen Meßsystemen der in Rede stehenden Art zum Zwecke einer Überwachung Qualität eines darin geführten Meßstoffs mittels des wenigstens einen Schwingungserregers Nutz-Schwingungen, beispielsweise nämlich Biegeschwingungen, gemäß einer solchen natürlichen Schwingungsmode des wenigstens einen Rohrs aktiv, insb. nämlich nicht-flüchtig bzw. stationär, anzuregen bzw. anzuregen zu versuchen, die einen bei nämlichem Schwingungserreger bzw. dessen unmittelbarer Nähe verorteten Schwingungsknoten aufweist. Bei Meßsystemen, nicht zuletzt auch marktgängigen (Standard-)Meßsystemen, mit einem einzigen mittig am Rohr wirkenden Schwingungserreger entspricht die vorbezeichnete Schwingungsmode einer Schwingungsmode zweiter Ordnung, beispielsweise nämlich einer Biege-Schwingunsgmode zweiter Ordnung. Aufgrund des dadurch sehr geringen Antriebsversatzes weisen die vorbezeichneten Nutz-Schwingungen selbst bei einer Anregung auf der jeweiligen Resonanzfrequenz der Schwingungsmode nominell eine nur sehr geringe bzw. überhaupt keine Amplitude auf. Anderseits führt aber jedwede, nämlich mit einer Verschiebung des vorbezeichneten, dem Schwingungserreger am nächsten liegenden Schwingungsknoten einhergehende Änderung des Antriebsversatzes dazu, daß sich die Amplitude bei gleicher Anregung im Vergleich zur initial gemessenen Amplitude entsprechend ändert; dies im besonderen in der Weise, daß bei größer werdendem Antriebsversatz die Amplitude entsprechend ebenfalls zunimmt. Die Änderung des Antriebsversatz wiederum kann aus mit der Änderung der (Meßstoff-)Qualität einhergehenden zunehmend weniger symmetrischen Verteilung der Masse und/oder Viskosität des Meßstoffs innerhalb des wenigstens einen Rohrs bzw. damit korrespondierenden Änderungen der modalen Masse und/oder modalen Dämpfung resultieren, insb. derart, daß bei verringerter (Meßstoff-)Qualität der Antriebsversatz zunimmt.

Zum Zwecke einer Überwachung der Qualität des Meßstoffs können die entsprechenden, nämlich durch Anregung der Schwingungsmode zweiter Ordnung generierten Schwingungsantworten bzw. diese charakterisierende (System-)Parameter im Betrieb des Meßsystems sehr einfach wiederkehrend ermittelt und mit entsprechenden Referenz-Schwingungsantworten ("Fingerabdruck") bzw. Bezugswerten dafür verglichen werden, derart, daß erhöhte bzw. ein vorgegebenes Toleranzmaß überschreitende Abweichungen von den entsprechenden Bezugswerten das Vorliegen einer Störung des Meßstoffs zu detektieren, ggf. auch zu vermelden; dies vorteilhaft auch simultan zum eigentlichen Meßbetrieb ohne diesen nennenswert zu beeinflussen bzw. ohne den Meßbetrieb dafür länger andauernd unterbrechen zu müssen.

Ein weiterer Vorteil der Erfindung besteht auch darin, daß die erfindungsgemäße Überwachung der Qualität des Meßstoffs auch unter weitgehender, ggf. auch ausschließlicher Verwendung der für konventionelle vibronischen Meßsystemen, nicht zuletzt auch für die darin bis anhin verbauten Meßwandler, bewährten Designs wie auch unter gleichermaßen weitgehender Beibehaltung bewährten Technologien und Architekturen etablierter Meßsystem-Elektroniken realisiert werden kann; beispielsweise auch derart, daß konventionelle, ggf. auch bereits installierte Meßsysteme durch ein entsprechendes Umprogrammieren der jeweiligen Meßsystem-Elektronik nachgerüstet werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: in einer perspektivischen Seitenansicht ein Ausführungsbeispiel eines vibronischen Meßsystems;
- Fig. 2: nach Art eines Blockschaltbildes schematisch ein Ausführungsbeispiel eines für ein vibronisches Meßsystem gemäß Fig. 1 geeigneten Meßwandlers vom Vibratuionstyp und einer damit elektrisch gekoppelten Meßsystem-Elektronik;
- Fig. 3: nach Art eines Blockschaltbildes schematisch ein weiteres Ausführungsbeispiel eines für ein vibronisches Meßsystem gemäß Fig. 1 geeigneten Meßwandlers vom Vibrationstyp und damit elektrisch gekoppelter Meßsystem-Elektronik;
- Fig. 4a: schematisch eine Rohranordnung eines für ein vibronisches Meßsystem gemäß Fig. 1 geeigneten Meßwandlers vom Vibrationstyp mit einem zu ersten Nutzschwingungen angeregten Rohr;
- Fig. 4b: schematisch bei einer Rohranordnung gemäß Fig. 4 aufgrund von Nutzschwingungen angeregte, Massenstrom abhängige Coriolisschwingungen des Rohrs;
- Fig. 5: schematisch ein Diagramm von einem Rohr einer Rohranordnung gemäß Fig. 4 immanenten Schwingungsmoden erster, zweiter bzw. dritter Ordnung; und

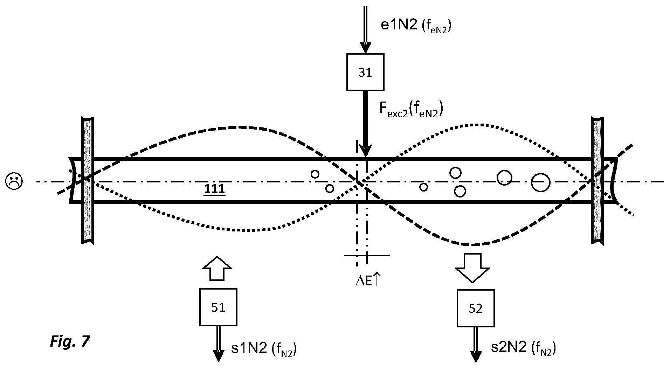

- Fig. 6, 7: schematisch die Rohranordnung gemäß Fig. 4 mit zu zweiten Nutzschwingungen angeregtem Rohr.

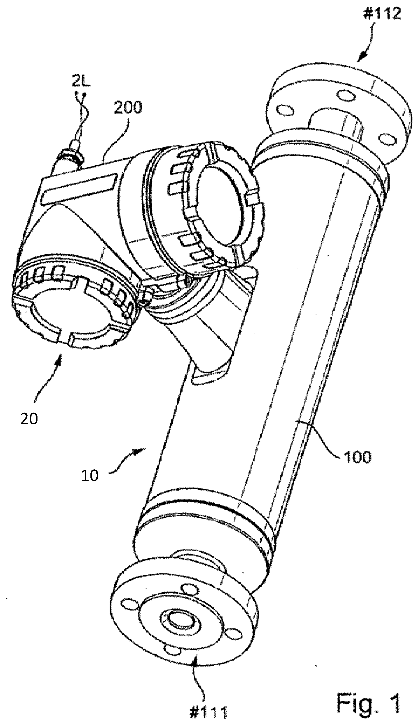

In Fig. 1 bzw. 2 und 3, sind Ausführungsbeispiele bzw. Ausgestaltungvarianten für ein dem Messen und/oder Überwachen wenigstens einer, insb. zeitlich veränderlichen, Meßgröße eines fluiden, beispielsweise zumindest zeitweise strömenden und/oder zumindest zeitweise zwei- oder mehrphasigen bzw. inhomogenen, Meßstoffs FL dienliches vibronisches Meßsystems schematisch dargestellt, wobei es sich bei der Meßgröße beispielsweise um einen Strömungsparameter, wie z.B. einem Massenstrom ṁ, einem Volumenstrom und/oder einer Strömungsgeschwindigkeit, oder beispielsweise einen Stoffparameter, wie z.B. einer Dichte ρ und/oder einer Viskosität η, des Meßstoffs FL handeln kann. Das Meßsystem ist im besonderen dafür vorgesehen bzw. eingerichtet, in den Verlauf einer ein als Meßstoff dienliches Fluid FL - beispielsweise nämlich ein Gas, eine Flüssigkeit oder eine Dispersion - führenden Prozeßleitung eingegliedert und im Betrieb von dem via Prozeßleitung zu- bzw. wieder abgeführten Fluid FL zumindest zeitweise durchströmt zu werden. Zudem ist das Meßsystem dafür vorgesehen, die wenigstens ein physikalische Meßgröße (zeitlich aufeinanderfolgend) quantifizierende, ggf. auch digitale Meßwerte X_{M} ermitteln, insb. nämlich zu berechnen und/oder auszugeben. Die Prozeßleitung kann beispielsweise eine Rohrleitung, beispielsweise nämlich eine Rohrleitung einer Abfüllanlage, einer Betankungsvorrichtung oder einer anderen industriellen Anlage sein.

Wie in Fig. 1, 2 bzw. 3 jeweils dargestellt bzw. aus deren Zusammenschau ohne weiters ersichtlich, umfaßt das Meßsystem einen Meßwandler 10 vom Vibrationstyp, nämlich einen Meßwandler mit einer mittels wenigstens eines (ersten) oder mehreren Rohren gebildete Rohranordnung zum Führen des Meßstoffs, eine Erregeranordnung (31) zum Wandeln elektrischer Leistung in dem Anregen und Aufrechterhalten erzwungener mechanischer Schwingungen des wenigsten einen Rohrs sowie eine Sensoranordnung (41, 42) zum Erfassen von mechanischen Schwingungen der Rohranordnung und zum Bereitstellen von jeweils Schwingungsbewegungen der Rohranordnung, insb. nämlich von deren einem oder mehreren Rohren, repräsentierenden, beispielsweise elektrischen oder optischen, Schwingungsmeßsignalen (s1, s2). Darüberhinaus umfaßt das Meßsystem ferner eine mit dem Meßwandler 10, nämlich sowohl mit der vorbezeichneten Erregeranordnung des Meßwandlers als auch mit der vorbezeichneten Sensoranordnung des Meßwandlers, beispielsweise nämlich mittels entsprechender elektrischer Verbindungsleitungen, elektrisch gekoppelte, insb. mittels wenigstens eines Mikroprozessors (µC) gebildete und/oder in einem Elektronik-Schutzgehäuse (200) angeordnete und/oder als Transmitter dienliche, Meßsystem-Elektronik 20 zum Ansteuern des Meßwandlers, insb. nämlich zum Bewirken der vorbezeichneten mechanischen Schwingungen des wenigstens einen Rohrs, und zum Auswerten von vom Meßwandler gelieferten Schwingungsmeßsignalen, beispielsweise nämlich zum Ermitteln der vorbezeichneten Meßwerte.

Nach einer weiteren Ausgestaltung der Erfindung weist das Meßsystem ferner ein, insb. bieg- und/oder verwindungssteifes, Trägergerüst 100 auf, wobei - wie auch in Fig. 1, 2 bzw. 3 schematisch dargestellt - nämliches Trägergerüst 100 und die Rohranordnung aneinander, beispielsweise stoffschlüssig oder auch wieder lösbar, befestigt sind. Zum Schutz des Meßwandlers bzw. dessen Komponenten vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Meßstoff kann, wie bei vibronischen Meßsystemen der in Rede stehenden Art durchaus üblich, das vorbezeichnete Trägergerüst 100 auch als ein die Rohranordnung, zusammen mit der Erreger- und Sensoranordnung umhüllendes Wandler-Schutzgehäuse ausgebildet sein, beispielsweise auch derart, daß nämliches Wandler-Schutzgehäuse metallisch ist und/oder eine Druckfestigkeit aufweist, die größer als eine größte Druckfestigkeit des wenigstens einen Rohrs der Rohranordnung ist und/oder die mehr als 50 bar beträgt. Darüberhinaus kann auch die Meßsystem-Elektronik 20, wie bei Meßsystemen der in Rede stehenden Art durchaus üblich, innerhalb eines, beispielsweise am vorbezeichneten Trägergerüst bzw. Wandler-Schutzgehäuse des Meßwandlers befestigtes und/oder metallischen, Elektronik-Schutzgehäuse 200 untergebracht sein.

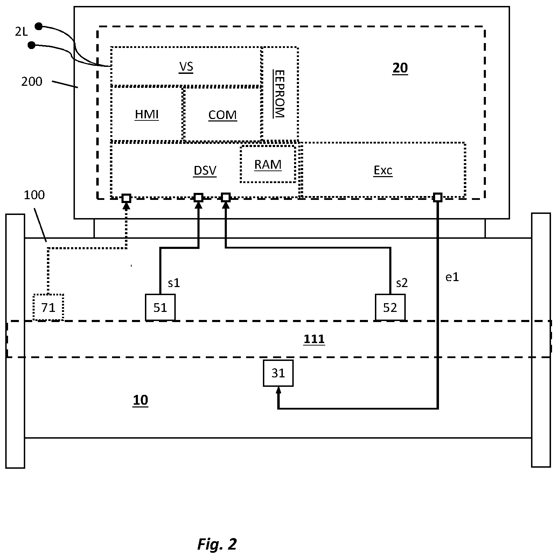

Das wenigstens einen Rohr der Rohranordnung kann zumindest abschnittsweise gerade, insb. nämlich hohlzylindrisch, und/oder zumindest abschnittsweise gekrümmt sein, beispielsweise derart, daß nämliches Rohr ein zentrales Scheitelbogensegment aufweist, insb. nämlich im wesentlichen V-förmig ausgebildet ist bzw. eine V-förmige Silhouette aufweist, und/oder daß das Rohr im Ergebnis eine in einer einzigen (Rohr-)Ebene liegende Rohrform aufweist. Wie in Fig. 2 angedeutet, erstreckt sich das wenigstens eine Rohr von einem ersten Rohrende bis zu einem zweiten Rohrende mit einer einer Länge einer gedachten Mittellinie des Rohrs entsprechenden, beispielsweise mehr als 100 mm betragenden, Rohrlänge und weist das Rohr ein von einer Rohrwandung umschlossenes, sich vom ersten Rohrende bis zum zweiten Rohrende erstreckendes Lumen auf. Nach einer weiteren Ausgestaltung der Erfindung beträgt die Rohrlänge des Rohrs mehr als 200 mm, beispielsweise auch mehr als 500 mm, und/oder weniger als 2000 mm, beispielsweise auch weniger als 1500 mm. Im Falle eines zumindest abschnittsweise gekrümmten Rohrs entspricht die vorbezeichnete Rohrlänge einer gestreckten oder abgewickelten Länge des Rohrs und kann das Rohr durch Biegen eines rohrförmigen Halbzeugs gefertigt sein. Nach einer weiteren Ausgestaltung der Erfindung besteht die Rohrwandung des wenigstens eine Rohrs aus einem Metall, beispielsweise nämlich einem Stahl, insb. einem Edelstahl, Duplexstahl oder Superduplexstahl, einer Titan-Legierung und/oder einer Zirconium-Legierung, insb. einem Zircaloy, und/oder einer Tantal-Legierung und/oder einer Nickelbasislegierung. Zudem kann das wenigstens eine Rohr der Rohranordnung einstückig ausgebildet sein, beispielsweise derart, daß das Rohr nahtlos oder (zumindest im Falle einer Rohrwandung aus Metall) mit einer einzigen geschweißten Naht hergestellt ist. Nach einer weiteren Ausgestaltung der Erfindung weist das wenigstens eine Rohr der Rohranordnung ein Kaliber (Rohrinnendurchmesser) auf, das mehr als 0,1 mm, beispielsweise nämlich auch mehr als 0,5 mm, beträgt und/oder weist die Rohrwandung des wenigstens einen Rohrs eine kleinste Wandstärke auf, die nicht weniger als 0,5 mm, beispielsweise auch mehr als 1,5 mm beträgt, dies im besonderen in der Weise, daß die Wandstärke der Rohrwandung im wesentlichen einheitlich ist. Nach einer weiteren Ausgestaltung der Erfindung weist das Rohr ein Kaliber-zu-Rohrlänge-Verhältnis auf, das mehr als 0,08, insb. mehr als 0,1, und/oder weniger als 0,25, insb. weniger als 0,2, beträgt. Das wenigstens eine Rohr bzw. jedes der Rohre der Rohranordnung kann im übrigen aber auch jedes anderer der in vibronischen konventionellen (Standard-)Meßsystemen üblichen geometrischen Formen und/oder Abmaße annehmen, beispielsweise nämlich 1 mm, 2 mm, 5 mm, 10 mm, 15 mm oder auch mehr betragen, und/oder aus weiteren dafür üblichen Materialien hergestellt sein.

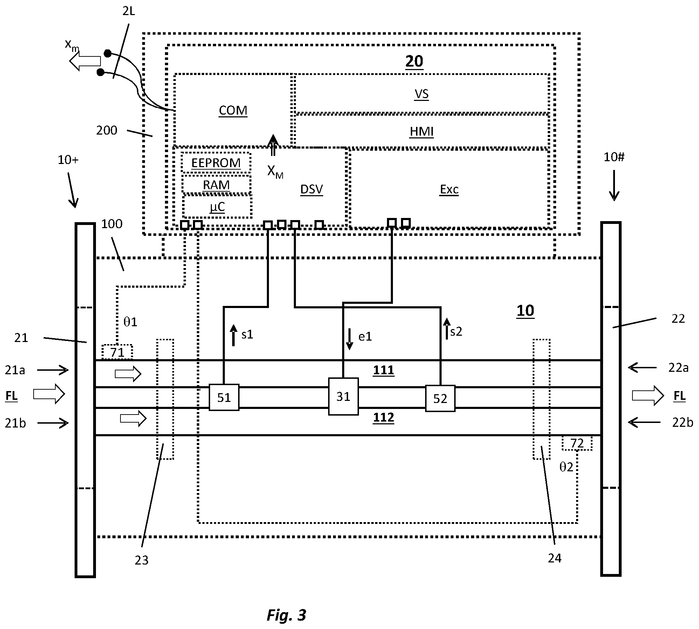

Nach einer weiteren Ausgestaltung der Erfindung weist die Rohranordnung des Meßwandlers 10 - wie in Fig. 3 schematisch dargestellt - wenigstens ein zweites Rohr 112 auf. Das Rohr 112 kann zumindest abschnittsweise gekrümmtes und/oder zumindest abschnittsweise gerade sein. Zudem kann das Rohr 112 - wie in Fig. 3 angedeutete - beispielsweise auch zum Rohr 111 baugleich ausgebildet und/oder zum Rohr 111 zumindest abschnittsweise parallel angeordnet sein. Das Rohr 112 erstreckt sich gleichermaßen wie das Rohr 111 von einem ersten Rohrende bis zu einem zweiten Rohrende mit einer Rohrlänge und weist gleichermaßen wie das Rohr 111 ein von einer, beispielsweise metallischen, Rohrwandung umschlossenes, sich vom ersten Rohrende bis zum zweiten Rohrende erstreckendes Lumen auf. Zudem ist das Rohr 112 ebenfalls eingerichtet, zumindest in einer vom ersten Rohrende zum zweiten Rohrende weisenden Strömungsrichtung, insb. zeitgleich mit dem ersten Rohr, von Meßstoff bzw. einem Teilvolumen davon durchströmt und währenddessen vibrieren gelassen zu werden. Darüberhinaus kann die Rohranordnung ferner einen, hier beispielsweise als Leitungsverzweigung dienlichen und/oder einlaßseitigen, ersten Strömungsteiler 21 mit wenigstens zwei Strömungsöffnungen sowie einen, beispielsweise dem vorbezeichneten Strömungsteiler 21 baugleichen und/oder als Leitungsvereinigung dienlichen und/oder auslaßseitigen, zweiten Strömungsteiler 22 mit ebenfalls wenigstens zwei Strömungsöffnungen aufweisen und kann dann jedes der Rohre 111, 112 der Rohranordnung unter Bildung zweier fluidisch paralleler Strömungskanäle jeweils an jeden der ersten und zweiten Strömungsteiler angeschlossen sein, beispielsweise derart, daß das Rohr 111 mit dessen ersten Rohrende in eine erste Strömungsöffnung 21a des Strömungsteilers 21 und mit dessen zweiten Rohrende in eine erste Strömungsöffnung 22a des Strömungsteilers 22 mündet und daß das Rohr 112 mit dessen ersten Rohrende in eine zweite Strömungsöffnung 21b des Strömungsteilers 21 und mit dessen zweiten Rohrende in eine zweite Strömungsöffnung 22b des Strömungsteilers 22 mündet. Die Rohrlänge des Rohrs 111 kann beispielsweise gleich der Rohrlänge des Rohrs 112 sein. Desweiteren kann die Rohranordnung noch weitere Rohre, beispielsweise nämlich weitere zwei Rohre, mithin, wie u.a. auch in den eingangs erwähnten US-A 56 02 345, WO-A 96/08697, US-A 2017/0356777, WO-A 2019/081169 oder WO-A 2019/081170 gezeigt, insgesamt vier Rohre aufweisen. Dementsprechend kann sowohl der Strömungsteiler 21 als auch der Strömungsteiler 22 jeweils, insb. genau, vier Strömungsöffnungen aufweisen und kann jedes der Rohre der Rohranordnung unter Bildung von vier fluidisch parallelen Strömungspfaden jeweils an jeden der Strömungsteiler 21, 22 angeschlossen sein. Für den vorbezeichneten Fall, daß die Rohranordnung vier Rohre aufweist, können die Rohre beispielsweise auch so ausgebildet sein, daß sie lediglich paarweise baugleich sind, beispielsweise nämlich die Rohrlängen lediglich paarweise gleich groß gewählt sind. Zudem kann für den vorzeichneten Fall, daß die Rohranordnung zwei oder mehr Rohre aufweist, die Wandung jedes der Rohre - wie bei Rohranordnungen der in Rede stehenden Art bzw. damit gebildeten Meßwandlern bzw. Meßsystemen durchaus üblich - beispielsweise aus gleichem Material bestehen; dies beispielsweise auch derart, daß die Rohrwandung jedes der Rohre der Rohranordnung eine Wandstärke aufweist, die gleich einer Wandstärke des anderen Rohrs bzw. jedes der anderen Rohre ist und/oder daß jedes der Rohre der Rohranordnung ein Kaliber, nämlich einen Innendurchmesser aufweist, das gleich einem Kaliber des anderen Rohrs bzw. jedes der anderen Rohre ist.

Die Rohranordnung bzw. der damit gebildete Meßwandler MW ist, wie bereits angedeutet, im besonderen dafür vorgesehen, über ein, beispielsweise auch von einem ersten Anschlußflansch eingefaßtes, Einlaßende 10+ der Rohranordnung bzw. des Meßwandlers MW sowie ein entsprechendes, beispielsweise von einem zweiten Anschlußflansch eingefaßtes, Auslaßende 10# an die vorbezeichnete Prozeßleitung angeschlossenen und im Betrieb vom Meßstoff FL durchströmt zu werden. An jedem der vorbezeichneten Anschlußflansche kann zudem jeweils eine Dichtfläche ausgebildet sein. Für den vorbezeichneten Fall, daß die Rohranordnung wenigstens zwei Rohre sowie die zwei damit jeweils verbundene Strömungsteiler aufweist, ist das Einlaßende 10+ der Rohranordnung entsprechend mittels des Strömungsteilers 21 und das Auslaßende 10# der Rohranordnung entsprechend mittels des Strömungsteilers 22 gebildet und kann dementsprechend der Strömungsteiler 21 den vorbezeichneten ersten Anschlußflansch und der Strömungsteiler 22 den vorbezeicheten zweiten Anschlußflansch aufweisen. Zudem ist das wenigstens eine Rohr der Rohranordnung ferner dafür eingerichtet, in dessen Lumen Meßstoff FL bzw. ein Teilvolumen davon zu führen und währenddessen vibrieren gelassen zu werden, beispielsweise nämlich - insb. einen mit der wenigstens einen Meßgröße korrespondierenden Meßeffekt bewirkende und/oder mittels der Erregeranordnung angeregte - erzwungene mechanische Schwingungen um eine zughörige statische Ruhelage auszuführen; dies im besonderen in der Weise, daß das wenigstens eine Rohr der Rohranordnung vibrieren gelassenen und währenddessen ausgehend von dessen ersten Rohrende in Richtung von dessen zweiten Rohrende (Strömungsrichtung) von Meßstoff durchströmt wird. Die vorbezeichneten erzwungenen mechanischen Schwingungen können, wie bei Meßwandlern der in Rede stehenden Art durchaus üblich, zumindest anteilig erzwungene Biegeschwingungen des wenigstens einen Rohrs um eine gedachte Schwingungsachse der Rohranordnung, beispielsweise nämlich eine die ersten und zweiten Rohrenden imaginär verbindende Schwingungsachse sein.

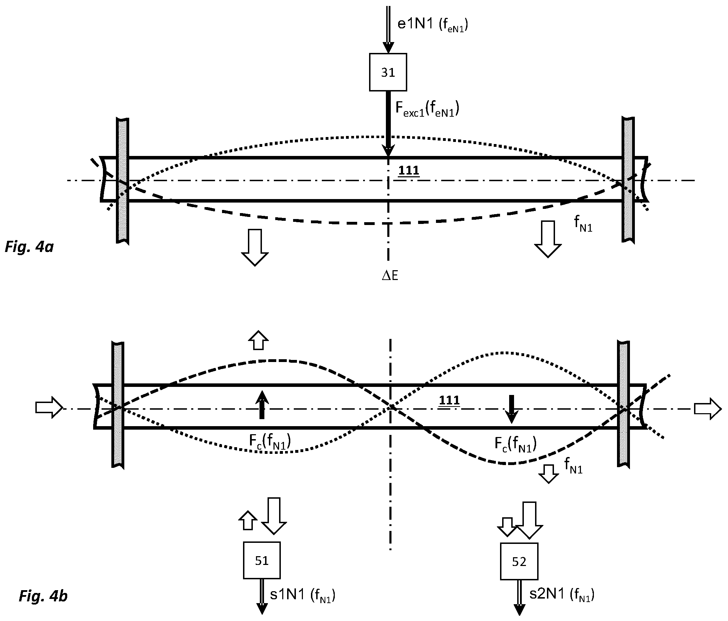

Die vorbezeichnete Erregeranordnung des Meßwandlers 10 wiederum ist im besonderen dafür vorgesehen bzw. eingerichtet, dorthin (von der Meßsystem-Elektronik 20) eingespeiste elektrische Leistung in mechanische Leistung zu wandeln, derart, daß - wie in Fig. 4a angedeutet bzw. auch aus einer Zusammenschau der Fig. 2 und 4a ohne weiters ersichtlich - das wenigstens eine Rohr 111 der Rohranordnung und/oder jedes von deren Rohren zumindest zeitweise erzwungene mechanische Schwingungen um eine jeweilige statische Ruhelage ausführt, während die Sensoranordnung dafür vorgesehen bzw. eingerichtet ist, mechanische Schwingungen der Rohranordnung, nicht zuletzt mittels der Erregeranordnung erzwungene mechanische Schwingungen und/oder Biegeschwingungen des wenigstens einen Rohrs zu erfassen und ein erstes Schwingungsmeßsignal s1 sowie ein zweites Schwingungsmeßsignal s2 bereitzustellen, von welchen - beispielsweise elektrischen - Schwingungsmeßsignalen s1, s2 jedes zumindest anteilig Schwingungsbewegungen eines oder mehrerer der Rohre der Rohranordnung repräsentiert, beispielsweise jeweils mittels einer jeweiligen, mit Schwingungsbewegungen (Xₛ₁, Xₛ₂) des wenigstens einen Rohrs korrespondierenden veränderlichen elektrischen Spannung; dies im besonderen in der Weise, daß - wie in Fig. 4b schematisch dargestellt - die Schwingungsmeßsignale s1, s2 (bzw. jeweils eine spektrale Signalkomponente s1N1 bzw. s2N1 davon) einer Änderung einer Massenstrom des in der Rohranordnung geführten Meßstoffs mit einer Änderung einer ersten Phasendifferenz (Δφ12), nämlich einer Änderung einer Differenz zwischen einem Phasenwinkel des Schwingungsmeßsignals s1 und einem Phasenwinkel des Schwingungsmeßsignals s2 folgen, und/oder in der Weise, daß jedes der vorbezeichneten Schwingungsmeßsignale s1, s2 einer Änderung einer Dichte des in der Rohranordnung geführten Meßstoffs jeweils mit einer Änderung einer jeweiligen Signalfrequenz wenigstens einer spektrale Signalkomponente folgt.

Die Erregeranordnung des erfindungsgemäßen Meßsystems weist einen, beispielsweise elektrodynamischen, Schwingungserreger 31 auf, der mechanisch mit dem wenigstens einen Rohr verbunden und zudem eingerichtet ist, elektrische Leistung mit einem zeitlich veränderlichen elektrischen Strom in mechanische Leistung zu wandeln, derart, daß - wie in Fig. 2 angedeutet bzw. aus einer Zusammenschau der Fig. 2 und 4a ohne weiters ersichtlich - an einem mittels nämlichen Schwingungserregers 31 am damit mechanisch verbundenen Rohr gebildeten Antriebspunkt eine zeitlich veränderliche Antriebskraft F_{exc1} auf das Rohr wirkt. Von einer durch den vorbezeichneten Antriebspunkt hindurchführenden gedachten Umfangslinie des Rohrs wird dabei eine Querschnittsfläche des Rohrs umschlossen, die im Folgenden auch als Antriebs-Querschnittsfläche des Rohrs bezeichnet ist. Der Schwingungserreger 31 ist nach einer weiteren Ausgestaltung der Erfindung so positioniert, daß - wie in Fig. 4a angedeutet - eine Wirklinie der vorbezeichneten Antriebskraft F_{exc1} senkrecht zu einer Normalen der Antriebs-Querschnittsfläche des Rohrs verläuft. Nach einer weiteren Ausgestaltung der Erfindung ist der Schwingungserreger 31 vom elektrodynamischen Typ, nämlich mittels einer, beispielsweise eine Luftspule und einen Anker aufweisenden, Schwingspule gebildet bzw. weist der Schwingungserreger 31 einen, beispielsweise mittels eines Permanentmagneten gebildeten, magnetischen Anker sowie eine vom Magnetfeld des Ankers durchfluteten Spule, beispielsweise nämlich eine Luftspule, auf. Der magnetische Anker kann beispielsweise unter Bildung des Antriebspunkts mechanisch mit dem wenigstens einen Rohr 111 verbundenen sein und/oder die Spule kann beispielsweise elektrisch an die Meßsystem-Elektronik 20 angeschlossen sein.

Für den vorbezeichneten Fall, daß die Rohranordnung zwei Rohre aufweist, ist nach einer weiteren Ausgestaltung der Erfindung der Schwingungserreger 31 eingerichtet, mechanische Schwingungen der beiden Rohre 111, 112 gleichzeitig anzuregen; dies im besonderen in der Weise, daß der Schwingungserreger 31 differenziell auf die die beiden Rohre 111, 112 wirkt, nämlich lediglich gegengleiche Anregungskräfte in die beiden Rohre 111, 112 einleiten kann bzw. einleitet, beispielsweise derart, daß die ersten und zweiten Rohre 111, 112 simultan Frequenz gleiche, entgegengesetzte erzwungene mechanische Schwingungen ausführen. Der Schwingungserreger 31 kann dementsprechend beispielsweise sowohl mit dem Rohr 111 als auch mit dem Rohr 112 mechanisch verbunden sein, beispielsweise nämlich derart, daß die vorbezeichnete Antriebskraft auf sowohl das Rohr 111 als auch das Rohr 112 wirkt. Nach einer weiteren Ausgestaltung der Erfindung ist der Schwingungserreger 31 eingerichtet, elektrische Leistung mit einem zeitlich veränderlichen elektrischen Strom so in mechanische Leistung zu wandeln, daß an einem mittels des Schwingungserregers 31 am damit mechanisch verbundenen zweiten Rohr gebildeten Antriebspunkt eine zeitlich veränderliche Antriebskraft auf das zweite Rohr wirkt, insb. nämlich zeitgleich und/oder entgegengesetzt zu der am mittels nämlichem Schwingungserreger 31 am damit mechanisch verbundenen Rohr 111 gebildeten Antriebspunkt auf das Rohr 111 wirkende Antriebskraft. Nach einer weiteren Ausgestaltung der Erfindung ist ferner vorgesehen, daß die Erregeranordnung, wie beispielsweise auch bei vibronischen konventionellen (Standard-)Meßsystemen üblich, außer dem Schwingungserreger 31 keinen weiteren mit dem Rohr verbunden Schwingungserreger aufweist.

Die Sensoranordnung des erfindungsgemäßen Meßsystems wiederum weist - wie auch in Fig. 2 schematisch dargestellt - einen, insb. elektrodynamischen oder optischen, ersten Schwingungssensor 41 sowie einen, insb. elektrodynamischen oder optischen, zweiten Schwingungssensor 42 auf. Jeder der, beispielsweise auch baugleichen, Schwingungssensoren 41, 42 ist jeweils am Rohr positioniert, insb. nämlich jeweils zumindest anteilig mit dem Rohr mechanisch verbunden, und zudem dafür eingerichtet, Schwingungsbewegungen des wenigstens Rohrs zu erfassen und in ein nämliche Schwingungsbewegungen repräsentierendes, beispielsweise elektrisches oder optisches, erstes bzw. zweites Schwingungsmeßsignal zu wandeln; dies im besonderen in der Weise, daß jedes der ersten und zweiten Schwingungsmeßsignale jeweils eine oder mehrere sinusförmige Signalkomponenten mit jeweils einer einer Schwingungsfrequenz von Schwingungsbewegungen des Rohrs entsprechenden Frequenz enthält. Nach einer weiteren Ausgestaltung der Erfindung ist ferner vorgesehen, daß jeder der Schwingungssensoren 41, 42 in Strömungsrichtung jeweils, insb. mehr als 10 mm und/oder mehr als ein Fünftel der Rohrlänge und/oder gleichweit, vom Schwingungserreger 31 beabstandet am Rohr positioniert ist; dies im besonderen, derart, daß die Schwingungssensoren 41, 42, wie auch bei konventionellen vibronischen (Standard-)Meßsystemen üblich, in Strömungsrichtung voneinander beabstandet am Rohr positioniert sind. Nach einer weiteren Ausgestaltung der Erfindung ist jeder der ersten und zweiten Schwingungssensoren 41, 42 jeweils mittels einer, beispielsweise eine Luftspule und einen Anker aufweisende, Tauchspule gebildet. Für den vorbezeichneten Fall, daß die Rohranordnung wenigstens zwei Rohre aufweist, kann jeder der Schwingungssensoren 41, 42 jeweils sowohl am ersten Rohr 111 als auch zweiten Rohr 112 positioniert, insb. nämlich sowohl anteilig mit dem ersten Rohr als auch anteilig mit dem zweiten Rohr mechanisch verbunden sein, und kann zudem jeder der Schwingungssensoren 41, 42 eingerichtet sein, Schwingungsbewegungen, insb. nämlich gegengleiche Schwingungsbewegungen, sowohl des ersten Rohrs als auch des zweiten Rohrs, insb. differenziell, zu erfassen und in das erste bzw. zweite Schwingungsmeßsignal zu wandeln, derart, daß jedes der Schwingungsmeßsignale, insb. gegengleiche, Schwingungsbewegungen der ersten und zweiten Rohre 111, 112 repräsentiert (Fig. 3); dies im besonderen auch für den vorgenannten Fall, daß es sich bei den Schwingungssensoren 41, 42 jeweils um nach Art einer Tauchspule aufgebaute elektrodynamische Schwingungssensoren handelt. Für den vorbezeichneten Fall, daß die Rohranordnung zwei Rohre aufweist, ist nach einer weiteren Ausgestaltung der Erfindung ist jeder der ersten und zweiten Schwingungssensoren sowohl am ersten Rohr als auch zweiten Rohr positioniert, beispielsweise nämlich sowohl anteilig mit dem ersten Rohr als auch anteilig mit dem zweiten Rohr mechanisch verbunden. Zudem ist jeder der ersten und zweiten Schwingungssensoren eingerichtet, Schwingungsbewegungen, beispielsweise nämlich gegengleiche Schwingungsbewegungen, sowohl des ersten Rohrs als auch des zweiten Rohrs zu erfassen und in das jeweilige erste bzw. zweite Schwingungsmeßsignal zu wandeln, derart, daß jedes der ersten und zweiten Schwingungsmeßsignale Schwingungsbewegungen der ersten und zweiten Rohre repräsentiert. Die Schwingungssensoren können im besonderen so ausgebildet sein, daß damit Schwingungsbewegungen, nicht zuletzt auch gegengleiche Schwingungsbewegungen der Rohre differenziell erfaßt werden und/oder daß jedes der ersten und zweiten Schwingungsmeßsignale jeweils gegengleiche Schwingungsbewegungen der ersten und zweiten Rohre repräsentiert.

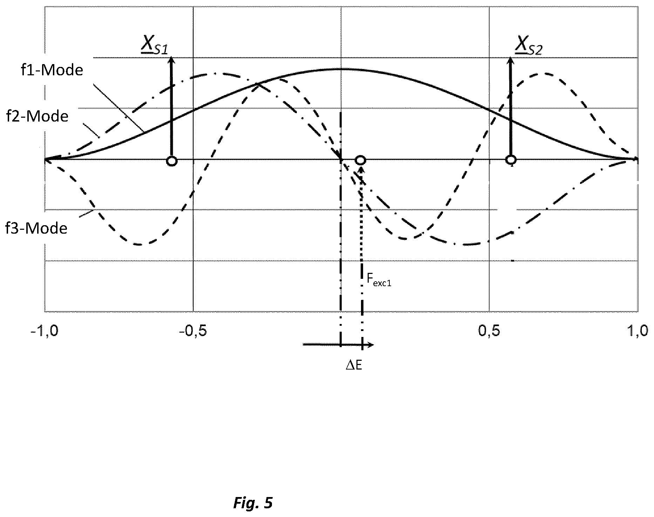

Dem wenigstens einen Rohr bzw. jedem der Rohre der Rohranordnung wohnt naturgemäß jeweils eine Vielzahl von jeweils eine zugehörige Resonanzfrequenz (f1, f2, ... , fx) aufweisenden Schwingungsmoden (Eigenschwingungsformen) inne, in denen das Rohr jeweils ein oder mehr Schwingungsbäuche (SB) und jeweils zwei oder mehr Schwingungsknoten (SK) aufweisende Schwingungsbewegungen ausführen kann bzw. ausführt, derart, daß die Anzahl der Schwingungsknoten gegenüber der Anzahl der zugehörigen Schwingungsbäuche jeweils genau um Eins größer ist. Schwingungsbewegungen des jeweiligen Rohrs in einer Grund-Schwingungsmode, nämlich einer Schwingungsmode erster Ordnung (f1-Mode), beispielsweise nämlich einer Biegeschwingungsmode erster Ordnung, weisen - wie auch in Fig. 5 angedeutet - genau einen Schwingungsbauch und dementsprechend zwei Schwingungsknoten auf (f1-Mode: 1SB, 2SK), während Schwingungsbewegungen des jeweiligen Rohrs in einer (von der Grund-Schwingungsmode abweichenden) Ober-Schwingungsmode, nämlich einer Schwingungsmode zweiter oder höherer Ordnung (f2-Mode, f3-Mode, f4-Mode, ... fx-Mode), beispielsweise nämlich eine Biegeschwingungsmode zweiter, dritter, vierter bzw. höherer Ordnung, dementsprechend zwei oder mehr Schwingungsbäuche und entsprechend drei oder mehr Schwingungsknoten aufweisen (f2-Mode: 2SB, 3SK, f3-Mode: 3SB, 4SK, f4-Mode: 4SB, 5SK,..., fx-Mode: x·SB, [x+1]·SK). Jede der vorbezeichneten Schwingungsmoden des Rohrs, mithin auch die Schwingungsmoden erster, zweiter bzw. dritter Ordnung (f1-Mode, f2-Mode, f3-Mode) weist dabei jeweils einen im ersten Rohrende des wenigstens einen Rohrs verorteten ersten Schwingungsknoten und einen im zweiten Rohrende des wenigstens einen Rohrs verorteten zweiten Schwingungsknoten auf (Fig. 5). Für den vorbezeichneten Fall, daß die Rohranordnung, zwei (oder mehr) Rohre aufweist, wohnt entsprechend auch dem zweiten Rohr 112 eine Vielzahl von jeweils eine zugehörige Resonanzfrequenz aufweisenden Schwingungsmoden inne, in denen das zweite Rohr (gleichermaßen wie das Rohr 111) jeweils ein oder mehr Schwingungsbäuche und jeweils zwei oder mehr Schwingungsknoten aufweisende Schwingungsbewegungen ausführen kann bzw. ausführt; dies beispielsweise auch derart, daß - bei einer entsprechenden Anregung - Schwingungsbewegungen des Rohrs 112 in der Schwingungsmode ersten Ordnung (f1-Mode) den Schwingungsbewegungen des Rohrs 111 in dessen Schwingungsmode erster Ordnung (f1-Mode) entgegengesetzt, beispielsweise auch gegengleich, sind und/oder daß - bei einer entsprechenden Anregung - Schwingungsbewegungen des Rohrs 112 in der Schwingungsmode zweiter Ordnung (f2-Mode) den Schwingungsbewegungen des Rohrs 111 in dessen Schwingungsmode zweiter Ordnung entgegengesetzt, beispielsweise nämlich auch gegengleich, sind. Nach einer weiteren Ausgestaltung der Erfindung ist die Rohranordnung ferner so ausgebildet, daß - zumindest bei ursprünglichem bzw. intaktem Meßwandler - eine Resonanzfrequenz f1 der Schwingungsmode erster Ordnung des Rohrs 111 gleich einer Resonanzfrequenz der Schwingungsmode erster Ordnung (f1-Mode) des Rohrs 112 ist und/oder daß - zumindest nominell, nämlich bei ursprünglichem bzw. intaktem Meßwandler - eine Resonanzfrequenz f2 der Schwingungsmode zweiter Ordnung des Rohrs 111 gleich einer Resonanzfrequenz der Schwingungsmode zweiter Ordnung des Rohrs 112 ist. Zudem kann die Rohranordnung für den vorbezeichneten Fall, daß die Rohranordnung zwei oder mehr Rohre aufweist und wie auch bei konventionellen vibronischen (Standard-)Meßsystemen durchaus üblich, ferner dem auch Einstellen von Schwingungseigenschaften der Rohranordnung, nicht zuletzt auch dem Abstimmen einer oder mehrerer Resonanzfrequenzen von deren Rohren, dienliche Kopplerelemente aufweisen; dies im besonderen in der Weise, daß, wie auch in Fig. 3 angedeutet, ein, beispielsweise plattenförmiges, erstes Kopplerelement 23 mit jedem von der Rohre mechanisch verbunden und vom Strömungsteiler 22 weiter entfernt als vom Strömungsteiler 21 positioniert ist, und daß wenigstens ein, beispielsweise plattenförmiges und/oder zum Kopplerelement 23 baugleiches, zweites Kopplerelement 24 mit jedem von deren Rohren mechanisch verbunden und vom Strömungsteiler 21 weiter entfernt als vom Strömungsteiler 22 positioniert ist.

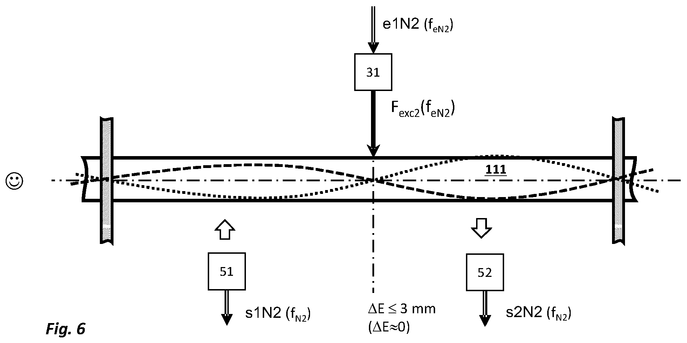

Beim erfindungsgemäßen Meßsystem ist der Schwingungserreger 31 so positioniert und ausgerichtet, daß - wie auch in Fig. 4a bzw. 6 schematisch dargestellt und u.a. auch bei herkömmlichen vibronischen (Standard-)Meßsystemen durchaus üblich - ein Antriebsversatz ΔE, nämlich ein kleinster Abstand zwischen der vorbezeichneten Antriebs-Querschnittsfläche des Rohrs 111 und einer vorgegebenen Referenz-Querschnittsfläche des wenigstens einen Rohrs nicht mehr als 3°mm und/oder weniger als 0,5% der Rohrlänge beträgt, wobei die Referenz-Querschnittsfläche wiederum so gewählt bzw. so festgelegt ist, beispielsweise nämlich bei intaktem bzw. ursprünglichem Meßwandler ermittelt ist, daß ein zwischen zwei Schwingungsbäuchen von Schwingungsbewegungen des wenigstens einen Rohrs in einer Ober-Schwingungsmode, beispielsweise nämlich der Schwingungsmode zweiter Ordnung, gebildeter und/oder (nominell) bei einer halben Rohrlänge verorteter Schwingungsknoten nämlicher Schwingungsbewegungen innerhalb der Referenz-Querschnittsfläche liegt. Der Antriebsversatz ΔE entspricht somit praktisch auch einem Abstand zwischen einem Flächenschwerpunkt (Mittelpunkt) der Antriebs-Querschnittsfläche des Rohrs und einem Flächenschwerpunkt (Mittelpunkt) der Referenz-Querschnittsfläche des wenigstens einen Rohrs. Nach einer weiteren Ausgestaltung der Erfindung ist die Referenz-Querschnittsfläche des wenigstens einen Rohrs zudem so gewählt, daß eine senkrecht zur vorbezeichneten Antriebskraft stehende Hauptträgheitsachse nämlichen Rohrs und/oder eine Schnittgeraden zweier zueinander orthogonaler Symmetrieebenen nämlichen Rohrs innerhalb der Referenz-Querschnittsfläche liegt. Zudem sind Rohranordnung und Erregeranordnung nach einer weiteren Ausgestaltung der Erfindung so ausgebildet, daß der Antriebsversatz ΔE - zumindest nominell bzw. initial, mithin bei intaktem bzw. ursprünglichem Meßwandler und wie u.a. auch bei herkömmlichen vibronischen (Standard-)Meßsystemen durchaus üblich - nur geringfügig größer als Null ist, nämlich weniger als 2 mm, beispielsweise auch weniger als 1 mm, und/oder weniger als 0,2% der Rohrlänge beträgt; im Falle idealer bzw. vollständig symmetrisch ausgebildeter Rohr- und Sensoranordnungen auch so, daß der Antriebsversatz gleich Null ist (ΔE = 0), mithin der Flächenschwerpunkt der Antriebs-Querschnittsfläche des Rohrs möglichst dem Flächenschwerpunkt der Referenz-Querschnittsfläche entspricht bzw. damit koinzidiert. Für den vorbezeichneten Fall, daß das wenigstens eine Rohr zumindest abschnittsweise gekrümmt, beispielsweise nämlich zumindest abschnittsweise kreisbogenförmig und/oder im wesentlichen V-förmig, ist, kann das wenigstens eine Rohr 111 ferner auch so ausgebildet und kann die vorbezeichneten Referenz-Querschnittsfläche so gewählt sein, daß genau eine Hauptträgheitsachse des wenigstens einen Rohrs innerhalb der Referenz-Querschnittsfläche nämlichen Rohrs liegt. Für den anderen Fall, daß das wenigstens eine Rohr über die gesamte Rohrlänge gerade ist, kann die vorbezeichneten Referenz-Querschnittsfläche wiederum so gewählt sein, daß jede der drei Hauptträgheitsachsen des wenigstens einen Rohrs innerhalb der Referenz-Querschnittsfläche des wenigstens einen Rohrs liegt bzw. daß ein Massenschwerpunkt innerhalb der Referenz-Querschnittsfläche des wenigstens einen Rohrs liegt. Nach einer weiteren Ausgestaltung der Erfindung ist die Referenz-Querschnittsfläche so gewählt, daß ein zwischen den zwei Schwingungsbäuchen der Schwingungsbewegungen des wenigstens einen Rohrs in der vorbezeichneten Schwingungsmode zweiter Ordnung, insb. nämlich der Biegeschwingungsmode zweiter Ordnung, gebildeter Schwingungsknoten nämlicher Schwingungsbewegungen und/oder eine senkrecht zur Schwingungsrichtung der Schwingungsbewegungen des Rohrs in nämlicher Schwingungsmode zweiter Ordnung stehende Hauptträgheitsachse des wenigstens einen Rohrs innerhalb der Referenz-Querschnittsfläche des wenigstens einen Rohrs liegt.

Wie bereits erwähnt umfaßt das Meßsystem zusätzlich zum Meßwandler 10 ein damit, insb. nämlich sowohl mit dessen Erregeranordnung als auch mit dessen Sensoranordnung elektrisch gekoppelte Meßsystem-Elektronik 20. Die Meßsystem-Elektronik 20 kann beispielsweise programmierbar und/oder fernparametrierbar ausgebildet, beispielsweise nämlich entsprechend mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Desweiteren kann die Meßsystem-Elektronik 20 mittels interner Energiespeicher und/oder von extern der Meßsystem-Elektronik 20 via Anschlußkabel mit der im Betrieb benötigten elektrischen Energie versorgt sein. Das elektrische Koppeln bzw. Anschließen des Meßwandlers 10 an die Meßsystem-Elektronik 20 kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein. Die Meßsystem-Elektronik 20 kann zudem - wie auch in Fig. 1 schematisch dargestellt - beispielsweise in einem entsprechenden, insb. schlag- und/oder auch explosionsfest und/oder zumindest gegen Spritzwasser schützenden, eigenen Elektronik-Schutzgehäuse 200 untergebracht und zudem so ausgelegt sein, daß sie im Betrieb des Meßsystems mit einem diesem übergeordneten (hier nicht dargestellten) elektronischen (Meß-)Datenverarbeitungssystem, beispielsweise einer speicherprogrammierbaren Steuerung (SPS), einem Prozeßleitsystem (PLS), einem Fernbdienungsteminal (RTU), oder einer auf einem Personalcomputer (PC) und/oder einer Workstation ausgeführten Überwachungssteuerung und Datenerfassung (SCADA), via Datenübertragungssystem, beispielsweise einem Feldbussystem und/oder drahtlos per Funk, Meß- und/oder andere Betriebsdaten, beispielsweise auch Statusmeldungen, austauschen kann, wie etwa jeweils aktuelle Meßwerte oder der Steuerung des Meßsystems dienende Einstell- und/oder Diagnosewerte (Fig. 2 bzw. 3). Dementsprechend kann die Meßsystem-Elektronik 20 beispielsweise eine solche Sende- und Empfangsschaltung COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Meßsystem-Elektronik 20 (bzw. deren vorbezeichnete Sende- und Empfangsschaltung COM zudem so ausgebildet sein, daß sie über eine, ggf. auch als 4-20 mA-Stromschleife konfigurierte Zweileiter-Verbindung 2L mit dem vorbezeichneten externen elektronischen Datenverarbeitungssystem elektrisch verbindbar ist und darüber sowohl die für den Betrieb des Meßsystems erforderliche elektrische Leistung von der vorbezeichneten Auswerte- und Versorgungseinheit des Datenverarbeitungssystems beziehen als auch, ggf. digitalisierte Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Meßsystem-Elektronik 20 auch so ausgebildet sein, daß sie nominell mit einer maximalen Leistung von 1 W oder weniger betrieben werden kann und/oder eigensicher ist. Die Meßsystem-Elektronik 20 kann zudem beispielsweise auch modular aufgebaut sein, derart, daß diverse Elektronik-Komponenten der Meßsystem-Elektronik 20, wie etwa eine, beispielsweise mittels eines oder mehrerer Mikroprozessoren und/oder mittels eines oder mehrerer digitaler Signalprozessoren gebildete, Meß- und Auswerteschaltung DSV zum Verarbeiten und Auswerten der vom Meßwandler 10 bereitgestellten Meßsignalen, nicht zuletzt den Schwingungsmeßsignalen, eine Treiberschaltung Exc zum Ansteuern des Meßwandlers 10 bzw. dessen Erregeranordnung, eine interne Energieversorgungsschaltung VS zum Bereitstellen einer oder mehrerer interner Betriebsspannungen und/oder die vorbezeichnete, der Kommunikation mit dem vorbezeichneten übergeordneten (Meß-)Datenverarbeitungssystem bzw. dem vorbezeichneten externen Feldbus dienliche Sende- und Empfangsschaltung COM, jeweils auf einer oder mehreren eigenen Leiterplatten angeordnet und/oder jeweils mittels eines oder mehreren eigenen Mikroprozessoren gebildet sind. Wie aus der Fig. 2 bzw. 3 jeweils ersichtlich, kann die vorbezeichnete Sende- und Empfangsschaltung COM beispielsweise auch für eine der Ausgabe (xₘ) von, beispielsweise von der vorbezeichneten Meß- und Steuerschaltung DSV, Meßsystem intern ermittelten Meßwerten (X_{M}) vorgesehen sein. Dementsprechend kann die Sende- und Empfangsschaltung COM zudem eingerichtet sein, empfangene Meßwerte X_{M} in ein nämliche Meßwerte X_{M} bereitstellendes, beispielsweise zu einem Industriestandard, beispielsweise nämlich der DIN IEC 60381-1:1985-11, der IEC 61784-1 CPF1 (Foundation Fieldbus), der IEC 61784-1 CPF3 (Profibus), IEC 61158 oder der IEC 61784-1 CPF9 (HART), konformes, Ausgabesignal xₘ zu wandeln. Zum Visualisieren von Meßsystem intern erzeugten Meßwerten (X_{M}) und/oder Meßsystem intern generierten Statusmeldungen, wie etwa eine Fehlermeldung oder einen Alarm, vor Ort kann das Meßsystem desweiteren ein, zumindest zeitweise auch mit der Meßsystem-Elektronik 20 kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. Für den Fall, daß der Meßsystem das vorbezeichnete, zumal als Wandler-Schutzgehäuse ausgebildtes Trägergerüst 100 aufweist, kann das Elektronik-Schutzgehäuse 200, wie auch in Fig. 1, 2 und 3 jeweils schematisch dargestellt bzw. aus deren Zusammenschau ohne weiteres ersichtlich, beispielsweise an nämlichen Trägergerüst befestigt sein.

Beim erfindungsgemäßen Meßsystem ist die Meßsystem-Elektronik 20 im besonderen dafür eingerichtet, den Schwingungserreger 31 zu bestromen, nämlich mittels eines einen zeitlich veränderlichen elektrischen Strom aufweisenden elektrischen Treibersignals e1 elektrische Leistung in den Schwingungserreger 31 einzuspeisen, derart, daß das wenigstens eine Rohr erzwungene mechanische Schwingungen, beispielsweise nämlich Biegeschwingungen, mit einer oder mehreren durch das Treibersignal e1 vorgegebenen Schwingungsfrequenzen ausführt. Zudem ist die Meßsystem-Elektronik 20 eingerichtet, das Treibersignal e1 zumindest zeitweise, beispielsweise nämlich im normalen Meßbetrieb bzw. während eines Meßintervalls, mit einem eine erste (Wechselstrom-)Frequenz f_{eN1} aufweisenden sinusförmigen ersten (Nutz-)Strom eN1 bereitzustellen, derart, daß das wenigstens eine Rohr zumindest anteilig, beispielsweise auch überwiegend, erste Nutzschwingungen, nämlich durch den (mit dem (Nutz-)Strom eN1 bestromten) Schwingungserreger 31 bzw. eine damit generierte erste Antriebskraft-(Komponente) F_{exc1} erzwungene mechanische Schwingungen mit einer ersten Nutzfrequenz f_{N1}, nämlich einer der ersten (Wechselstrom-)Frequenz f_{eN1} (f_{N1} = f_{eN1}) entsprechenden (Schwingungs-)Frequenz ausführt und daß daraus resultierend das Schwingungssignal s1 eine erste Nutz-Signalkomponente s1N1 und das Schwingungssignal s2 eine erste Nutz-Signalkomponente s2N1, nämlich jeweils eine sinusförmige Signalkomponente mit einer der ersten Nutzfrequenz f_{N1} entsprechenden (Signal-)Frequenz f_{s1N1} bzw. f_{s2N1} (f_{s1N1} = f_{s2N1} = f_{N1}) aufweist; dies im besonderen in der Weise, daß die erste Nutzfrequenz f_{N1} von einer Resonanzfrequenz f2 der Schwingungsmode zweiter Ordnung (f2-Mode) um mehr als 5% nämlicher Resonanzfrequenz f2 (|f2 - f_{N1}| > 0,05 f2) und/oder um mehr als 10 Hz (|f2 - f_{N1}| > 10 Hz abweicht und/oder in der Weise, daß die ersten Nutzschwingungen geeignet sind, im durch das wenigstens eine Rohr bzw. die damit gebildete Rohranordnung strömenden Meßstoff von dessen Massestrom abhängige Corioliskräfte F_{c} zu bewirken. Dementsprechend kann die Meßsystem-Elektronik ferner eingerichtet sein, den ersten (Nutz-)Strom eN1 des Treibersignals, wie bei vibronischen Meßsystemen der in Rede stehenden Art durchaus üblich, so einzustellen, daß aufgrund der damit angeregten ersten Nutz-Schwingungen auch vom Massenstrom abhängige Coriolisschwingungen erzwungen werden und im Ergebnis dessen die Nutz-Signalkomponenten s1N1; s2N1 der Schwingungsmeßsignale s1, s2 einer Änderung eines Massenstromes des im wenigsten einen Rohr geführten Meßstoffs mit einer Änderung einer Phasendifferenz der ersten Nutz-Signalkomponenten der Schwingungsmeßsignale s1, s2, nämlich einer Differenz zwischen einem Phasenwinkel der ersten Nutz-Signalkomponente s1N1 und einem Phasenwinkel der ersten Nutz-Signalkomponente s2N1 folgen. Für den vorbezeichneten Fall, daß die Rohranordnung wenigstens zwei Rohre aufweist, kann der Schwingungserreger 31 zudem entsprechend auch eingerichtet sein, mittels des elektrischen Treibersignals e1 eingespeiste elektrische Leistung zeitgleich in erzwungene mechanische Schwingungen der ersten und zweiten Rohre 111, 112 zu wandeln; dies insbesondere auch in der Weise, daß die ersten und zweiten Rohre 111, 112 erzwungene mechanische Schwingungen mit der ersten Nutzfrequenz f_{N1} simultan, beispielsweise nämlich gegengleiche Schwingungen, ausführen. Für den vorbezeichneten Fall, daß der Schwingungserreger 31 mittels einer elektrisch an die Meßsystem-Elektronik angeschlossenen Spule gebildet ist, bedeutet bestromen des Schwingungserregers 31, daß die Spule das Treibersignal e1 empfängt, nämlich dessen Strom führt.

Die vorbezeichnete (Wechselstrom-)Frequenz f_{eN1} der Nutz-Stromkomponenten eN1, mithin die erste Nutzfrequenz f_{N1} kann beispielsweise einer auch von der Dichte des in der Rohranordnung geführten Meßstoffs FL abhängigen Resonanzfrequenz der Rohranordnung - beispielsweise nämlich einer niedrigsten Resonanzfrequenz des Rohrs 111 bzw. der Resonanzfrequenz f1 der Grund-Schwingungsmode (f1-Mode) - entsprechen. Dementsprechend ist Meßsystem-Elektronik 20 nach einer weiteren Ausgestaltung der Erfindung ferner eingerichtet, die erste (Wechselstrom-)Frequenz f_{eN1} so einzustellen, daß nämliche (Wechselstrom-)Frequenz f_{eN1} bzw. die Nutzfrequenz f_{N1} von der Resonanzfrequenz f1 der Grund-Schwingungsmode um weniger als 1% nämlicher Resonanzfrequenz f1 (|f1 - f_{N1}| < 0,01 f1) und/oder um weniger als 1 Hz (|f1 - f_{N1}| < 1 Hz) abweicht, beispielsweise nämlich der Resonanzfrequenz f1 der Grund-Schwingungsmode (f1-Mode) entspricht, bzw. daß im Ergebnis die Schwingungsbewegungen der ersten Nutzschwingungen denen der Grund-Schwingungsmode (f1-Mode) des wenigstens einen Rohrs 111 entsprechen. Nach einer anderen Ausgestaltung der Erfindung ist die Meßsystem-Elektronik dafür eingerichtet, die erste (Wechselstrom-)Frequenz f_{eN1} so einzustellen, daß nämliche (Wechselstrom-)Frequenz f_{eN1} bzw. die Nutzfrequenz f_{N1} von einer Resonanzfrequenz f3 der Schwingungsmode dritter Ordnung (f3-Mode) um weniger als 1% nämlicher Resonanzfrequenz f3 (|f3 - f_{N1}| < 0,01 f3) und/oder um weniger als 1 Hz (|f3 -f_{N1}| < 1 Hz) abweicht, beispielsweise nämlich der Resonanzfrequenz f3 der Schwingungsmode dritter Ordnung (f3-Mode) entspricht, bzw. daß im Ergebnis die Schwingungsbewegungen der ersten Nutzschwingungen also denen der Schwingungsmode dritter Ordnung (f3-Mode) des wenigstens einen Rohrs 111 entsprechen. Zum Generieren des Treibersignals e1 kann die Meßsystem-Elektronik 20 - wie bei derartigen Meßsystemen durchaus üblich - eine entsprechende, beispielsweise mittels einer oder mehreren dem Ermitteln jeweils einer Resonanzfrequenz bzw. dem Einstellen der momentan benötigten (Wechselstrom-)Frequenz dienlichen Phasenregelschleifen (PLL - phase locked loop) gebildete, Treiberschaltungen Exc aufweisen.

Die Meßsystem-Elektronik 20 ist, wie bereits angedeutet, ferner im besonderen auch dafür vorgesehen, die mittels des Meßwandlers 10 generierten Schwingungsmeßsignale s1, s2 zu empfangen und auszuwerten, insb. nämlich die wenigstens eine Meßgröße repräsentierende Meßwerte X_{M} zu ermitteln und auszugeben. Im besonderen ist die Meßsystem-Elektronik 20 dafür eingerichtet, anhand zumindest der ersten Nutz-Signalkomponenten s1N1, s2N1, beispielsweise nämlich anhand von deren (Signal-)Frequenz und/oder anhand von einer Amplitude wenigstens einer der Nutz-Signalkomponenten s1N1, s2N1 und/oder anhand von einem Phasenwinkel wenigstens einer der Nutz-Signalkomponenten s1N1 bzw. s2N1, die wenigstens eine Meßgröße repräsentierende Meßwerte zu ermitteln, beispielsweise nämlich den Massenstrom des Meßstoffs repräsentierende Massenstrom-Meßwerte und/oder die Dichte des Meßstoffs repräsentierende Dichte-Meßwerte zu generieren; dies beispielsweise auch in einer bei Meßsystemen der in Rede stehenden Art, nicht zuletzt auch in für die aus den eingangs erwähnten US-A 2006/0266129, der US-A 2007/0113678, der US-A 2010/0011882, der US-A 2012/0123705, der US-A 2017/0356777, der US-A 56 02 345, der US-A 59 26 096, der WO-A 2009/136943, der WO-A 2019/017891, der WO-A 2019/081169, der WO-A 2019/081170, der WO-A 87/06691, der WO-A 96/05484, der WO-A 96/08697, der WO-A 97/26508, der WO-A 99/39164 oder der eigenen nicht vorveröffentlichten internationalen Patentanmeldung PCT/EP2019/082044 bekannten Meßsystemen typischen Weise. Nach einer weiteren Ausgestaltung der Erfindung ist die Meßsystem-Elektronik 20 dementsprechend ferner eingerichtet, anhand der vorbezeichneten Phasendifferenz der ersten Nutz-Signalkomponenten s1N1; s2N1 den Massenstrom repräsentierende Massenstrom-Meßwerte zu generieren, beispielsweise mittels einer in die Meßsystem-Elektronik einprogrammierten Phasendifferenz-zu-Massenstrom-Meßwert-Kennlinienfunktion, nämlich einer, ggf. auch als (lineare) Parameterfunktion ausgebildete Kennlinienfunktion des Meßsystem-Elektronik, gemäß der damit eine ermittelte Phasendifferenz in Massenstrom-Meßwerte Xₘ umgerechnet werden. Nach einer weiteren Ausgestaltung der Erfindung ist die Meßsystem-Elektronik 20 ist die Meßsystem-Elektronik zudem eingerichtet, ein die Resonanzfrequenz f1 der ersten Schwingungsmode (f1-Mode) des wenigstens einen Rohrs zu ermitteln, beispielsweise nämlich anhand des Treibersignals e1 und/oder wenigstens eines der Schwingungsmeßsignale s1, s2 die Resonanzfrequenz f1 repräsentierende Frequenzwerte X_{f1} zu ermitteln; dies beispielsweise auch, um anhand von solchen Frequenzwerten die Dichte repräsentierende Dichte-Meßwerte X_{ρ} zu berechnen, etwa gemäß einer entsprechenden Resonanzfrequenz-zu-Dichte-Meßwert-Kennlinienfunktion der Meßsystem-Elektronik. Alternativ oder in Ergänzung kann die Meßsystem-Elektronik 20 auch dafür vorgesehen bzw. eingerichtet sein, anhand wenigstens eines der Schwingungsmeßsignale s1, s2, und/oder des Treibersignals e1 Viskositäts-Meßwerte, nämlich die Viskosität des Meßstoffs FL repräsentierende Meßwerte zu generieren, beispielsweise gemäß einer Dämpfung-zu-Viskosität-Meßwert-Kennlinienfunktion der Meßsystem-Elektronik. Die Verarbeitung der Schwingungsmeßsignale s1, s2, ggf. auch ein bei derartigen Meßsystemen durchaus übliches Ansteuern der vorbezeichneten Treiberschaltung(en) Exc kann - wie auch in Fig. 2 bzw. 3 jeweils schematisch dargestellt - beispielsweise auch mittels der vorbezeichneten Meß- und Auswerteschaltung DSV erfolgen.

Die im Betrieb des Meßsystems in der Meßsystem-Elektronik 20, beispielsweise nämlich in einem oder mehreren der vorbezeichneten Mikroprozessoren bzw. digitalen Signalprozessoren der Meßsystem-Elektronik 20, ausgeführten Programm-Codes können jeweils z.B. in einem oder mehreren nicht flüchtigen, nämliche digitale Daten auch ohne eine angelegte Betriebsspannung, vorzuhaltenden Datenspeichern (EEPROM) der Meßsystem-Elektronik 20 persistent gespeichert sein und beim Starten derselben in einen in der Meßsystem-Elektronik 20 bzw. der vorbezeichneten Meß- und Auswerteschaltung DSV vorgesehenen, z.B. im Mikroprozessor integrierten, flüchtigen Datenspeicher (RAM) geladen werden. Die Schwingungsmeßsignale s1, s2 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung jedes der - hier elektrischen- Schwingungsmeßsignale s1, s2 jeweils geeignete digitalisiert wird, vgl. hierzu beispielsweise die eingangs erwähnten US-B 63 11 136. Dementsprechend können in der Meßsystem-Elektronik 20, beispielsweise nämlich in der vorbezeichneten Meß- und Auswerteschaltung DSV, entsprechende Analog-zu-Digital-Wandler für die Schwingungsmeßsignale s1, s2 und/oder wenigstens ein nicht flüchtiger elektronischer Datenspeicher EEPROM vorgesehen sein, der dafür eingerichtet ist, digitale Daten, beispielsweise nämlich auch ohne eine angelegte Betriebsspannung, vorzuhalten. Zur weiteren Verbesserung der Genauigkeit mit der die Meßwerte X_{M} schlußendlich ermittelt werden, kann der Meßwandler - wie auch in Fig. 2 bzw. 3 jeweils schematisch dargestellt und wie bei solchen Meßsystemen durchaus üblich - ferner auch dem Erfassen von Temperaturen innerhalb der Rohranordnung und dem Bereitstellen eines oder mehrerer dementsprechender Temperaturmeßsignale θ1 (θ1, θ2) dienliche, beispielsweise jeweils direkt am wenigstens einen Rohre der Rohranordnung angebrachte, Temperatursensoren 71 (71, 72) und/oder eine dem Erfassen von mechanischen Spannungen innerhalb der Rohranordnung und dem Bereitstellen von eines oder mehrerer dementsprechender Dehnungsmeßsignalen dienliche, beispielsweise jeweils direkt an einem der Rohre der Rohranordnung angebrachte, Dehnungssensoren aufweisen und kann die Meßsystem-Elektronik ferner eingerichtet sein, die Temperatur- bzw. Dehnungsmeßsignale zu empfangen und zu verarbeiten, insb. nämlich bei der Ermittlung der Meßwerte mit zu verwenden.

Wie bereits erwähnt, kann der Meßstoff bzw. dessen (Meßstoff-)Qualität während des Betriebs in erheblichem Maße zeitlich ändern bzw. erheblichen Schwankungen unterworfen sein; dies im besonderen auch in der Weise, daß sich die Schwingungseigenschaften des wenigstens einen den Meßstoff führenden Rohrs aufgrund von Abweichungen der (Meßstoff-)Qualität von einer dafür vorgegebenen Spezifikation in einem die Meßgenauigkeit signifikant verringerndem Ausmaß ändern. Änderungen der Schwingungseigenschaften des wenigstens einen Rohrs können beispielsweise auf Änderungen einer oder mehrerer durch die Qualität des Meßstoffs bestimmter modaler, nämlich jeweils eine der vorbezeichneten Schwingungsmoden bestimmender Masse und/oder Dämpfung bzw. deren jeweilige Verteilung zurückzuführen sein und darin resultieren, daß die (Eigen-)Schwingungsformen einer oder mehrerer der Schwingungsmoden des wenigstens einen Rohrs von deren jeweiligen Pendant bei normalem, nämlich eine innerhalb der Spezifikation liegende (Meßstoff-)Qualität aufweisenden Meßstoff signifikant abweichen; dies regelmäßig auch derart, daß eine bei normalem Meßstoff vorliegende - typischerweise im wesentlichen homogene bzw. gleichmäßige - Dichte und Viskosität des Meßstoffs zunehmend ungleichmäßiger verteilt sind und im Ergebnis die vorbezeichneten (System-)Parameter modale Masse und modale Dämpfung eines oder mehrerer der Schwingungsmoden entsprechend verändert werden. Infolgedessen führen Änderungen der Qualität des Meßstoffs nicht nur dazu, daß sich die Resonanzfrequenz einer oder mehrerer der vorbezeichneten Schwingungsmoden ändern, sondern können solche Änderungen regelmäßig auch dazu führen, daß die Form der Schwingungsbewegungen der jeweiligen Schwingungsmoden Änderungen unterworfen ist, derart, daß die Lage eines oder mehrerer der jeweils zwischen zwei Schwingungsbäuchen von Schwingungsbewegungen des wenigstens einen Rohrs in einer oder mehrerer von dessen Ober-Schwingungsmoden verorteten Schwingungsknoten, mithin auch die die Lage der vorbezeichneten Referenz-Querschnittsfläche relativ zu ihrer jeweiligen ursprünglichen Lage und/oder zu den Schwingungsknoten verändert wird. Entsprechend erfährt auch der relativ zur Referenz-Querschnittsfläche bzw. den Schwingungsknoten bestimmte Antriebsversatz Änderungen, beispielsweise derart, daß der Antriebsversatz im Vergleich zu dem bei normalem Meßstoff vorliegenden Antriebsversatz ΔE zunimmt. Beispiele für solche Schwankungen der (Meßstoff-)Qualität bzw. Abweichungen der (Meßstoff-)Qualität von der (Meßstoff-)Spezifikation können eine zeitlich ändernde Beladung des Meßstoffs mit einem Fremdstoff, wie z.B. Feststoffpartikel und/oder Gasblasen in einer Flüssigkeit, eine Bildung von Kondensat in einem gasförmigen Meßstoff, ein Ausgasen eines flüssigen Meßstoffs oder im Falle eines als Dispersion ausgebildeten Meßstoffs eine sich zeitlich ändernde Konzentration einzelner Phasen und/oder Komponenten des Meßstoffs und/oder eine gelegentliche Entmischung (Segregation) von Komponenten des Meßstoffs sein.

Von solchen Änderungen der (Meßstoff-)Qualität bzw. Abweichungen der (Meßstoff-)Qualität von der Spezifikation betroffene Systemfunktionen können beispielsweise einer oder mehreren für die Messung der wenigstens einen Meßgröße relevanten (modalen) Schwingungsantworten der Rohranordnung, beispielsweise nämlich einer funktionellen Abhängigkeit einer Amplitude der vorbezeichneten Nutzschwingungen vom Treibersignal bzw. einer funktionellen Abhängigkeit einer Amplitude der vorbezeichneten Coriolisschwingungen vom Treibersignal und Massestrom, entsprechen. Als Beispiele für solche Systemfunktionen des Meßwandlers können dementsprechend etwa eine Massenstrom-zu-Phasendifferenz-Systemfunktion, nämlich eine Systemfunktion des Meßwandlers, gemäß der die vorbezeichnete Phasendifferenz der ersten Nutz-Signalkomponenten der Schwingungsmeßsignale vom Massenstrom abhängig ist, eine oder mehrere Resonanzfrequenzen der Rohranordnung als (System-)Parameter enthaltende Systemfunktionen, wie etwa eine Dichte-zu-Resonanzfrequenz-Systemfunktion, beispielsweise nämlich eine Systemfunktion des Meßwandlers, gemäß der die vorbezeichnete Resonanzfrequenz f1 von der Dichte abhängig ist, oder Dämpfungen von Schwingungen als (System-)Parameter enthaltende Systemfunktionen, wie etwa eine Viskoistät-zu-Dämpfung-Funktion, beispielsweise nämlich eine Systemfunktion des Meßwandlers, gemäß der eine Dämpfung der ersten Nutzschwingungen von der Viskosität abhängig ist, aufgeführt werden. Betroffen können dementsprechend aber auch eine oder mehrere Meßfunktionen des Meßsystems sein, gemäß der das Meßsystem letztlich die jeweils zu erfassenden Meßgröße in die jeweiligen Meßwerte konvertiert, die auf einer oder mehreren der vorbezeichneten Systemfunktionen des Meßwandlers basieren. Als Beispiele für solche Meßfunktionen des Meßsystems können u.a. eine die Massenstrom-zu-Phasendifferenz- Systemfunktion sowie die vorbezeichnete Phasendifferenz-zu-Massenstrom-Meßwert-Kennlinienfunktion der Meßsystem-Elektronik involvierende Massenstrom-zu-Meßwert-Funktion, nämlich eine Meßfunktion des Meßsystems, gemäß der damit ermittelte Massenstrom-Meßwerte vom Massenstrom abhängig sind, und/oder eine die vorbezeichnete Dichte-zu-Resonanzfrequenz-Systemfunktion des Meßwandlers sowie die vorbezeichnete Resonanzfrequenz-zu-Dichte-Meßwert-Kennlinienfunktion der Meßsystem-Elektronik involvierende Dichte-zu-Meßwert-Funktion des Meßsystems, und/oder auch eine die vorbezeichnete Viskoistät-zu-Dämpfung-Systemfunktion des Meßwandlers sowie die vorbezeichnete Dämpfung-zu-Viskosität-Meßwert-Kennlinienfunktion Meßsystem-Elektronik involvierende Viskosität-zu-Meßwert-Kennlinienfunktion des Meßsystems genannt werden. Die in Rede stehenden Änderungen der (Meßstoff-)Qualität bzw. Abweichungen der (Meßstoff-)Qualität von der Spezifikation können insbesondere auch dazu führen, daß ein oder mehrere Systemfunktionen bzw. eine entsprechende Meßfunktion charakterisierende (System-)Parameter, beispielsweise ein (Skalen-)Nullpunkt und/oder eine auf eine Änderung des Massenstroms bezogene Änderung der Phasendifferenz der ersten Nutz-Signalkomponenten entsprechen (Meß-)Empfindlichkeit (Steigung der Kennlinienfunktion) der vorbezeichneten Phasendifferenz-zu-Massenstrom-Meßwert-Kennlinienfunktion, entsprechenden zeitlichen Änderungen unterliegen, beispielsweise nämlich entsprechende Fluktuationen aufweisen, und daß im Ergebnis eine Meßgenauigkeit des Meßsystems, mit der dieses die zu erfassenden Meßgröße in die entsprechenden Meßwerte schlußendlich abbildet, gegenüber einer Meßgenauigkeit des Meßsystems bei normallen Meßstoff signifikant verringert ist.

Um allfällige Veränderungen der Qualität des Meßstoffs bzw. deren Abweichung von der Spezifikation möglichst frühzeitig und möglichst verläßlich erkennen und ggf. vermelden zu können, ist daher ferner vorgesehen, die Rohranordnung mittels der Erregeranordnung aktiv zu mechanischen Schwingungen anzuregen, derart, daß das wenigstens eine Rohr Schwingungen ausführt, die der vorbezeichneten Schwingunsgmode zweiter Ordnung (f2-Mode) entsprechen, sowie die daraus resultierenden Schwingungsmeßsignale mittels der Meßsystem-Elektronik 20 entsprechend auszuwerten, insb. nämlich auf ein unzulässige Veränderung der Qualität des Meßstoffs hin zu untersuchen; dies im besonderen in der Weise, daß nämliche der Schwingungsmode zweiter Ordnung (f2-Mode) entsprechenden Schwingungen nicht-flüchtig bzw. stationär sind, nämlich für zwei oder mehr Schwingungsperioden und/oder einen Zeitraum von mehr als 10 ms (Millisekunden) eine (im wesentlichen) gleichbleibende, von Null verschiedene Schwingungsamplitude aufweisen. Dafür ist die Meßsystem-Elektronik 20 des erfindungsgemäßen Meßsystems ferner eingerichtet, zumindest zeitweise das Treibersignal e1 mit einem eine - von der ersten (Wechselstrom-)Frequenz f_{eN1} um beispielsweise mehr als 10 Hz abweichenden - zweite (Wechselstrom-)Frequenz f_{eN2} aufweisenden sinusförmigen zweiten (Nutz-)Strom eN2 bereitzustellen, derart, daß das wenigstens eine Rohr 111 zumindest anteilig (von den ersten Nutzschwingungen verschiedene) zweite Nutzschwingungen, nämlich durch den (mit dem (Nutz-)Strom eN2 bestromten) Schwingungserreger 31 bzw. eine damit generierte zweite Antriebskraft-(Komponente) F_{exc2} bestromten Schwingungserreger 31 erzwungene mechanische Schwingungen mit einer zweiten Nutzfrequenz f_{N2}, nämlich einer der zweiten (Wechselstrom-)Frequenz f_{eN2} entsprechenden (Schwingungs-)Frequenz ausführt (f_{N2} = f_{eN2}), wodurch jedes der ersten und zweiten Schwingungssignale s1, s2, jeweils eine zweite Nutz-Signalkomponente s1N2 bzw. s2N2, nämlich eine sinusförmige Signalkomponente mit einer der zweiten Nutzfrequenz f_{N2} entsprechenden (Signal-)Frequenz f_{s1N2} bzw. f_{s2N2} (f_{s1N2} = f_{s2N2} = f_{N2}) aufweist. Nach einer weiteren Ausgestaltung der Erfindung ist die Meßsystem-Elektronik 20 ferner eingerichtet, den vorbezeichneten zweiten (Nutz-)Stroms (eN2) mit einer vorgegebenen (Strom-)Amplitude bereitzustellen.

Beim erfindungsgemäßen Meßsystem ist die Meßsystem-Elektronik 20 zudem im besonderen dafür eingerichtet, die zweite (Wechselstrom-)Frequenz f_{eN2} so einzustellen, daß sie von einer Resonanzfrequenz f2 der Schwingungsmode zweiter Ordnung (f2-Mode) des wenigstens einen Rohrs 111 um weniger als 1% (|f2 - f_{N2}| < 0,01 f2), beispielsweise auch um weniger als 0,1 %, nämlicher Resonanzfrequenz f2, und/oder um weniger als 1 Hz (|f1 - f_{N2}| < 1 Hz), beispielsweise auch um weniger als 0,1 Hz, abweicht; dies im besonderen auch in der Weise, daß die (Wechselstrom-)Frequenz f_{eN2} der Resonanzfrequenz f2 der Schwingungsmode zweiter Ordnung (f2-Mode) entspricht (f_{eN2} = f2).

Für den vorbezeichneten Fall, daß die Rohranordnung wenigstens zwei Rohre aufweist, kann der Schwingungserreger 31 zudem entsprechend auch eingerichtet sein, mittels des elektrischen Treibersignals e1 eingespeiste elektrische Leistung so in erzwungene mechanische Schwingungen der ersten und zweiten Rohre 111, 112 zu wandeln, derart, daß die ersten und zweiten Rohre 111, 112 erzwungene mechanische Schwingungen mit der zweiten Nutzfrequenz, beispielsweise nämlich erzwungene mechanische Schwingungen mit der ersten Nutzfrequenz f_{N1} und mit der zweiten Nutzfrequenz f_{N2}, simultan ausführen. Dementsprechend ist die Meßsystem-Elektronik 20 nach einer weiteren Ausgestaltung der Erfindung ferner auch eingerichtet, den zweiten Nutzstrom e1N2 des Treibersignals e1 zumindest zeitweise auch simultan mit dem ersten (Nutz-)Strom e1N1 bereitzustellen; dies beispielsweise auch derart, daß die (Strom-)Amplitude des ersten (Nutz-)Stroms e1N1 nicht kleiner als die (Strom-)Amplitude des zweiten (Nutz-)Stroms e1N2 eingestellt ist und/oder daß die (Strom-)Amplitude des zweiten (Nutz-)Stroms e1N2 auf mehr als 40 %, beispielsweise nicht weniger als 50%, die (Strom-)Amplitude des ersten (Nutz-)Stroms e1N1 eingestellt ist.

Alternativ oder in Ergänzung ist die Meßsystem-Elektronik ferner eingerichtet, die zweite (Wechselstrom-)Frequenz f_{eN2} in Abhängigkeit von der ersten (Wechselstrom-)Frequenz f_{eN1} bzw. in Abhängigkeit von der Resonanzfrequenz f1 einzustellen; dies beispielsweise derart, daß die zweite (Wechselstrom-)Frequenz f_{eN2} innerhalb eines Frequenzeinstellintervall liegt, von dem eine obere Intervallgrenze und/oder eine untere Intervallgrenze und/oder eine Mittenfrequenz einem vorgegebenen Vielfachen der ersten (Wechselstrom-)Frequenz f_{eN1} entspricht, beispielsweise nämlich einem mehr als 230 % der ersten (Wechselstrom-)Frequenz f_{eN1} und/oder weniger als 300 % der ersten (Wechselstrom-)Frequenz f_{eN1} entsprechenden Vielfachen der ersten (Wechselstrom-)Frequenz f_{eN1}. Nach einer weiteren Ausgestaltung der Erfindung weist die Meßsystem-Elektronik ferner eine dem Einstellen der (Wechselstrom-)Frequenz f_{eN1} dienliche, beispielsweise auch digitale, erste Phasenregelschleife PLL1 sowie eine dem Einstellen der (Wechselstrom-)Frequenz f_{eN2} dienliche, beispielsweise digitale, zweite Phasenregelschleife PLL2 auf. Zudem kann die Meßsystem-Elektronik 20 ferner eingerichtet sein, einen Fangbereich der zweiten Phasenregelschleife PLL2 anhand der ersten (Wechselstrom-)Frequenz f_{eN1} bzw. mittels wenigstens eines Ausgangssignals der ersten Phasenregelschleife PLL1, beispielsweise nämlich einem Ausgangssignal eines Schleifenfilters der ersten Phasenregelschleife PLL1, einzustellen.

Die Meßsystem-Elektronik 20 des erfindungsgemäßen Meßsystems ist zudem auch dafür eingerichtet, anhand bzw. durch Auswerten wenigstens einer der zweiten Nutz-Signalkomponenten s1N2, s2N2, beispielsweise anhand von deren (Signal-)Frequenz und/oder anhand von einer (Signal-)Amplitude wenigstens einer der zweiten Nutz-Signalkomponenten s1N2, s2N2 und/oder anhand von einem Phasenwinkel wenigstens einer der zweiten Nutz-Signalkomponente s1N2, s2N2, die Qualität des Meßstoffs zu überwachen, beispielsweise nämlihc festzustellen, ob und/oder inwieweit eine Störung des Meßstoffs vorliegt. Nach einer weiteren Ausgestaltung der Erfindung ist die Meßsystem-Elektronik 20 eingerichtet, anhand der wenigstens einen der zweiten Nutz-Signalkomponenten s1N2, s2N2 festzustellen, ob und/oder inwieweit eine Schwingungseigenschaften der Schwingungsmode zweiter Ordnung beeinflussende Störung des Meßstoffs, nämlich eine unerwünschte Änderung eines oder mehrerer Stoffparameter des Meßstoffs vorliegt, beispielsweise nämlich festzustellen, ob eine Störung des Meßstoffs infolge einer (unerwünschte) Segregation des Meßstoffs und/oder infolge einer (unerwünschten) Belastung des Meßstoffs durch einen oder mehrerer Fremdstoffe. Darüberhinaus kann die Meßsystem-Elektronik 20 ferner auch eingerichtet sein, anhand der wenigstens einen der zweiten Nutz-Signalkomponenten s1N2, s2N2 festzustellen, ob und/oder inwieweit aufgrund einer Störung des Meßstoffs auch eine Störung einer oder mehrerer der vorbezeichneten Systemfunktionen bzw. Meßfunktionen des Meßsystems, mithin bei der Ermittlung der entsprechenden Meßwerte ein Meßfehler vorliegt.

Das vorbezeichnete Auswerten wenigstens einer der zweiten Nutz-Signalkomponenten s1N2, s2N2 kann beispielsweise ein einfaches Untersuchen wenigstens eines der Schwingungsmeßsignale s1, s2 auf die zweite Nutz-Signalkomponente hin bzw. ein Detektieren nämlicher zweiter Nutz-Signalkomponenten in den Schwingungsmeßsignalen s1, s2 oberhalb eines vorgegebenen (Mindest-)Signalpegels sein; es kann aber auch ein dezidiertes Ausmessen einer oder mehrerer der zweiten Nutz-Signalkomponenten s1N2, s2N2 auf deren jeweilige (Signal-)Amplituden bzw. zeitliche Amplitudenverläufe und/oder auf deren jeweilige Phasenwinkel bzw. zeitliche Phasenwinkelverläufe hin und/oder auf deren jeweilige (Signal-)Frequenz bzw. zeitliche Frequenzverläufe umfassen. Beispielsweise können anhand der Schwingungsmeßsignale s1, s2 mittels der Meßsystem-Elektronik wiederkehrend Paramaterwerte ermittelt werden, die die jeweilige Schwingungsantwort oder eine oder mehrere der vorbezeichneten Systemfunktionen jeweils charakterisieren, und mit dafür entsprechend vorgegebenen Bezugswerten verglichen werden. Alternativ oder in Ergänzung können anhand der Schwingungsmeßsignale s1, s2 mittels der Meßsystem-Elektronik wiederkehrend auch ein oder mehrere Kennzahlenwerte für wenigstens eine Meßstoff-Kennzahl berechnet werden, die einen Zustand des Meßstoffs charakterisiert, beispielsweise derart, daß ein jeweiliger Kennzahlenwert jeweils einer Verknüpfung zweier oder mehr der vorbezeichneten Paramaterwerte entspricht bzw. jeweils von mehreren solcher Paramaterwerte abhängig ist und/oder daß die Meßstoff-Kennzahl mit geringer werden (Meßstoff-)Qualität kleiner wird.

Schwingungsantworten bzw. Systemfunktionen charakterisierende (System-)Parameter können beispielsweise (Schwingungs-)Amplitudenverhältnisse oder (Schwingungs-)Frequenzverhältnisse, Biegesteifigkeiten, Verhältnisse modaler Biegsteifigkeiten, Dämpfungen oder Verhälnisse modaler Dämpfungen des wenigsten einen Rohrs sein. Die entsprechenden Bezugswerte für die Paramaterwerte wie auch die jeweils entsprechenden Schwellenwerte können vorab, beispielsweise nämlich im Zuge einer (Erst-)Kalibrierung des Meßsystems vom Hersteller im Werk oder ggf. auch im Zuge einer Inbetriebnahme des Meßsystem vor Ort, mittels des Meßsystems selbst und/oder anhand von Labormessungen mit bau- oder typgleichen Meßsystemen, anhand von verschiedenen Meßstoffen mit jeweils bekannter Meßstoff-Qualität ermittelt und entsprechend vorab in der Meßsystem-Elektronik 20 gespeichert werden, beispielsweise in deren nicht-flüchtigen Datenspeicher EEPROM. Die mit der Meßsystem-Elektronik 20 jeweils ermittelten Paramaterwerte könne ferner auch ausgegeben, beispielsweise vor Ort angezeigt und/oder an das vorbezeichneten (Meß-)Datenverarbeitungssystem weitergeleitet, werden.

Unter Berücksichtigung der jeweils eingestellten ersten und zweiten Nutzfrequenzen kann beispielsweise auch ein entsprechendes Resonanzfrequenzenverhältnis der jeweiligen Schwingungsmoden ermittelt und als ein eine Systemfunktionen des Meßwandlers spezifizierender (System-)Parameter zur Überwachung der Qualität des Meßstoffs herangezogen werden, beispielsweise derart, daß ein zeitlich änderndes, beispielsweise stetig ansteigendes oder stetig abfallendes, Verhältnis der Resonanzfrequenz f2 zur Resonanzfrequenz f1 als Indikator für das Vorliegen einer Störung des Meßwandlers verwendet wird. Nach einer weiteren Ausgestaltung der Erfindung ist die Meßsystem-Elektronik 20 dementsprechend eingerichtet, die Resonanzfrequenz f2 der zweiten Schwingungsmode (f2-Mode) des wenigstens einen Rohrs 111, beispielsweise nämlich anhand des Treibersignals e1 und/oder wenigstens eines der Schwingungsmeßsignale s1, s2 die Resonanzfrequenz f2 repräsentierende Frequenzenwerte X_{f2}, zu ermitteln und/oder ein einem Verhältnis der Resonanzfrequenz f1 der ersten Schwingungsmode (f1-Mode) und der Resonanzfrequenz f2 der zweiten Schwingungsmode (f2-Mode) entsprechendes Resonanzfrequenzenverhältnis f1/f2 zu ermitteln, beispielsweise nämlich anhand der ersten und zweiten (Wechselstrom-)Frequenzen f_{eN1}, f_{eN2} des Treibersignals e1 und/oder anhand der Signalfrequenzen f_{s1N1}, f_{s2N1}, f_{s1N2}, f_{s2N2} der Nutz-Signalkomponenten s1N1, s1N2, s2N1, s2N2 wenigstens eines der Schwingungsmeßsignale das Resonanzfrequenzenverhältnis f1/f2 repräsentierende Frequenzenverhältniswerte X_{f12} (X_{f12} = f_{eN1}/f_{eN2}; X_{f12} = f_{s1N1}/ f_{s1N2}; X_{f12} = f_{s2N1}/f_{s2N2}) zu ermitteln. Die wiederkehrend ermittelten Frequenzenverhältniswerte X_{f12} können zum Durchführen der Überwachung der Qualität des Meßstoffs mittels der Meßsystem-Elektronik 20 ferner beispielsweise mit einem dafür vorgegebenen Bezugswert verglichen werden, insb. nämlich um festzustellen, ob oder inwieweit das Resonanzfrequenzenverhältnis f1/f2 von nämlichem Bezugswert abweicht.

Unter Berücksichtigung der Auslenkungen der zweiten Nutzschwingungen kann ferner beispielsweise auch eine Veränderung der Eigenschwingungsform der Schwingungsmode zweiter Ordnung ermittelt und als ein eine Systemfunktionen des Meßwandlers spezifizierender (System-)Parameter zur Überwachung der Qualität des Meßstoffs herangezogen werden. Nach einer weiteren Ausgestaltung der Erfindung ist die Meßsystem-Elektronik 20 daher ferner eingerichtet, anhand der Schwingungsmeßsignale s1, s2 wenigstens eine Phasendifferenz der zweiten Nutz-Signalkomponenten, nämlich eine Differenz zwischen einem Phasenwinkel der zweiten Nutz-Signalkomponente s1N2 des Schwingungsmeßsignals s1 und einem Phasenwinkel der zweiten Nutz-Signalkomponente s2N2 des Schwingungsmeßsignals s2 repräsentierende Phasendifferenzwerte zu ermitteln. Die wiederkehrend ermittelten Phasendifferenzwerte können zum Durchführen der Überwachung der Qualität des Meßstoffs mittels der Meßsystem-Elektronik 20 ferner beispielsweise mit einem oder mehreren dafür vorgegebenen Bezugswerten verglichen werden, etwa um festzustellen, ob oder inwieweit die Phasendifferenz der zweiten Nutz-Signalkomponenten bzw. eine zu Grunde liegende modale Auslenkung der zweiten Nutzschwingungen des wenigstens einen Rohrs vom jeweiligen Bezugswert abweichen. Beispielsweise kann eine zu hohe und/oder zeitlich stetig ansteigende Phasendifferenz der zweiten Nutz-Signalkomponente als ein Indikator für das Vorliegen einer Störung verwendet werden. Einer oder mehrere der vorbezeichneten Bezugswerte für die Phasendifferenz der zweiten Nutz-Signalkomponente kann beispielsweise auch in Abhängigkeit von einer momentan für die Ermittlung der Massenstrom-Meßwerte Xₘ ohnehin ermittelte Phasendifferenz der ersten Nutzschwingungen gesetzt sein. Alternativ oder in Ergänzung können die für die zweiten Nutz-Schwingungen ermittelten Phasendifferenzwerte zum Durchführen der Überwachung der Qualität des Meßstoffs mittels der Meßsystem-Elektronik 20 auch verwendet werden, um ein einem Verhältnis der vorbezeichneten Phasendifferenz der zweiten Nutzschwingungen und der für die Ermittlung der Massenstrom-Meßwerte Xₘ herangezogene Phasendifferenz der ersten Nutzschwingungen entsprechendes Phasendifferenzverhältnis zu ermitteln. Nach einer anderen Ausgestaltung der Erfindung ist die Meßsystem-Elektronik 20 ferner eingerichtet, anhand der Schwingungsmeßsignale s1, s2 wenigstens eine der (Signal-)Amplituden der ersten Nutz-Signalkomponenten s1N1, s2N1, mithin jeweils Auslenkungen x1 der ersten Nutzschwingungen repräsentierende Amplitudenwerte, insb. nämlich sowohl die (Signal-)Amplituden der Nutz-Signalkomponenten s1N1 repräsentierende Amplitudenwerte X_{s1N1} als auch die (Signal-)Amplituden der Nutz-Signalkomponenten s2N1 repräsentierende Amplitudenwerte X_{s2N1} zu ermitteln, und/oder ist die Meßsystem-Elektronik 20 eingerichtet, wenigstens eine der (Signal-)Amplituden der zweiten Nutz-Signalkomponenten s1N2, s2N2, mithin jeweils Auslenkungen x2 der zweiten Nutzschwingungen repräsentierende Amplitudenwerte, insb. nämlich sowohl die (Signal-)Amplituden der Nutz-Signalkomponenten s1N2 repräsentierende Amplitudenwerte X_{s1N2} als auch die (Signal-)Amplituden der Nutz-Signalkomponenten s2N2 repräsentierende Amplitudenwerte X_{s2N2} zu ermitteln, beispielsweise durch Bildung eines jeweiligen gleitenden Mittelwerts für die (Signal-)Amplituden der Nutz-Signalkomponenten s1N1, s1N2, s1N2 bzw. s2N2 mittels FIR-Filter und/oder durch numerische Integration der Amplitudenwerte X_{s1N1}, X_{s2N1}, X_{s1N2}, bzw. X_{s2N2}. Alternativ oder in Ergänzung ist die Meßsystem-Elektronik ferner eingerichtet, ein einem Verhältnis der (modalen) Auslenkung der ersten Nutzschwingungen und der (modalen) Auslenkung der zweiten Nutzschwingungen entsprechendes Auslenkungsverhältnis x1/x2 zu ermitteln, beispielsweise nämlich anhand wenigstens eines der Schwingungsmeßsignale s1, s2 das Auslenkungsverhältnis x1/x2 repräsentierende Auslenkungsverhältniswerte zu ermitteln, ggf. unter Verwendung der vorbezeichneten Auslenkungswerte X_{s1N1}, X_{s1N2} und/oder der vorbezeichneten Auslenkungswerte X_{s2N1}, X_{s2N2}. Die wiederkehrend ermittelten Amplitudenwerte, insb. nämlich die Amplitudenwerte X_{s1N2}, X_{s2N2}, und/oder die entsprechend ermittelten Auslenkungsverhältniswerte können zum Durchführen der Überwachung der Qualität des Meßstoffs mittels der Meßsystem-Elektronik 20 ferner beispielsweise mit einem oder mehreren dafür vorgegebenen Bezugswerten verglichen werden, etwa um festzustellen, ob oder inwieweit eine und/oder mehrere der (Signal-)Amplituden bzw. eine oder mehrere der modalen Auslenkungen der Schwingungen des wenigstens einen Rohrs, insb. nämlich die Auslenkungen der zweiten Nutzschwingungen, vom jeweiligen Bezugswert abweichen. Einer oder mehrere der vorbezeichneten Bezugswerte für die Amplitudenwerte X_{s1N2}, X_{s2N2} (bzw. die modalen Auslenkungen der Schwingungen des wenigstens einen Rohrs) kann beispielsweise auch in Abhängigkeit von einer momentan eingestellten (Strom-)Amplitude des zweiten (Nutz-)Stroms eN2 und/oder von einem der momentanen Auslenkungswerte X_{s1N1} und/oder X_{s2N1} gesetzt sein.

Unter Berücksichtigung sowohl der Auslenkungsgeschwindigkeiten der ersten bzw. zweiten Nutzschwingungen als auch der diese jeweils bewirkenden Antriebskraft kann zudem beispielsweise auch eine (modale) Dämpfung der jeweiligen Nutzschwingungen bzw. der entsprechenden Schwingungsmode ermittelt und als ein eine Systemfunktionen des Meßwandlers spezifizierender (System-)Parameter zur Überwachung der Qualität des Meßstoffs herangezogen werden, beispielsweise derart, daß eine zu hohe und/oder zeitlich stetig ansteigende (modale) Dämpfung der zweiten Nutzschwingungen bzw. ein zeitlich änderndes, beispielsweise stetig ansteigendes oder stetig abfallendes, Verhältnis einer (modalen) Dämpfung d2 der zweiten Nutzschwingungen zu einer (modalen) Dämpfung d1 der ersten Nutzschwingungen als Indikator für das Vorliegen einer Störung des Meßstoffs, beispielsweise nämlich einer zu hohen Abweichung der Qualität des Meßstoffs von der Spezifikation und/oder einer zu schnellen Aänderung der (Meßstoff-)Qualität verwendet wird. In Ergänzung dazu kann unter Berücksichtigung sowohl der Auslenkungen der ersten bzw. zweiten Nutzschwingungen als auch der diese jeweils bewirkenden Antriebskraft zudem beispielsweise auch eine entsprechende (modale) Federsteifigkeit der jeweiligen Nutzschwingungen bzw. jeweils entsprechenden Schwingungsmode ermittelt und als ein eine Systemfunktionen des Meßwandlers spezifizierender (System-)Parameter zur Überwachung der Qualität des Meßstoffs herangezogen werden, beispielsweise derart, daß eine zeitlich ändernde und/oder zu hohe (modale) Dämpfung der zweiten Nutzschwingungen bei einer zugleich ausreichend hohen und zeitlich gleichbleibende (modale) Federsteifigkeit der zweiten Nutzschwingungen das Vorliegen einer Störung des Meßstoffs anzeigt und/oder daß eine zu niedrige und/oder zeitlich sich stetig verringernde (modale) Federsteifigkeit der zweiten Nutzschwingungen bzw. ein zeitlich änderndes, beispielsweise stetig ansteigendes oder stetig abfallendes, Verhältnis einer (modalen) Federsteifigkeit c2 der zweiten Nutzschwingungen zu einer (modalen) Federsteifigkeit c1 der ersten Nutzschwingungen, ggf. auch bei einer zu hohen (modalen) Dämpfung der zweiten Nutzschwingungen das Vorliegen einer mechanischen Störung der Rohranordnung bzw. des damit gebildeten Meßwandlers anzeigt.

Nach einer weiteren Ausgestaltung der Erfindung ist die Meßsystem-Elektronik 20 daher ferner eingerichtet, eine mit einem Verhältnis der (Signal-)Amplitude einer der zweiten Nutz-Signalkomponenten s1N2, beispielsweise auch einer Summe oder einer Differenz der (Signal-)Amplituden der zweiten Nutz-Signalkomponenten, und einer (Signal-)Amplitude des zweiten (Nutz-)Stroms eN2 korrespondierende (modale) Dämpfung der zweiten Nutzschwingungen zu ermitteln, beispielsweise nämlich anhand des zweiten (Nutz-)Stroms e1N2 und einer zweiten Nutzsignalkomponente wenigstens eines der Schwingungsmeßsignale s1, s2 die Dämpfung d2 der zweiten Nutzschwingungen repräsentierende Dämpfunsgwerte zu ermitteln. Die wiederkehrend ermittelten Dämpfungswerte können zum Durchführen der Überwachung der Qualität des Meßstoffs mittels der Meßsystem-Elektronik 20 ferner beispielsweise mit einem oder mehreren dafür vorgegebenen Bezugswerten verglichen werden, insb. nämlich um festzustellen, ob oder inwieweit die Dämpfung der zweiten Nutzschwingungen des wenigstens einen Rohrs von einem dafür vorgegebenen Bezugswert (Dämpfungsreferenzwert) abweicht. Alternativ oder in Ergänzung kann die Meßsystem-Elektronik ferner auch eingerichtet sein, ein einem Verhältnis der (modalen) Dämpfung der ersten Nutzschwingungen und der (modalen)Dämpfung d2 der zweiten Nutzschwingungen entsprechendes Dämpfungsverhältnis d1/d2 zu ermitteln, beispielsweise nämlich anhand der ersten und zweiten (Nutz-)Ströme des Treibersignals und/oder wenigstens der ersten und zweiten Nutzsignalkomponenten wenigstens eines der Schwingungsmeßsignale das Dämpfungsverhältnis d1/d2 repräsentierende Dämpfungsverhältniswerte zu ermitteln. Dementsprechend kann die Meßsystem-Elektronik 20 ferner auch eingerichtet sein, sowohl die vorbezeichnete (modale) Dämpfung der zweiten Nutzschwingungen als auch eine einem Verhältnis der (Signal-)Amplitude einer der ersten Nutz-Signalkomponenten s1N1, beispielsweise auch einer Summe oder einer Differenz der (Signal-)Amplituden der Nutz-Signalkomponenten s1N1, s2N1, und einer (Signal-)Amplitude des ersten (Nutz-)Stroms eN1 entsprechende (modale) Dämpfung d1 der ersten Nutzschwingungen zu ermitteln, beispielsweise nämlich anhand des Treibersignals und wenigstens eines der Schwingungsmeßsignale die Dämpfung der ersten Nutzschwingungen repräsentierende Dämpfunsgwerte zu ermitteln. Die Meßsystem-Elektronik 20 ist nach einer weiteren Ausgestaltung der Erfindung ferner eingerichtet, zum Durchführen der Überwachung der Qualität des Meßstoffs einen oder mehrere der vorbezeichneten die Dämpfung der zweiten Nutzschwingungen repräsentierenden Dämpfungswerte und/oder einen oder mehrere der vorbezeichneten Dämpfungsverhältniswerte mit wenigstens einem dafür vorab und/oder mittels eines intakten Meßsystems ermittelten Bezugswert zu vergleichen, beispielsweise nämlich auch bei einer Abweichung eines oder mehrerer der Dämpfungswerte vom jeweiligen Bezugswert (Dämpfungsreferenzwert) bzw. einer Abweichung eines oder mehrerer der Dämpfungsverhältniswerte vom jeweiligen Bezugswert (Dämpfungsverhältnisreferenzwert) eine dies repräsentierende, insb. als (Störungs-)Alarm für eine verringerte (Meßstoff-)Qualität deklarierte, Meldung auszugeben. Nach einer weiteren Ausgestaltung der Erfindung ist die Meßsystem-Elektronik 20 ferner eingerichtet, anhand des zweiten (Nutz-)Stroms e1N2 und einer zweiten Signalkomponente wenigstens eines der der Schwingungsmeßsignale s1, s2 die Federsteifigkeit c2 der zweiten Nutzschwingungen repräsentierende Federsteifigkeitswerte zu ermitteln. Alternativ oder in Ergänzung kann die Meßsystem-Elektronik ferner auch eingerichtet sein, ein einem Verhältnis der (modalen) Federsteifigkeit c1 der ersten Nutzschwingungen und der der (modalen) Federsteifigkeit c2 der zweiten Nutzschwingungen entsprechendes Federsteifigkeitsverhältnis c1/c2 zu ermitteln, beispielsweise nämlich anhand der ersten und zweiten (Nutz-)Ströme und/oder der ersten und zweien Nutzsignalkomponenten wenigstens eines der Schwingungsmeßsignale das Federsteifigkeitsverhältnis c1/c2 repräsentierende Federsteifigkeitsverhältniswerte zu ermitteln. Dementsprechend kann die Meßsystem-Elektronik 20 ferner auch eingerichtet sein, sowohl die vorbezeichnete (modale) Federsteifigkeit c2 der zweiten Nutzschwingungen als auch eine einem Verhältnis der (Signal-)Amplitude einer der ersten Nutz-Signalkomponenten s1N1, beispielsweise auch einer Summe oder einer Differenz der (Signal-)Amplituden der Nutz-Signalkomponenten s1N1, s2N1, und einer (Signal-)Amplitude des ersten (Nutz-)Stroms eN1 entsprechende (modale) Federsteifigkeit der ersten Nutzschwingungen zu ermitteln, beispielsweise nämlich anhand des ersten (Nutz-)Stroms e1N1 und der ersten Nutz-Signalkomponente wenigstens eines der Schwingungsmeßsignale die Federsteifigkeit c1 der ersten Nutzschwingungen repräsentierende Federsteifigkeitswerte zu ermitteln. Die wiederkehrend ermittelten Federsteifigkeitswerte bzw. Federsteifigkeitsverhältniswerte können zum Durchführen der Überwachung der Qualität des Meßstoffs mittels der Meßsystem-Elektronik 20 ferner beispielsweise mit einem oder mehreren dafür vorgegebenen Bezugswerten verglichen werden, beispielsweise nämlich um festzustellen, ob oder inwieweit die Federsteifigkeit c2 der zweiten Nutzschwingungen des wenigstens einen Rohrs von einem dafür vorgegebenen Bezugswert (Federsteifigkeitsreferenzwert) abweicht. Die Meßsystem-Elektronik 20 ist nach einer weiteren Ausgestaltung der Erfindung ferner eingerichtet, für den Fall, daß amhand des Vergleiches mit dem Bezugswert eine zu niedrige und/oder zeitlich sich stetig verringernde (modale) Federsteifigkeit der zweiten Nutzschwingungen bzw. ein zeitlich änderndes, beispielsweise stetig ansteigendes oder stetig abfallendes, Verhältnis einer (modalen) Federsteifigkeit c2 der zweiten Nutzschwingungen zu einer (modalen) Federsteifigkeit c1 der ersten Nutzschwingungen festgestellt ist, eine ein beschädigtes Meßsystem anzeigende, beispielswweise auch als (Störungs-)Alarm für das Meßsystem deklarierte, Meldung auszugeben, insb. nämlich auch keinen (Störungs-)Alarm für eine verringerte (Meßstoff-)Qualität auszugeben.

Die für eine oder mehrere der der vorbezeichneten (System-)Parameter, beispielsweise nämlich das Resonanzfrequenzenverhältnis f1/f2 des wenigstens einen Rohrs, das Auslenkungsverhältnis x1/x2 der ersten und zweiten Nutzschwingungen, die (modale) Dämpfung d2 der zweiten Nutzschwingungen, das Dämpfungsverhältnis d1/d2 der ersten und zweiten Nutzschwingungen, die (modale) Federsteifigkeit d2 der zweiten Nutzschwingungen, das Federsteifigkeitsverhältnis c1/c2 der ersten und zweiten Nutzschwingungen etc., ermittelten Parameterwerte, beispielsweise nämlich die (modale) Federsteifigkeit c2 repräsentierende Federsteifigkeitswerte, das Federsteifigkeitsverhältnis c1/c2 repräsentierende Federsteifigkeitsverhältniswerte, die (modale) Dämpfung d2 repräsentierenden Dämpfungswerte, das Dämpfungsverhältnis d1/d2 repräsentierende Dämpfungsverhältniswerte, das Auslenkungsverhältnis x1/x2 repräsentierende Auslenkungsverhältniswerte, die Phasendifferenz der zweiten Nutz-Signalkomponenten repräsentierende Phasendifferenzwerte etc., können ferner auch zum wiederkehrenden Ermitteln eines Streuungsmaßes für den jeweiligen System-Parameter verwendet werden. Ein solches Streuungsmaß kann beispielsweise eine empirische Varianz oder eine Spannweite für den jeweiligen (System-)Parameter bzw. die dafür jeweils ermittelten Parameterwerte sein. Das ermittelte Streuungsmaß kann ebenfalls für die Überwachung der Qualität des Meßstoffs herangezogen werden, beispielsweise derart, daß auf eine Störung des Meßsystems allenfalls dann geschlossen wird, wenn der jeweilige (System-)Parameter ein niedriges, nämlich unterhalb eines entsprechend vorgegebenen Schwellenwerts liegendes Streuungsmaß aufweist, und/oder daß ein ein oberhalb eines entsprechend vorgegebenen Schwellenwerts liegendes Streuungsmaß aufweisender (System-)Parameter jeweils keine Störungsmeldung auslöst, auch wenn ein Vergleich von dessen Parameterwerten mit dem jeweiligen Bezugswert dies zunächst indizieren würde. Alternativ oder in Ergänzung kann das jeweils mit der Meßsystem-Elektronik 20 ermittelte Streuungsmaß auch ausgegeben, beispielsweise vor Ort angezeigt und/oder an das vorbezeichneten (Meß-)Datenverarbeitungssystem weitergeleitet, werden. Alternativ oder in Ergänzung können die für eine oder mehrere der vorbezeichneten (System-)Parameter, beispielsweise nämlich das Resonanzfrequenzenverhältnis f1/f2 des wenigstens einen Rohrs, das Auslenkungsverhältnis x1/x2 der ersten und zweiten Nutzschwingungen, die Dämpfung der zweiten Nutzschwingungen, das Dämpfungsverhältnis d1/d2, der ersten und zweiten Nutzschwingungen etc., ermittelten Parameterwerte ferner auch zum wiederkehrenden Ermitteln einer zeitlichen Änderung, beispielsweise nämlich eines Änderungstrends und/oder einer Änderungsrate und/oder einer Änderungsgeschwindigkeit, des jeweiligen (System-)Parameters verwendet werden. Die ermittelte zeitlichen Änderung kann ebenfalls für die Überwachung der Qualität des Meßstoffs herangezogen werden, beispielswiese derart, daß bei größer werdender Dämpfung der zweiten Nutzschwingungen oder bei einem mit einer außerhalb eines vorgegebenen Meßbereich liegenden Änderungsrate zunehmenden Änderung des Resonanzfrequenzenverhältnisses f1/f2 und/oder Dämpfungsverhältnisses d1/d2 eine größer werdende Abweichung der Qualität des Meßstoffs detektiert und ggf. entsprechend vermeldet wird. Die jeweils mit der Meßsystem-Elektronik 20 ermittelte zeitlichen Änderung bzw. Änderungsrate oder Änderungsgeschwindigkeit kann zudem auch ausgegeben, beispielsweise vor Ort angezeigt und/oder an das vorbezeichneten (Meß-)Datenverarbeitungssystem weitergeleitet, werden.

Die erfindungsgemäße Überwachung der Qualität des Meßstoffs kann beispielsweise während eines dafür entsprechend reservierten, beispielsweise auch gelegentlich wiederholten bzw. jeweils nicht weniger als 1 s (Sekunde) andauernden, Testintervalls durchgeführt werden. Das Testintervall kann zeitlich begrenzt sein, beispielsweise auf jeweils weniger als 1 min, gleichwohl wiederkehrend aufgestartet werden, beispielsweise per Befehl von extern des Meßsystems und/oder automatisiert, nämlich zeit- und/oder ereignisgesteuert durch die Meßsystem-Elektronik selbst. Dementsprechend ist die Meßsystem-Elektronik nach einer weiteren Ausgestaltung der Erfindung, selbsttätig das Testintervall aufzustarten und/oder zu beenden, und/oder einen oder mehrere Befehle zu empfangen und auszuführen zu können, der das Testintervall startet. Nach einer weiteren Ausgestaltung der Erfindung ist die Meßsystem-Elektronik ferner eingerichtet, das Testintervall während des normalen Meßbetriebs bzw. während der Anregung der ersten Nutzschwingungen zu starten, derart, daß zumindest das Treibersignal e1 mit dem zweiten (Nutz-)Strom eN2 bereitgestellt wird; dies beispielsweise auch derart, daß das Treibersignal e1 zumindest zeitweise simultan auch den ersten (Nutz-)Strom eN1 enthält, so daß die zweiten Nutzschwingungen simultan mit den ersten Nutzschwingungen angeregt, mithin erste und zweite Nutzschwingungen während des Testintervalls zumindest zeitweise einander überlagert sind. Nach einer weiteren Ausgestaltung der Erfindung ist die Meßsystem-Elektronik zudem eingerichtet ist, während des Testintervalls anhand der zweiten Nutz-Signalkomponenten s1N2; s2N2, insb. anhand von deren (Signal-)Frequenz und/oder anhand von einer (Signal-)Amplitude wenigstens einer der zweiten Nutz-Signalkomponenten s1N2 und/oder anhand von einem Phasenwinkel wenigstens einer der zweiten Nutz-Signalkomponente s1N2, die wenigstens eine Meßgröße repräsentierende Meßwerte zu ermitteln.

## Patentansprüche

1. Vibronisches Meßsystem, insb. Coriolis-Massedurchfluß-Meßgerät oder Coriolis-Massedurchfluß-/Dichte-Meßgerät, zum Messen und/oder Überwachen wenigstens einer Meßgröße, insb. eines Strömungsparameters, insb. nämlich eines Massenstroms und/oder eines Volumenstroms und/oder einer Strömungsgeschwindigkeit, und/oder eines Stoffparameters, insb. nämlich einer Dichte und/oder einer Viskosität, eines fluiden Meßstoffs, insb. eines Gases, einer Flüssigkeit oder einer Dispersion, welches, insb. als In-Line-Meßgerät und/oder Meßgerät in Kompaktbauweise ausgebildete, Meßsystem umfaßt:
- einen Meßwandler (10)
-- mit einer Rohranordnung zum Führen des strömenden Meßstoffs,
-- mit einer Erregeranordnung zum Wandeln elektrischer Leistung in dem Anregen und Aufrechterhalten erzwungener mechanischer Schwingungen der Rohranordnung dienliche mechanische Leistung
-- und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen;
- sowie eine mit dem Meßwandler (10), nämlich sowohl mit dessen Erregeranordnung als auch mit dessen Sensoranordnung, insb. mittels elektrischer Verbindungsleitungen, elektrisch gekoppelte, insb. mittels wenigstens eines Mikroprozessors gebildete und/oder in Elektronik-Schutzgehäuse angeordnete, Meßsystem-Elektronik (20) zum Ansteuern des Meßwandlers und zum Auswerten von vom Meßwandler gelieferten Schwingungsmeßsignalen;
- wobei die Rohranordnung wenigstens ein, insb. zumindest abschnittsweise gekrümmtes und/oder zumindest abschnittsweise gerades und/oder erstes, Rohr (111) aufweist,
-- welches Rohr sich von einem ersten Rohrende bis zu einem zweiten Rohrende mit einer, insb. mehr als 100 mm betragenden, Rohrlänge erstreckt und ein von einer, insb. metallischen, Rohrwandung umschlossenes, sich vom ersten Rohrende bis zum zweiten Rohrende erstreckendes Lumen aufweist,
-- und welches Rohr eingerichtet ist, zumindest in einer vom ersten Rohrende zum zweiten Rohrende weisenden Strömungsrichtung von Meßstoff durchströmt und währenddessen vibrieren gelassen zu werden,
-- und wobei dem Rohr eine Vielzahl von jeweils eine zugehörige Resonanzfrequenz (f1, f2, ... , fx) aufweisenden Schwingungsmoden, oder Eigenschwingungsformen, innewohnt, **in denen das Rohr jeweils** ein oder mehr Schwingungsbäuche und jeweils zwei oder mehr Schwingungsknoten aufweisende Schwingungsbewegungen ausführen kann bzw. ausführt, derart,
--- daß Schwingungsbewegungen des Rohrs in einer Grund-Schwingungsmode, nämlich einer Schwingungsmode erster Ordnung (f1-Mode), insb. nämlich eine Biegeschwingungsmode erster Ordnung, genau einen Schwingungsbauch und zwei Schwingungsknoten aufweisen
--- und daß Schwingungsbewegungen des Rohrs in einer Ober-Schwingungsmode, nämlich einer Schwingungsmode zweiter oder höherer Ordnung (f2-Mode, ... fx-Mode), insb. nämlich eine Biegeschwingungsmode zweiter bzw. höherer Ordnung, zwei oder mehr Schwingungsbäuche und drei oder mehr Schwingungsknoten aufweisen;
- wobei die Erregeranordnung einen, insb. elektrodynamischen, Schwingungserreger (31) aufweist,
-- der mechanisch mit dem Rohr verbunden
-- und eingerichtet ist, elektrische Leistung mit einem zeitlich veränderlichen elektrischen Strom in mechanische Leistung zu wandeln, derart, daß an einem mittels des Schwingungserregers am damit mechanisch verbundenen Rohr gebildeten Antriebspunkt eine zeitlich veränderliche Antriebskraft auf das Rohr wirkt, insb. derart, daß eine Wirklinie der Antriebskraft senkrecht zu einer Normalen einer Antriebs-Querschnittsfläche des Rohrs verläuft,
-- wobei der Schwingungserreger (31) so positioniert und ausgerichtet ist, daß ein Antriebsversatz (ΔE), nämlich ein kleinster Abstand zwischen einer von einer durch den Antriebspunkt hindurchführende gedachte Umfangslinie des Rohrs umschlossenen Antriebs-Querschnittsfläche des Rohrs und einer vorgegebenen, insb. bei intaktem bzw. ursprünglichem Meßwandler ermittelten, Referenz-Querschnittsfläche des wenigstens einen Rohrs nicht mehr als 3°mm, insb. weniger als 2 mm, und/oder weniger als 0,5% der Rohrlänge, insb. nämlich weniger als 0,2% der Rohrlänge, beträgt, insb. nämlich bei intaktem bzw. ursprünglichem Meßwandler gleich Null ist, wobei ein zwischen zwei Schwingungsbäuchen von Schwingungsbewegungen des wenigstens einen Rohrs in einer von der Schwingungsmode erster Ordnung abweichenden Schwingungsmode zweiter oder höherer Ordnung gebildeter, insb. nominell bei einer halben Rohrlänge verorteter, Schwingungsknoten nämlicher Schwingungsbewegungen innerhalb der Referenz-Querschnittsfläche liegt,
- und wobei die Meßsystem-Elektronik (20) eingerichtet ist, den Schwingungserreger (31) zu bestromen, nämlich mittels eines einen zeitlich veränderlichen elektrischen Strom aufweisenden elektrischen Treibersignals (e1) elektrische Leistung in den Schwingungserreger (31) einzuspeisen, derart, daß das Rohr erzwungene mechanische Schwingungen, insb. Biegeschwingungen, mit einer oder mehreren durch das Treibersignal (e1) vorgegebenen Schwingungsfrequenzen ausführt;
- wobei die Sensoranordnung einen, insb. elektrodynamischen oder optischen, ersten Schwingungssensor aufweist,
-- der, insb. in Strömungsrichtung mehr als 10 mm und/oder mehr als ein Fünftel der Rohrlänge vom Schwingungserreger beabstandet, am Rohr positioniert, insb. nämlich zumindest anteilig mit dem Rohr mechanisch verbunden, ist
-- und der eingerichtet ist, Schwingungsbewegungen des Rohrs zu erfassen und in ein nämliche Schwingungsbewegungen repräsentierendes, insb. elektrisches oder optisches, erstes Schwingungsmeßsignal zu wandeln, insb. derart, daß das erste Schwingungsmeßsignal eine oder mehrere sinusförmige Signalkomponenten mit jeweils einer einer Schwingungsfrequenz von Schwingungsbewegungen des Rohrs entsprechenden Frequenz enthält,
- wobei die Sensoranordnung wenigstens einen, insb. elektrodynamischen oder optischen, zweiten Schwingungssensor aufweist,
-- der, insb. in Strömungsrichtung mehr als 10 mm und/oder mehr als ein Fünftel der Rohrlänge vom Schwingungserreger beabstandet und/oder der in Strömungsrichtung vom ersten Schwingungssensor beabstandet, am Rohr positioniert, insb. nämlich zumindest anteilig mit dem Rohr mechanisch verbunden, ist
-- und der eingerichtet ist, Schwingungsbewegungen des Rohrs zu erfassen und in ein nämliche Schwingungsbewegungen repräsentierendes, insb. elektrisches oder optisches, zweites Schwingungsmeßsignal zu wandeln, insb. derart, daß das zweite Schwingungsmeßsignal eine oder mehrere sinusförmige Signalkomponenten mit jeweils einer einer Schwingungsfrequenz von Schwingungsbewegungen des Rohrs entsprechenden Frequenz enthält,
- und wobei die Meßsystem-Elektronik eingerichtet ist, die ersten und zweiten Schwingungsmeßsignale zu empfangen und auszuwerten, insb. nämlich die wenigstens eine Meßgröße repräsentierende Meßwerte zu ermitteln und auszugeben;
- wobei die Meßsystem-Elektronik eingerichtet ist,
-- sowohl das Treibersignal (e1) zumindest zeitweise mit einem eine erste Wechselstrom-Frequenz aufweisenden sinusförmigen ersten Nutz-Strom (eN1) bereitzustellen, derart,
--- daß das Rohr zumindest anteilig, insb. überwiegend, erste Nutzschwingungen, nämlich durch den bestromten Schwingungserreger erzwungene mechanische Schwingungen mit einer ersten Nutzfrequenz, nämlich einer der ersten Wechselstrom-Frequenz entsprechenden Schwingungs-Frequenz ausführt, insb. derart, daß die erste Nutzfrequenz von einer Resonanzfrequenz, f1, der Grund-Schwingungsmode um weniger als 1% nämlicher Resonanzfrequenz, f1, und/oder um weniger als 1 Hz abweicht und/oder daß die erste Nutzfrequenz von einer Resonanzfrequenz, f2, der Schwingungsmode zweiter Ordnung um mehr als 5% nämlicher Resonanzfrequenz, f2, und/oder um **mehr** als 10 Hz abweicht und/oder daß die ersten Nutzschwingungen geeignet sind, im strömenden Meßstoff vom Massestrom abhängige Corioliskräfte zu bewirken,
--- und daß jedes der ersten und zweiten Schwingungssignale (s1; s2), jeweils eine erste Nutz-Signalkomponente (s1N1; s2N1), nämlich eine sinusförmige Signalkomponente mit einer der ersten Nutzfrequenz entsprechenden Signal-Frequenz aufweist,
-- als auch anhand zumindest der ersten Nutz-Signalkomponenten (s1N1; s2N1), insb. anhand von deren Signal-Frequenz und/oder anhand von einer Amplitude wenigstens einer der ersten Nutz-Signalkomponenten (s1N1; s2N1) und/oder anhand von einem Phasenwinkel wenigstens einer der ersten Nutz-Signalkomponenten (s1N1; s2N1), die wenigstens eine Meßgröße repräsentierende Meßwerte, insb. den Massenstrom des Meßstoffs repräsentierende Massenstrom-Meßwerte und/oder die Dichte des Meßstoffs repräsentierende Dichte-Meßwerte, zu ermitteln;
- und wobei die Meßsystem-Elektronik eingerichtet ist,
-- sowohl das Treibersignal (e1) zumindest zeitweise, insb. während eines nicht weniger als 1 s (Sekunde) andauernden und/oder zeitlich begrenzten und/oder wiederkehrend aufgestarteten Testintervalls, mit einem eine zweite Wechselstrom-Frequenz aufweisenden sinusförmigen zweiten Nutz-Strom (eN2) bereitzustellen, derart,
--- daß die zweite Wechselstrom-Frequenz, insb. für zwei oder mehr Schwingungsperioden und/oder einen Zeitraum von mehr als 10 ms, von einer Resonanzfrequenz, f2, der Schwingungsmode zweiter Ordnung um weniger als 1%, insb. um weniger als 0,1 %, nämlicher Resonanzfrequenz, f2, und/oder um weniger als 1 Hz, insb. um weniger als 0,1 Hz, abweicht,
--- und daß das Rohr zumindest anteilig - insb. simultan mit den ersten Nutzschwingungen und/oder stationär, nämlich für zwei oder mehr Schwingungsperioden und/oder einen Zeitraum von mehr als 10 ms eine gleichbleibende, von Null verschiedene Schwingungsamplitude aufweisende - zweite Nutzschwingungen, nämlich durch den bestromten Schwingungserreger erzwungene mechanische Schwingungen mit einer zweiten Nutzfrequenz, nämlich einer der zweiten Wechselstrom-Frequenz entsprechenden Schwingungs-Frequenz ausführt, wodurch jedes der ersten und zweiten Schwingungssignale, jeweils eine zweite Nutz-Signalkomponente (s1N2; s2N2), nämlich eine sinusförmige Signalkomponente mit einer der zweiten Nutzfrequenz entsprechenden Signal-Frequenz aufweist,
-- als auch anhand wenigstens einer der zweiten Nutz-Signalkomponenten (s1N2; s2N2), insb. anhand von deren Signal-Frequenz und/oder anhand von einer Signal-Amplitude wenigstens einer der zweiten Nutz-Signalkomponenten (s1N2) und/oder anhand von einem Phasenwinkel wenigstens einer der zweiten Nutz-Signalkomponente (s1N2),
--- eine Qualität des Meßstoffs zu überwachen, insb. nämlich festzustellen, ob eine Störung des Meßstoffs, nämlich eine unerwünschte Änderung eines oder mehrer Stoffparameter des Meßstoffs vorliegt.

2. Meßsystem nach Anspruch 1, wobei die erste Nutzfrequenz von einer Resonanzfrequenz, f1, der Grund-Schwingungsmode um weniger als 1% nämlicher Resonanzfrequenz, f1, und/oder um weniger als 1 Hz abweicht, insb. nämlich der Resonanzfrequenz, f1, entspricht.

3. Meßsystem nach Anspruch 1, wobei die erste Nutzfrequenz von einer Resonanzfrequenz, f3, einer dem wenigstens einen Rohr innewohnenden Schwingungsmode dritter Ordnung, insb. nämlich eine Biegeschwingungsmode dritter Ordnung, in welcher Schwingunsgmode die Schwingungsbewegungen des Rohrs genau drei Schwingungsbäuche und zwei Schwingungsknoten aufweisen, um weniger als 1% nämlicher Resonanzfrequenz, f3, und/oder um weniger als 1 Hz abweicht, insb. nämlich der Resonanzfrequenz, f3, entspricht.

4. Meßsystem nach dem vorherigen Anspruch, wobei ein erster Schwingungsknoten von Schwingungsbewegungen des wenigstens einen Rohrs in der Schwingungsmode dritter Ordnung im ersten Rohrende und ein zweiter Schwingungsknoten in der Schwingungsmode dritter Ordnung im zweiten Rohrende verortet sind.

5. Meßsystem nach einem der vorherigen Ansprüche, wobei die Ober-Schwingungsmode einer Schwingungsmode zweiter Ordnung (f2-Mode), insb. nämlich eine Biegeschwingungsmode zweiter Ordnung, entspricht, in welcher Schwingungsmode zweiter Ordnung die Schwingungsbewegungen des Rohrs genau zwei Schwingungsbäuche und drei Schwingungsknoten aufweisen.

6. Meßsystem nach dem vorherigen Anspruch,
- wobei ein zwischen den zwei Schwingungsbäuchen der Schwingungsbewegungen des wenigstens einen Rohrs in der Schwingungsmode zweiter Ordnung gebildeter, insb. nominell bei einer halben Rohrlänge verorteter, Schwingungsknoten nämlicher Schwingungsbewegungen innerhalb der Referenz-Querschnittsfläche liegt;
- und/oder wobei eine senkrecht zur Schwingungsrichtung der Schwingungsbewegungen des Rohrs in der Schwingungsmode zweiter Ordnung stehende Hauptträgheitsachse des wenigstens einen Rohrs innerhalb der Referenz-Querschnittsfläche des wenigstens einen Rohrs liegt; und/oder
- wobei der Antriebsversatz einem Abstand zwischen einem Flächenschwerpunkt, oder Mittelpunkt, der Antriebs-Querschnittsfläche des Rohrs und einem Flächenschwerpunkt, oder Mittelpunkt, der Referenz-Querschnittsfläche des wenigstens einen Rohrs entspricht; und/oder
- wobei eine Wirklinie der Antriebskraft senkrecht zu einer Normalen einer Antriebs-Querschnittsfläche des Rohrs verläuft; und/oder
- wobei eine Schnittgeraden zweier zueinander orthogonaler Symmetrieebenen des wenigstens einen Rohrs innerhalb der Referenz-Querschnittsfläche liegt; und/oder
- wobei eine senkrecht zur Antriebskraft stehende Hauptträgheitsachse des wenigstens einen Rohrs innerhalb der Referenz-Querschnittsfläche des wenigstens einen Rohrs liegt.

7. Meßsystem nach einem der vorherigen Ansprüche,
- wobei die Meßsystem-Elektronik eingerichtet ist, den zweiten Nutzstrom des Treibersignals (e1) zumindest zeitweise simultan mit dem ersten Nutz-Strom bereitzustellen, insb. derart, daß eine Amplitude des ersten Nutz-Stroms nicht kleiner als eine Amplitude des zweiten Nutz-Stroms eingestellt ist und/oder daß eine Amplitude des zweiten Nutz-Stroms auf mehr als 40 %, insb. nicht weniger als 50%, einer Amplitude des ersten Nutz-Stroms eingestellt ist; und/oder
- wobei die Meßsystem-Elektronik eingerichtet ist, die zweite Wechselstrom-Frequenz in Abhängigkeit von der ersten Wechselstrom-Frequenz einzustellen, insb. derart, daß die zweite Wechselstrom-Frequenz innerhalb eines Frequenzeinstellintervall liegt, von dem eine obere Intervallgrenze und/oder eine untere Intervallgrenze und/oder eine Mittenfrequenz einem vorgegebenen Vielfachen der ersten Wechselstrom-Frequenz, insb. nämlich mehr als 230 % der ersten Wechselstrom-Frequenz und/oder weniger als 300 % der ersten Wechselstrom-Frequenz entsprechenden Vielfachen der ersten Wechselstrom-Frequenz, entspricht.

8. Meßsystem nach einem der vorherigen Ansprüche,
- wobei die Meßsystem-Elektronik eingerichtet ist, eine Signal-Amplitude einer der ersten Nutz-Signalkomponenten (s1N1), insb. einer Differenz der Signal-Amplituden der ersten Nutz-Signalkomponenten (s1N1; s2N1), entsprechende modale Auslenkung der ersten Nutzschwingungen zu ermitteln, insb. nämlich anhand wenigstens eines der Schwingungsmeßsignale die Auslenkung der ersten Nutzschwingungen repräsentierende Auslenkungswerte zu ermitteln; und/oder
- wobei die Meßsystem-Elektronik eingerichtet ist, eine Signal-Amplitude einer der zweiten Nutz-Signalkomponenten (s1N1), insb. einer Differenz der Signal-Amplituden der zweiten Nutz-Signalkomponenten (s1N1; s2N1), entsprechende modale Auslenkung der ersten Nutzschwingungen zu ermitteln, insb. nämlich anhand wenigstens eines der Schwingungsmeßsignale die Auslenkung der zweiten Nutzschwingungen repräsentierende Auslenkungswerte zu ermitteln; und/oder
- wobei die Meßsystem-Elektronik eingerichtet ist, ein einem Verhältnis der modalen Auslenkung der ersten Nutzschwingungen und der modalen Auslenkung der zweiten Nutzschwingungen entsprechendes Auslenkungsverhältnis x1/x2 zu ermitteln, insb. nämlich anhand wenigstens eines der Schwingungsmeßsignale das Auslenkungsverhältnis x1/x2 repräsentierende Auslenkungsverhältniswerte zu ermitteln; und/oder
- wobei die Meßsystem-Elektronik eingerichtet ist, eine einem Verhältnis der Signal-Amplitude einer der ersten Nutz-Signalkomponenten (s1N1), insb. einer Summe oder einer Differenz der Signal-Amplituden der ersten Nutz-Signalkomponenten (s1N1; s2N1), und einer Signal-Amplitude des ersten Nutz-Stroms (eN1) entsprechende modale Dämpfung der ersten Nutzschwingungen zu ermitteln, insb. nämlich anhand des Treibersignals und wenigstens eines der Schwingungsmeßsignale die Dämpfung der ersten Nutzschwingungen repräsentierende Dämpfunsgwerte zu ermitteln; und/oder
- wobei die Meßsystem-Elektronik eingerichtet ist, eine einem Verhältnis der Signal-Amplitude einer der zweiten Nutz-Signalkomponenten (s1N2), insb. einer Summe oder einer Differenz der Signal-Amplituden der zweiten Nutz-Signalkomponenten (s1N2, s2N2), und einer Signal-Amplitude des zweiten (Nutz-)Stroms (eN2) entsprechende modale Dämpfung der zweiten Nutzschwingungen zu ermitteln, insb. nämlich anhand des Treibersignals und wenigstens eines der Schwingungsmeßsignale die Dämpfung der zweiten Nutzschwingungen repräsentierende Dämpfunsgwerte zu ermitteln; und/oder
- wobei die Meßsystem-Elektronik eingerichtet ist, ein einem Verhältnis der modalen Dämpfung der ersten Nutzschwingungen und der der modalen Dämpfung der zweiten Nutzschwingungen entsprechendes Dämpfungsverhältnis d1/d2 zu ermitteln, insb. nämlich anhand des Treibersignals und/oder wenigstens eines der Schwingungsmeßsignale das Dämpfungsverhältnis d1/d2 repräsentierende Dämpfungsverhältniswerte zu ermitteln; und/oder
- wobei die Meßsystem-Elektronik eingerichtet ist, ein die Resonanzfrequenz f1 der ersten Schwingungsmode des wenigstens einen Rohrs zu ermitteln, insb. nämlich anhand des Treibersignals und/oder wenigstens eines der Schwingungsmeßsignale die Resonanzfrequenz f1 repräsentierende Frequenzenwerte zu ermitteln; und/oder
- wobei die Meßsystem-Elektronik eingerichtet ist, ein die Resonanzfrequenz f2 der zweiten Schwingungsmode des wenigstens einen Rohrs zu ermitteln, insb. nämlich anhand des Treibersignals und/oder wenigstens eines der Schwingungsmeßsignale die Resonanzfrequenz f2 repräsentierende Frequenzenwerte zu ermitteln; und/oder
- wobei die Meßsystem-Elektronik eingerichtet ist, ein einem Verhältnis der Resonanzfrequenz f1 der ersten Schwingungsmode des wenigstens einen Rohrs und der Resonanzfrequenz f2 der zweiten Schwingungsmode des wenigstens einen Rohrs entsprechendes Resonanzfrequenzenverhältnis f1/f2 zu ermitteln, insb. nämlich anhand der ersten und zweiten Wechselstrom-Frequenzen des Treibersignals und/oder anhand der Signalfrequenzen der ersten und zweiten Nutz-Signalkomponenten (s1N1, s1N2; s2N1, s2N2) wenigstens eines der Schwingungsmeßsignale das Resonanzfrequenzenverhältnis f1/f2 repräsentierende Frequenzenverhältniswerte zu ermitteln.

9. Meßsystem nach einem der vorherigen Ansprüche, wobei die Meßsystem-Elektronik eingerichtet ist, anhand des Treibersignals und wenigstens eines der Schwingungsmeßsignale eine modale Dämpfung der zweiten Nutzschwingungen repräsentierende Dämpfunsgwerte zu ermitteln, insb. nämlich einen oder mehrere der Dämpfungswerte mit einem dafür vorab ermittelten Bezugswert, oder Dämpfungsreferenzwert, zu vergleichen.

10. Meßsystem nach dem vorherigen Anspruch,
- wobei die Meßsystem-Elektronik eingerichtet ist, zum Überwachen der Qualität des Meßstoffs einen oder mehrere der Dämpfungswerte mit wenigstens einem dafür vorab und/oder mittels eines intakten Meßsystems ermittelten Bezugswert, oder Dämpfungsreferenzwert, zu vergleichen, insb. auch bei einer Abweichung eines oder mehrerer der Dämpfungswerte vom Bezugswert eine dies repräsentierende, insb. als Störungs-Alarm deklarierte, Meldung auszugeben; und/oder
- wobei die Meßsystem-Elektronik eingerichtet ist, zum Überwachen der Qualität des Meßstoffs anhand mehrere der Dämpfungswerte eine zeitliche Änderung, insb. nämlich einen Änderungstrend und/oder eine Änderungsrate und/oder eine Änderungsgeschwindigkeit, der Dämpfung der zweiten Nutzschwingungen zu ermitteln, insb. nämlich bei kleiner werdender Dämpfung der zweiten Nutzschwingungen eine größer werdende Störung zu ermitteln und/oder eine Zunahme einer Störung repräsentierende, insb. als Störungs-Alarm deklarierte, Meldung auszugeben; und/oder
- wobei die Meßsystem-Elektronik eingerichtet ist, anhand einer Vielzahl von Dämpfungswerten ein Streuungsmaß, insb. eine empirische Varianz und/oder eine Spannweite, für Dämpfung der zweiten Nutzschwingungen des wenigstens einen Rohrs zu ermitteln, insb. auch auszugeben und/oder zum Überwachen der Qualität des Meßstoffs nämliches Streuungsmaß mit einem oder mehreren dafür vorgegebenen Bezugswerten zu vergleichen.

11. Meßsystem nach einem der vorherigen Ansprüche, wobei die Meßsystem-Elektronik eingerichtet ist, anhand des Treibersignals und/oder wenigstens eines der Schwingungsmeßsignale die Resonanzfrequenz f2 der zweiten Schwingungsmode des wenigstens einen Rohrs repräsentierende Frequenzwerte zu ermitteln, insb. nämlich einen oder mehrere der Frequenzwerte mit einem oder mehreren dafür vorgegebenen Bezugswerten zu vergleichen und/oder mehrere der Frequenzwerte zum Ermitteln eines Streuungsmaßes für Resonanzfrequenz f2 der zweiten Schwingungsmode des wenigstens einen Rohrs zu verwenden.

12. Meßsystem nach dem vorherigen Anspruch, wobei die Meßsystem-Elektronik eingerichtet ist, anhand einer Vielzahl von Frequenzwerten ein Streuungsmaß für die Resonanzfrequenz f2 der zweiten Schwingungsmode des wenigstens einen Rohrs zu ermitteln, insb. auch auszugeben und/oder zum Überwachen der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

13. Meßsystem nach einem der vorherigen Ansprüche, wobei die Meßsystem-Elektronik eingerichtet ist, anhand des Treibersignals und/oder wenigstens eines der Schwingungsmeßsignale ein Verhältnis der Resonanzfrequenz f1 der ersten Schwingungsmode des wenigstens einen Rohrs und der Resonanzfrequenz f2 der zweiten Schwingungsmode des wenigstens einen Rohrs repräsentierende Frequenzenverhältniswerte zu ermitteln, insb. nämlich einen oder mehrere der Frequenzenverhältniswerte mit einem oder mehreren dafür vorgegebenen Bezugswerten zu vergleichen und/oder mehrere der Frequenzenverhältniswerte zum Ermitteln eines Streuungsmaßes für das Resonanzfrequenzenverhältnis f1/f2 des wenigstens einen Rohrs zu verwenden.

14. Meßsystem nach dem vorherigen Anspruch,
- wobei die Meßsystem-Elektronik eingerichtet ist, zum Überwachen der Qualität des Meßstoffs einen oder mehrere der Frequenzenverhältniswerte mit wenigstens einem dafür vorab ermittelten Bezugswert, oder Frequenzenverhältnisreferenzwert, zu vergleichen, insb. bei auch bei einer Abweichung eines oder mehrerer der Frequenzenverhältniswerte vom Bezugswert eine dies repräsentierende, insb. als Störungs-Alarm deklarierte, Meldung auszugeben; und/oder
- wobei die Meßsystem-Elektronik eingerichtet ist, anhand einer Vielzahl von Frequenzenverhältniswerten ein Streuungsmaß, insb. eine empirische Varianz und/oder eine Spannweite, für das Resonanzfrequenzenverhältnis f1/f2 des wenigstens einen Rohrs zu ermitteln, insb. auch auszugeben und/oder zum Überwachen der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

15. Meßsystem nach einem der vorherigen Ansprüche, wobei die Meßsystem-Elektronik eingerichtet ist, anhand der Schwingungsmeßsignale eine Phasendifferenz der zweiten Nutz-Signalkomponenten, nämlich eine Differenz zwischen einem Phasenwinkel der zweiten Nutz-Signalkomponente (s1N2) des ersten Schwingungsmeßsignals (s1) und einem Phasenwinkel der zweiten
Nutz-Signalkomponente (s2N2) des zweiten Schwingungsmeßsignals (s2) repräsentierende Phasendifferenzwerte zu ermitteln, insb. nämlich einen oder mehrere der Phasendifferenzwerte mit einem dafür vorab ermittelten Bezugswert, oder Phasendifferenzreferenzwert, zu vergleichen und/oder mehrere der Phasendifferenzwerte zum Ermitteln eines Streuungsmaßes für die Phasendifferenz der zweiten Nutz-Signalkomponenten des wenigstens einen Rohrs zu verwenden.

16. Meßsystem nach dem vorherigen Anspruch,
- wobei die Meßsystem-Elektronik eingerichtet ist, zum Überwachen der Qualität des Meßstoffs einen oder mehrere der Phasendifferenzwerte mit wenigstens einem dafür vorab ermittelten Bezugswert (Phasendifferenzreferenzwert) zu vergleichen, insb. bei auch bei einer Abweichung eines oder mehrerer der Phasendifferenzwerte vom Bezugswert eine dies repräsentierende, insb. als Störungs-Alarm deklarierte, Meldung auszugeben; und/oder
- wobei die Meßsystem-Elektronik eingerichtet ist, anhand einer Vielzahl von Phasendifferenzwerten ein Streuungsmaß, insb. eine empirische Varianz und/oder eine Spannweite, für die Phasendifferenz der zweiten Nutz-Signalkomponenten zu ermitteln, insb. auch auszugeben und/oder zum Überwachen der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

17. Meßsystem nach einem der vorherigen Ansprüche, wobei die Meßsystem-Elektronik eingerichtet ist, anhand wenigstens eines der Schwingungsmeßsignale ein Verhältnis der Auslenkungen x1 der ersten Nutzschwingungen und der Auslenkungen x2 der zweiten Nutzschwingungen repräsentierende Auslenkungsverhältniswerte zu ermitteln, insb. nämlich einen oder mehrere der Auslenkungsverhältniswerte mit einem oder mehreren dafür vorgegebenen Bezugswerten zu vergleichen und/oder mehrere der Auslenkungsverhältniswerte zum Ermitteln eines Streuungsmaßes für das Auslenkungsverhältnis x1/x2 des wenigstens einen Rohrs zu verwenden.

18. Meßsystem nach dem vorherigen Anspruch,
- wobei die Meßsystem-Elektronik eingerichtet ist, zum Überwachen der Qualität des Meßstoffs einen oder mehrere der Auslenkungsverhältniswerte mit wenigstens einem dafür vorab ermittelten Bezugswert (Auslenkungsverhältnisreferenzwert) zu vergleichen, insb. bei auch bei einer Abweichung eines oder mehrerer der Auslenkungsverhältniswerte vom Bezugswert eine dies repräsentierende, insb. als Störungs-Alarm deklarierte, Meldung auszugeben; und/oder
- wobei die Meßsystem-Elektronik eingerichtet ist, anhand einer Vielzahl von Auslenkungsverhältniswerte ein Streuungsmaß, insb. eine empirische Varianz und/oder eine Spannweite, für das Auslenkungsverhältnis x1/x2 des wenigstens einen Rohrs zu ermitteln, insb. auch auszugeben und/oder zum Überwachen der Qualität des Meßstoffs nämliches Streuungsmaß mit einem dafür vorgegebene Bezugswert zu vergleichen und bei einer Abweichung Streuungsmaß vom Bezugswert eine dies repräsentierende Meldung auszugeben.

19. Meßsystem nach einem der vorherigen Ansprüche, wobei die Meßsystem-Elektronik eingerichtet ist, den zweiten Nutz-Stroms (eN2) mit einer vorgegebenen Strom-Amplitude bereitzustellen

20. Meßsystem nach dem vorherigen Anspruch, wobei die Meßsystem-Elektronik eingerichtet ist, zum Überwachen der Qualität des Meßstoffs wiederkehrend die Signal-Amplitude wenigstens einer der zweiten Nutz-Signalkomponenten (s1N2) mit einem von der Signal-Amplitude des zweiten Nutz-Stroms (eN2) abhängigen und/oder dafür vorgegebenen, insb. nämlich einer bei mit der vorgebebenen Strom-Amplitude des zweiten Nutz-Stroms (eN2) ermittelten Signal-Amplitude der wenigstens einen zweiten Nutz-Signalkomponente (s1N2) entsprechenden, Bezugswert, oder Amplitudereferenzwert, zu vergleichen, insb. nämlich festzustellen, ob oder inwieweit die Signal-Amplitude von nämlichem Bezugswert abweicht.

21. Meßsystem nach einem der vorherigen Ansprüche,
- wobei die ersten Nutz-Signalkomponenten (s1N1; s2N1) der ersten und zweiten Schwingungsmeßsignale einer Änderung eines Massenstromes des im Rohr geführten Meßstoffs mit einer Änderung einer Phasendifferenz der ersten Nutz-Signalkomponenten, nämlich einer Differenz zwischen einem Phasenwinkel der ersten Nutz-Signalkomponente (s1N1) des ersten Schwingungsmeßsignals (s1) und einem Phasenwinkel der ersten Nutz-Signalkomponente (s2N1) des zweiten Schwingungsmeßsignals (s2) folgen;
- und wobei die Meßsystem-Elektronik eingerichtet ist, anhand der Phasendifferenz der ersten Nutz-Signalkomponenten (s1N1; s2N1) den Massenstrom repräsentierende Massenstrom-Meßwerte zu generieren.

22. Meßsystem nach einem der vorherigen Ansprüche, wobei die Meßsystem-Elektronik eingerichtet ist, insb. zum Überwachen der Qualität des Meßstoffs, anhand der zweiten
Nutz-Signalkomponenten (s1N2; s2N2) wenigstens eines der Schwingungsmeßsignale, insb. anhand von deren Signal-Frequenz und/oder anhand von einer Signal-Amplitude wenigstens einer der zweiten Nutz-Signalkomponenten (s1N2) und/oder anhand von einem Phasenwinkel wenigstens einer der zweiten Nutz-Signalkomponente (s1N2), einen oder mehrere Kennzahlenwerte für wenigstens eine Meßstoff-Kennzahl (MK1) zu berechnen, die einen Betriebszustand des Meßsystems charakterisiert, insb. derart, daß nämliche Meßsystem-Kennzahl von einem oder mehreren Parametern einer zwischen der zweiten Nutz-Stromkomponenten des Treibersignals (e1) und der zweiten Nutz-Signalkomponenten (s1N2; s2N2) des wenigstens einen Schwingungsmeßsignals vermittelnden Systemfunktion des Meßsystems abhängig ist.

23. Meßsystem nach dem vorherigen Anspruch, wobei die Meßsystem-Elektronik (20) eingerichtet ist, zum Überwachen der Qualität des Meßstoffs einen oder mehrere Kennzahlenwerte für die Meßstoff-Kennzahl jeweils mit einem oder mehreren für die Meßstoff-Kennzahl, insb. vom Hersteller des Meßsystems und/oder bei der Herstellung und/oder einer Inbetriebnahme des Meßsystems und/oder in Abhängigkeit vom Treibersignal, ermittelten Bezugswerten, insb. einem oder mehreren eine verminderte Funktionstüchtigkeit des Meßwandlers repräsentierenden Bezugswerten und/oder einem oder mehreren eine Fehlfunktion des Meßwandlers repräsentierenden Bezugswerten und/oder einem oder mehreren einen defekten Meßwandler repräsentierenden Bezugswerten, zu vergleichen, insb. eine Abweichung eines oder mehrere der Kennzahlenwerte von einem oder mehreren der Bezugswerte zu bewerten und/oder zu quantifizieren.

24. Meßsystem nach einem der vorherigen Ansprüche, wobei die Meßsystem-Elektronik eingerichtet ist, das Treibersignal (e1) mit dem zweiten Nutz-Strom (eN2) während eines, insb. mehr als 10 ms andauernden und/oder zeitlich begrenzten und/oder wiederkehrend aufgestarteten, Testintervalls bereitzustellen; insb. derart, daß der zweite Nutz-Strom (eN2) nicht-flüchtig bzw. stationär ist, nämlich für zwei oder mehr Schwingungsperioden und/oder einen Zeitraum von mehr
als 10 ms (Millisekunden) eine im wesentlichen gleichbleibende, von Null verschiedene Amplitude aufweist.

25. Meßsystem nach einem der vorherigen Ansprüche,
- wobei die Erregeranordnung außer dem Schwingungserreger (31) keinen weiteren mit dem Rohr verbunden Schwingungserreger aufweist; und/oder
- wobei der Schwingungserreger (31) so positioniert und ausgerichtet ist, daß Antriebsversatz weniger als 0,5 mm beträgt, insb. nämlich Null ist, bzw. daß der Flächenschwerpunkt der Antriebs-Querschnittsfläche des Rohrs dem Antriebs-Referenzpunkt entspricht bzw. damit koinzidiert, und/oder
- wobei jede der Schwingungsmoden erster und zweiter Ordnung des Rohrs jeweils einen im ersten Rohrende des wenigstens einen Rohrs verorteten ersten Schwingungsknoten und einen im zweiten Rohrende des wenigstens einen Rohrs verorteten zweiten Schwingungsknoten aufweist; und/oder
- wobei das Rohr abschnittsweise, insb. kreisbogenförmig und/oder V-förmig, gekrümmt ist, insb. derart, daß das Rohr ein zentrales Scheitelbogensegment aufweist und/oder daß genau eine Hauptträgheitsachse des wenigstens einen Rohrs innerhalb der Referenz-Querschnittsfläche des wenigstens einen Rohrs liegt; und/oder
- wobei das Rohr abschnittsweise, insb. über die gesamte Rohrlänge, gerade ist, insb. derart, daß ein Massenschwerpunkt innerhalb der Referenz-Querschnittsfläche des wenigstens einen Rohrs liegt.

26. Meßsystem nach einem der vorherigen Ansprüche,
- wobei der Schwingungserreger (31) einen, insb. mittels eines Permanentmagneten gebildeten, magnetischen Anker sowie eine vom Magnetfeld des Ankers durchfluteten Spule, insb. nämlich eine Luftspule, aufweist;
- wobei der magnetische Anker unter Bildung des Antriebspunkts mechanisch mit dem wenigstens einen Rohr verbundenen ist; und
- wobei die Spule elektrisch an die Meßsystem-Elektronik angeschlossen und eingerichtet ist, das Treibersignal (e1) zu empfangen und dessen erste und zweite Nutz-Ströme (eN1, eN2) zu führen.

27. Meßsystem nach einem der vorherigen Ansprüche,
- wobei die Meßsystem-Elektronik eingerichtet ist, zum Überwachen der Qualität des Meßstoffs anhand der zweiten Nutz-Signalkomponenten (s1N2; s2N2), insb. anhand von sowohl der zweiten Nutz-Signalkomponenten (s1N2; s2N2) als auch der ersten Nutz-Signalkomponenten (s1N1; s2N1) festzustellen, ob und/oder inwieweit eine Störung des Meßstoffs vorliegt, insb. infolge einer unerwünschte Segregation des Meßstoffs und/oder infolge einer unerwünschten Belastung des Meßstoffs durch einen oder mehrerer Fremdstoffe; und/oder
- wobei die Meßsystem-Elektronik eingerichtet ist, festzustellen, ob und/oder inwieweit aufgrund einer Störung des Meßstoffs bei der Ermittlung der Meßwerte ein Meßfehler vorliegt.

## Claims

1. A vibronic measuring system, in particular a Coriolis mass flow meter or Coriolis mass flow/density meter, for measuring and/or monitoring at least one measured variable, in particular a flow parameter, that is to say, in particular a mass flow and/or a volume flow and/or a flow velocity, and/or a substance parameter, that is to say, in particular a density and/or a viscosity, of a fluid measured substance, in particular a gas, a liquid or a dispersion, said measuring system, in particular configured as an in-line measuring device and/or measuring device with a compact design, comprising:
- a measuring transducer (10)
∘ with a tube arrangement for conveying the flowing measured substance,
∘ with an exciter arrangement for converting electrical power into mechanical power serving to excite and maintain forced mechanical oscillations of the tube arrangement,
∘ and with a sensor arrangement for detecting mechanical oscillations of the tube arrangement and for supplying oscillation measurement signals each representing oscillatory movements of the tube arrangement;
- and measuring system electronics (20) electrically coupled to the measuring transducer (10), that is to say both to its exciter arrangement and to its sensor arrangement, in particular by means of electrical connecting cables, in particular formed by means of at least one microprocessor and/or arranged in an electronics protective housing, for operating the measuring transducer and for evaluating oscillation measurement signals delivered by the measuring transducer;
- wherein the tube arrangement has at least one tube (111), in particular curved at least in sections and/or straight at least in sections and/or a first tube,
∘ said tube extending from a first tube end to a second tube end with a tube length, in particular more than 100 mm, and having a lumen surrounded by an, in particular metal, tube wall extending from the first tube end to the second tube end,
∘ and said tube being configured to have the measured substance flow through it, at least in a flow direction going from the first tube end to the second tube end, and during that to be caused to oscillate,
∘ and wherein a number of oscillation modes, or natural modes, each with an associated resonant frequency (f1, f2, ... , fx) are inherent in the tube, in which the tube can execute or executes oscillatory movements with in each case one or more antinodes and in each case two or more nodes in such a way
▪ that oscillatory movements of the tube in a basic oscillation mode, that is to say an oscillation mode of the first order (f1-Mode), that is to say, in particular a bending oscillation mode of the first order, have exactly one antinode and two nodes,
▪ and in such a way that oscillatory movements of the tube in a higher-level oscillation mode, that is to say an oscillation mode of the second order or higher (f2-Mode, ... fx-Mode), that is to say, in particular a bending oscillation mode of the second order or higher, have two or more antinodes and three or more nodes;
- wherein the exciter arrangement has an, in particular electrodynamic, oscillation exciter (31)
∘ which is mechanically connected to the tube
∘ and is configured to convert electrical power of a time-variable electrical current into mechanical power in such a way that a time-variable driving force acts on the tube at a drive point formed by means of the oscillation exciter on the tube mechanically connected to it, in particular in such a way that an effective line of the driving force runs perpendicular to a normal of a drive cross-sectional area of the tube,
∘ wherein the oscillation exciter (31) is positioned and aligned in such a way that a drive offset (ΔE), that is to say a smallest distance between a drive cross-sectional area of the tube enclosed by an imaginary perimeter of the tube leading through the drive point and a specified reference cross-sectional area of the at least one tube, in particular ascertained with an intact measuring transducer or the original measuring transducer, is not more than 3°mm, in particular less than 2 mm, and/or less than 0.5% of the tube length, that is to say, in particular less than 0.2% of the tube length, that is to say, in particular is equal to zero with an intact measuring transducer or the original measuring transducer, wherein a node of oscillatory movements formed **between** two antinodes of said oscillatory movements of the at least one tube in an oscillation mode of the second order or higher different from the oscillation mode of the first order, in particular nominally located at a half tube length, is inside the reference cross-sectional area,
- and wherein the measuring system electronics (20) are configured to supply electrical current to the oscillation exciter (31), that is to say to supply electrical power to the oscillation exciter (31) using an electrical driver signal (e1) having a time-variable electrical current in such a way that the tube executes forced mechanical oscillations, in particular bending oscillations, with one or more oscillation frequencies predetermined by the driver signal (e1);
- wherein the sensor arrangement has an, in particular electrodynamic or optical, first oscillation sensor
∘ which is positioned on the tube, in particular spaced more than 10 mm and/or more than one fifth of the tube length away from the oscillation exciter in the flow direction, that is to say, in particular is at least partially mechanically connected to the tube,
∘ and which is configured to detect oscillatory movements of the tube and to convert them into an, in particular electrical or optical, first oscillation measurement signal representing said oscillatory movements, in particular in such a way that the first oscillation measurement signal contains one or more sinusoidal signal components each with a frequency corresponding to an oscillation frequency of oscillatory movements of the tube,
- wherein the sensor arrangement has at least an, in particular electrodynamic or optical, second oscillation sensor
∘ which is positioned on the tube, in particular spaced more than 10 mm and/or more than one fifth of the tube length away from the oscillation exciter in the flow direction and/or away from the first oscillation sensor in the flow direction, that is to say, in particular is at least partially mechanically connected to the tube,
∘ and which is configured to detect oscillatory movements of the tube and to convert them into an, in particular electrical or optical, second oscillation measurement signal representing said oscillatory movements, in particular in such a way that the second oscillation measurement signal contains one or more sinusoidal signal components each with a frequency corresponding to an oscillation frequency of oscillatory movements of the tube,
- and wherein the measuring system electronics are configured to receive and evaluate the first and second oscillation measurement signals, that is to say, in particular to determine and output measured values representing the at least one measured variable;
- wherein the measuring system electronics are configured
∘ both to supply the driver signal (e1) at least occasionally with a sinusoidal first useful current (eN1) having a first alternating current frequency in such a way
▪ that the tube executes at least partially, in particular predominantly, first useful oscillations, that is to say mechanical oscillations with a first useful frequency forced by the oscillation exciter supplied with current, that is to say an oscillation frequency corresponding to the first alternating current frequency, in particular in such a way that the first useful frequency differs from a resonant frequency, f1, of the basic oscillation mode by less than 1% of said resonant frequency, f1, and/or by less than 1 Hz and/or in such a way that the first useful frequency differs from a resonant frequency, f2,of the oscillation mode of the second order by more than 5% of said resonant frequency, f2, and/or by more than 10 Hz and/or in such a way that the first useful oscillations are suitable for effecting in the flowing measured substance Coriolis forces dependent on the mass flow,
▪ and in such a way that both of the first and second oscillation signals (s1; s2) have in each case a first useful signal component (s1N1; s2N1), that is to say a sinusoidal signal component with a signal frequency corresponding to the first useful frequency,
∘ and also to determine measured values representing the at least one measured variable, in particular mass flow measured values representing the mass flow of the measured substance and/or density measured values representing the density of the measured substance, based on at least the first useful signal components (s1N1; s2N1), in particular based on their signal frequency and/or based on an amplitude of at least one of the first useful signal components (s1N1; s2N1) and/or based on a phase angle of at least one of the first useful signal components (s1N1; s2N1),
- and wherein the measuring system electronics are configured
∘ both to supply the driver signal (e1) at least occasionally, in particular during a test interval that lasts for no less than 1 s (second) and/or is temporary and/or is restarted repeatedly, with a sinusoidal second useful current (eN2) having a second alternating current frequency in such a way
▪ that the second alternating current frequency differs from a resonant frequency, f2, of the oscillation mode of the second order by less than 1%, in particular by less than 0.1%, of said resonant frequency, f2, and/or by less than 1 Hz, in particular by less than 0.1 Hz, in particular for two or more oscillation periods and/or for a time period of more than 10 ms,
▪ and in such a way that the tube at least partially executes - in particular simultaneously with the first useful oscillations and/or stationary, that is to say for two or more oscillation periods and/or for a time period of more than 10 ms, having a consistent oscillation amplitude that is not zero - second useful oscillations, that is to say mechanical oscillations with a second useful frequency forced by the oscillation exciter supplied with current, that is to say an oscillation frequency corresponding to the second alternating current frequency, whereby both of the first and second oscillation signals in each case have a second useful signal component (s1N2; s2N2), that is to say a sinusoidal signal component with a signal frequency corresponding to the second useful frequency,
∘ and to monitor a quality of the measured substance, that is to say, in particular to detect whether there is a problem with the measured substance, that is to say an unwanted change in one or more substance parameters of the measured substance
▪ based on at least one of the second useful signal components (s1N2; s2N2), in particular based on their signal frequency and/or based on a signal amplitude of at least one of the second useful signal components (s1N2) and/or based on a phase angle of at least one of the second useful signal components (s1N2).

2. The measuring system as claimed in claim 1, wherein the first useful frequency differs from a resonant frequency, f1, of the basic oscillation mode by less than 1% of said resonant frequency, f1, and/or by less than 1 Hz, that is to say, in particular corresponds to the resonant frequency, f1.

3. The measuring system as claimed in claim 1, wherein the first useful frequency differs from a resonant frequency, f3, of an oscillation mode of the third order inherent in the at least one tube, that is to say, in particular a bending oscillation mode of the third order, in which oscillation mode the oscillatory movements of the tube have exactly three antinodes and two nodes, by less than 1% of said resonant frequency, f3, and/or by less than 1 Hz, that is to say, in particular corresponds to the resonant frequency, f3.

4. The measuring system as claimed in the preceding claim, wherein a first node of oscillatory movements of the at least one tube is located in the first tube end in the oscillation mode of the third order and a second node is located in the second tube end in the oscillation mode of the third order.

5. The measuring system as claimed in one of the preceding claims, wherein the higher-level oscillation mode corresponds to an oscillation mode of the second order (f2-Mode), that is to say, in particular a bending oscillation mode of the second order, in which oscillation mode of the second order the oscillatory movements of the tube have exactly two antinodes and three nodes.

6. The measuring system as claimed in the preceding claim,
- wherein a node of the oscillatory movements formed between the two antinodes of said oscillatory movements of the at least one tube in the oscillation mode of the second order, in particular nominally located at a half tube length, is inside the reference cross-sectional area;
- and/or wherein a main axis of inertia of the at least one tube located perpendicular to the direction of oscillation of the oscillatory movements of the tube in the oscillation mode of the second order is inside the reference cross-sectional area of the at least one tube; and/or
- wherein the drive offset corresponds to a distance between a centroid of an area, or center point, of the drive cross-sectional area of the tube and a centroid of an area, or center point, of the reference cross-sectional area of the at least one tube; and/or
- wherein an effective line of the driving force runs perpendicular to a normal of a drive cross-sectional area of the tube; and/or
- wherein an intersection line between two planes of symmetry which are orthogonal relative to one another of the at least one tube is inside the reference cross-sectional area; and/or
- wherein a main axis of inertia of the at least one tube located perpendicular to the driving force is inside the reference cross-sectional area of the at least one tube.

7. The measuring system as claimed in one of the preceding claims,
- wherein the measuring system electronics are configured to supply the second useful current of the driver signal (e1) at least sometimes simultaneously with the first useful current, in particular in such a way that an amplitude of the first useful current is not set to be less than an amplitude of the second useful current and/or in such a way that an amplitude of the second useful current is set to more than 40%, in particular not less than 50%, of an amplitude of the first useful current; and/or
- wherein the measuring system electronics are configured to set the second alternating current frequency as a function of the first alternating current frequency, in particular in such a way that the second alternating current frequency is within a frequency setting interval of which an upper interval limit and/or a lower interval limit and/or a center frequency correspond to a specified multiple of the first alternating current frequency, that is to say, in particular correspond to a multiple of the first alternating current frequency corresponding to more than 230% of the first alternating current frequency and/or less than 300% of the first alternating current frequency.

8. The measuring system as claimed in one of the preceding claims,
- wherein the measuring system electronics are configured to determine a signal amplitude of a modal deflection of the first useful oscillations corresponding to the first useful signal components (s1N1), in particular a difference between the signal amplitudes of the first useful signal components (s1N1; s2N1), that is to say, in particular to determine deflection values representing the deflection of the first useful oscillations based on at least one of the oscillation measurement signals; and/or
- wherein the measuring system electronics are configured to determine a signal amplitude of a modal deflection of the first useful oscillations corresponding to the second useful signal components (s1N1), in particular a difference between the signal amplitudes of the second useful signal components (s1N1; s2N1), that is to say, in particular to determine deflection values representing the deflection of the second useful oscillations based on at least one of the oscillation measurement signals; and/or
- wherein the measuring system electronics are configured to determine a deflection ratio x1/x2 corresponding to a ratio of the modal deflection of the first useful oscillations and the modal deflection of the second useful oscillations, that is to say, in particular to determine deflection ratio values representing the deflection ratio x1/x2 based on at least one of the oscillation measurement signals; and/or
- wherein the measuring system electronics are configured to determine a modal damping of the first useful oscillations corresponding to a ratio of the signal amplitude of one of the first useful signal components (s1N1), in particular a total of or a difference between the signal amplitudes of the first useful signal components (s1N1; s2N1), and a signal amplitude of the first useful current, that is to say, in particular to determine damping values representing the damping of the first useful oscillations based on the driver signal and at least one of the oscillation measurement signals; and/or
- wherein the measuring system electronics are configured to determine a modal damping of the second useful oscillations corresponding to a ratio of the signal amplitude of one of the second useful signal components (s1N2), in particular a total of or a difference between the signal amplitudes of the second useful signal components (s1N2, s2N2), and a signal amplitude of the second useful current, that is to say, in particular to determine damping values representing the damping of the second useful oscillations based on the driver signal and at least one of the oscillation measurement signals; and/or
- wherein the measuring system electronics are configured to determine a damping ratio d1/d2 corresponding to a ratio of the modal damping of the first useful oscillations and the modal damping of the second useful oscillations, that is to say, in particular to determine damping ratio values representing the damping ratio d1/d2 based on the driver signal and/or at least one of the oscillation measurement signals; and/or
- wherein the measuring system electronics are configured to determine the resonant frequency f1 of the first oscillation mode of the at least one tube, that is to say, in particular to determine frequency values representing the resonant frequency f1 based on the driver signal and/or at least one of the oscillation measurement signals; and/or
- wherein the measuring system electronics are configured to determine the resonant frequency f2 of the second oscillation mode of the at least one tube, that is to say, in particular to determine frequency values representing the resonant frequency f2 based on the driver signal and/or at least one of the oscillation measurement signals; and/or
- wherein the measuring system electronics are configured to determine a resonant frequency ratio f1/f2 corresponding to a ratio of the resonant frequency f1 of the first oscillation mode of the at least one tube and the resonant frequency f2 of the second oscillation mode of the at least one tube, that is to say, in particular to determine frequency ratio values representing the resonant frequency ratio f1/f2 based on the first and second alternating current frequencies of the driver signal and/or based on the signal frequencies of the first and second useful signal components (s1N1, s1N2; s2N1, s2N2) of at least one of the oscillation measurement signals.

9. The measuring system as claimed in one of the preceding claims, wherein the measuring system electronics are configured to determine damping values representing a modal damping of the second useful oscillations based on the driver signal and at least one of the oscillation measurement signals, that is to say, in particular to compare one or more of the damping values with a reference value ascertained for this in advance, or damping reference value.

10. The measuring system as claimed in the preceding claim,
- wherein the measuring system electronics are configured, in order to monitor the quality of the measured substance, to compare one or more of the damping values with at least one reference value ascertained for this in advance and/or ascertained using an intact measuring system, or damping reference value, in particular in the event that one or more of the damping values differ from the reference value, to output a notification representing this, in particular declared as a fault alarm; and/or
- wherein the measuring system electronics are configured, in order to monitor the quality of the measured substance, to ascertain a temporal change, that is to say, in particular a change trend and/or a change rate and/or a change speed, of the damping of the second useful oscillations based on several of the damping values, that is to say, in particular if the damping of the second useful oscillations decreases, to ascertain a fault that is becoming more serious and/or to output a notification, in particular declared as a fault alarm, representing the worsening of the fault; and/or
- wherein the measuring system electronics are configured to determine a measure of dispersion, in particular an empirical variance and/or a span, for damping of the second useful oscillations of the at least one tube using a variety of damping values, in particular also to output said measure of dispersion and/or, in order to monitor the quality of the measured substance, to compare said measure of dispersion with one or more reference values specified for this.

11. The measuring system as claimed in one of the preceding claims, wherein the measuring system electronics are configured to determine frequency values representing the resonant frequency f2 of the second oscillation mode of the at least one tube based on the driver signal and/or at least one of the oscillation measurement signals, that is to say, in particular to compare one or more of the frequency values with one or more reference values specified for this and/or to use several of the frequency values to determine a measure of dispersion for the resonant frequency f2 of second oscillation mode of the at least one tube.

12. The measuring system as claimed in the preceding claim, wherein the measuring system electronics are configured to determine a measure of dispersion for the resonant frequency f2 of the second oscillation mode of the at least one tube based on a variety of frequency values, in particular also to output this measure of dispersion and/or, in order to monitor the quality of the measured substance, to compare said measure of dispersion with a reference value specified for this and, in the event that the measure of dispersion differs from the reference value, to output a notification representing this.

13. The measuring system as claimed in one of the preceding claims, wherein the measuring system electronics are configured to determine frequency ratio values representing a ratio of the resonant frequency f1 of the first oscillation mode of the at least one tube and the resonant frequency f2 of the second oscillation mode of the at least one tube based on the driver signal and/or at least one of the oscillation measurement signals, that is to say, in particular to compare one or more of the frequency ratio values with one or more reference values specified for this and/or to use several of the frequency ratio values to determine a measure of dispersion for the resonant frequency ratio f1/f2 of the at least one tube.

14. The measuring system as claimed in the preceding claim,
- wherein the measuring system electronics are configured, in order to monitor the quality of the measured substance, to compare one or more of the frequency ratio values with at least one reference value ascertained for this in advance, or frequency ratio reference value, in particular in the event that one or more of the frequency ratio values differ from the reference value, to output a notification representing this, in particular declared as a fault alarm; and/or
- wherein the measuring system electronics are configured to determine a measure of dispersion, in particular an empirical variance and/or a span, for the resonant frequency ratio f1/f2 of the at least one tube, using a variety of frequency ratio values, in particular also to output said measure of dispersion and/or, in order to monitor the quality of the measured substance, to compare said measure of dispersion with a reference value specified for this and, in the event that the measure of dispersion differs from the reference value, to output a notification representing this.

15. The measuring system as claimed in one of the preceding claims, wherein the measuring system electronics are configured to determine phase difference values representing a phase difference between the second useful signal components, that is to say a difference between a phase angle of the second useful signal component (s1N2) of the first oscillation measurement signal (s1) and a phase angle of the second useful signal component (s2N2) of the second oscillation measurement signal (s2) based on the oscillation measurement signals, that is to say, in particular to compare one or more of the phase difference values with a reference value ascertained for this in advance, or phase difference reference value, and/or to use several of the phase difference values to determine a measure of dispersion for the phase difference between the second useful signal components of the at least one tube.

16. The measuring system as claimed in the preceding claim,
- wherein the measuring system electronics are configured, in order to monitor the quality of the measured substance, to compare one or more of the phase difference values with at least one reference value (phase difference reference value) ascertained for this in advance, in particular in the event that one or more of the phase difference values differ from the reference value, to output a notification representing this, in particular declared as a fault alarm; and/or
- wherein the measuring system electronics are configured to determine a measure of dispersion, in particular an empirical variance and/or a span, for the phase difference between the second useful signal components using a variety of phase difference values, in particular also to output said measure of dispersion and/or, in order to monitor the quality of the measured substance, to compare said measure of dispersion with a reference value specified for this and, in the event that the measure of dispersion differs from the reference value, to output a notification representing this.

17. The measuring system as claimed in one of the preceding claims, wherein the measuring system electronics are configured to determine deflection ratio values representing a ratio of the deflections x1 of the first useful oscillations and the deflections x2 of the second useful oscillations based on at least one of the oscillation measurement signals, that is to say, in particular to compare one or more of the deflection ratio values with one or more reference values specified for this and/or to use several of the deflection ratio values to determine a measure of dispersion for the deflection ratio x1/x2 of the at least one tube.

18. The measuring system as claimed in the preceding claim,
- wherein the measuring system electronics are configured, in order to monitor the quality of the measured substance, to compare one or more of the deflection ratio values with at least one reference value (deflection ratio reference value) ascertained for this in advance, in particular in the event that one or more of the deflection ratio values differ from the reference value, to output a notification representing this, in particular declared as a fault alarm; and/or
- wherein the measuring system electronics are configured to determine a measure of dispersion, in particular an empirical variance and/or a span, for the deflection ratio x1/x2 of the at least one tube, using a variety of deflection ratio values, in particular also to output said measure of dispersion and/or, in order to monitor the quality of the measured substance, to compare said measure of dispersion with a reference value specified for this and, in the event that the measure of dispersion differs from the reference value, to output a notification representing this.

19. The measuring system as claimed in one of the preceding claims, wherein the measuring system electronics are configured to provide the second useful current (eN2) with a specified current amplitude.

20. The measuring system as claimed in the preceding claim, wherein the measuring system electronics are configured, in order monitor the quality of the measured substance, to repeatedly compare the signal amplitude of at least one of the second useful signal components (s1N2) with a reference value dependent on the signal amplitude of the second useful current (eN2) and/or specified for this, that is to say, in particular corresponding to a signal amplitude of the at least one second useful signal component (s1N2) ascertained at a second useful current (eN2) with the specified current amplitude, or a amplitude reference value, that is to say, in particular to detect whether or to what extent the signal amplitude differs from said reference value.

21. The measuring system as claimed in one of the preceding claims,
- wherein the first useful signal components (s1N1; s2N1) of the first and second oscillation measurement signals follow a change in a mass flow of the measured substance conducted in the tube with a change in a phase difference between the first useful signal components, that is to say a difference between a phase angle of the first useful signal component (s1N1) of the first oscillation measurement signal (s1) and a phase angle of the first useful signal component (s2N1) of the second oscillation measurement signal (s2);
- and wherein the measuring system electronics are configured to generate mass flow measured values representing the mass flow based on the phase difference between the first useful signal components (s1N1; s2N1).

22. The measuring system as claimed in one of the preceding claims, wherein the measuring system electronics are configured, in particular in order to monitor the quality of the measured substance, to calculate one or more characterizing number values for at least one measured substance characterizing number (MK1) which characterizes an operating state of the measuring system, based on the second useful signal components (s1N2; s2N2) of at least one of the oscillation measurement signals, in particular based on their signal frequency and/or based on a signal amplitude of at least one of the second useful signal components (s1N2) and/or based on a phase angle of at least one of the second useful signal components (s1N2), in particular in such a way that said measuring system characterizing number depends on one or more parameters of a system function of the measuring system mediating between the second useful current components of the driver signal (e1) and the second useful signal components (s1N2; s2N2) of the at least one oscillation measurement signal.

23. The measuring system as claimed in the preceding claim, wherein the measuring system electronics (20) are configured, in order to monitor the quality of the measured substance, to compare one or more characterizing number values for the measured substance characterizing number in each case with one or more reference values ascertained for the measured substance characterizing number, in particular by the manufacturer of the measuring system and/or during manufacture and/or a start-up of the measuring system and/or as a function of the driver signal, in particular one or more reference values representing a lessened functionality of the measuring transducer and/or one or more reference values representing a malfunctioning of the measuring transducer and/or one or more reference values representing a defective measuring transducer, in particular to evaluate and/or to quantify a deviation of one or more of the characterizing number values from one or more of the reference values.

24. The measuring system as claimed in one of the preceding claims, wherein the measuring system electronics are configured to supply the driver signal (e1) with the second useful current (eN2) during a test interval, in particular one that lasts for more than 10 ms and/or is temporary and/or is restarted repeatedly; in particular in such a way that the second useful current (eN2) is non-volatile or stationary, that is to say has a mostly constant amplitude that is not zero for two or more oscillation periods and/or for a time period of more than 10 ms (milliseconds).

25. The measuring system as claimed in one of the preceding claims,
- wherein the exciter arrangement, with the exception of the oscillation exciter (31), does not have any other oscillation exciters that are connected to the tube; and/or
- wherein the oscillation exciter (31) is positioned and aligned in such a way that the drive offset is less than 0.5 mm, that is to say, in particular is zero, or in such a way that the centroid of an area of the drive cross-sectional area of the tube corresponds to the drive reference point or coincides with it, and/or
- wherein both of the oscillation modes of the first and of the second order of the tube have in each case a first node located in the first tube end of the at least one tube and a second node located in the second tube end of the at least one tube; and/or
- wherein the tube is curved in sections, in particular is in the shape of an arc and/or a V, in particular in such a way that the tube has a central crown segment and/or in such a way that precisely one main axis of inertia of the at least one tube is inside the reference cross-sectional area of the at least one tube; and/or
- wherein the tube is straight in sections, in particular over the entire tube length, in particular in such a way that a center of mass is inside the reference cross-sectional area of the at least one tube.

26. The measuring system as claimed in one of the preceding claims,
- wherein the oscillation exciter (31) has a magnetic anchor, in particular one formed by a permanent magnet, and a coil subjected to the magnetic field of the anchor, that is to say, in particular an air coil;
- wherein the magnetic anchor is mechanically connected to the at least one tube, thereby forming the drive point; and
- wherein the coil is electrically connected to the measuring system electronics and is configured to receive the driver signal (e1) and to conduct its first and second useful currents (eN1, eN2).

27. The measuring system as claimed in one of the preceding claims,
- wherein the measuring system electronics are configured, in order to monitor the quality of the measured substance, to detect whether and/or to what extent there is a problem with the measured substance, in particular due to an unwanted segregation of the measured substance and/or due to contamination of the measured substance by one or more foreign substances, based on the second useful signal components (s1N2; s2N2), in particular based on both the second useful signal components (s1N2; s2N2) and the first useful signal components (s1N1; s2N1); and/or
- wherein the measuring system electronics are configured to detect whether and/or to what extent a measurement error is present due to a problem with the measured substance when ascertaining the measured values.

## Revendications

1. Système de mesure vibronique, notamment un débitmètre massique Coriolis ou un débitmètre massique/densimètre Coriolis, destiné à mesurer et/ou à surveiller au moins une grandeur de mesure, notamment un paramètre d'écoulement, notamment à savoir un débit massique et/ou un débit volumique et/ou une vitesse d'écoulement, et/ou un paramètre de produit, notamment une densité et/ou une viscosité, d'un produit fluide, notamment d'un gaz, d'un liquide ou d'une dispersion, lequel système de mesure, réalisé notamment en tant qu'appareil de mesure en ligne et/ou appareil de mesure de construction compacte, comprend :
- un transducteur (10)
-- avec un agencement de tubes destiné à guider le produit en écoulement,
-- avec un circuit d'excitation destiné à convertir la puissance électrique en puissance mécanique servant à exciter et à maintenir des vibrations mécaniques forcées de l'agencement de tubes
-- et avec un agencement de capteurs destiné à détecter les vibrations mécaniques de l'agencement de tubes et à fournir des signaux de mesure de vibration représentant les mouvements de vibration respectifs de l'agencement de tubes ;
- ainsi qu'une électronique de système de mesure (20) couplée électriquement au transducteur (10), à savoir aussi bien à son circuit d'excitation qu'à son arrangement de capteurs, notamment au moyen de lignes de liaison électriques, laquelle électronique est notamment formée au moyen d'au moins un microprocesseur et/ou disposée dans un boîtier de protection électronique, laquelle électronique est destinée à commander le transducteur et à évaluer les signaux de mesure de vibration fournis par le transducteur ;
- l'agencement de tubes présentant au moins un premier tube (111), notamment un tube courbé au moins par sections et/ou un tube droit au moins par sections,
-- lequel tube s'étend d'une première extrémité de tube jusqu'à une deuxième extrémité de tube avec une longueur de tube, notamment supérieure à 100 mm, et présente un canal intérieur entouré d'une paroi de tube, lequel canal est notamment métallique et s'étend de la première extrémité de tube jusqu'à la deuxième extrémité de tube,
-- et lequel tube est conçu pour être traversé par un produit au moins dans une direction d'écoulement orientée de la première extrémité de tube vers la deuxième extrémité de tube et pour être laissé vibrer pendant ce temps,
-- et le tube possédant une pluralité de modes de vibration, ou formes de vibration propres, lesquels modes présentent chacun une fréquence de résonance (f1, f2, ..., fx) correspondante, modes dans lesquels le tube peut exécuter ou exécute des mouvements de vibration présentant respectivement un ou plusieurs ventres de vibration et respectivement deux ou plusieurs nœuds de vibration, de telle sorte
--- que les mouvements de vibration du tube dans un mode de vibration fondamental, à savoir un mode de vibration de premier ordre (mode f1), notamment à savoir un mode de vibration de flexion de premier ordre, présentent exactement un ventre de vibration et deux nœuds de vibration
--- et que les mouvements de vibration du tube dans un mode de vibration supérieur, à savoir un mode de vibration de deuxième ordre ou d'ordre supérieur (mode f2, ..., mode fx), notamment à savoir un mode de vibration de flexion de deuxième ordre ou d'ordre supérieur, présentent deux ventres de vibration ou plus et trois nœuds de vibration ou plus ;
- pour lequel le circuit d'excitation présente un excitateur de vibrations (31), notamment électrodynamique,
-- lequel excitateur est relié mécaniquement au tube
-- et lequel excitateur est conçu pour convertir une puissance électrique avec un courant électrique variable dans le temps en une puissance mécanique, de telle sorte qu'en un point d'entraînement formé au moyen de l'excitateur de vibrations sur le tube relié mécaniquement audit excitateur, une force d'entraînement variable dans le temps agit sur le tube, notamment de telle sorte qu'une ligne d'action de la force d'entraînement s'étend perpendiculairement à une normale d'une surface de section transversale d'entraînement du tube,
-- l'excitateur de vibrations (31) étant positionné et orienté de telle sorte qu'un décalage d'entraînement (ΔE) - à savoir une distance minimale entre une surface de section d'entraînement du tube, laquelle surface est entourée par une ligne périphérique imaginaire du tube passant par le point d'entraînement, et une surface de section transversale de référence de l'au moins un tube, laquelle surface est notamment déterminée lorsque le transducteur est intact ou d'origine
- n'est pas supérieur à 3 mm, notamment est inférieur à 2 mm, et/ou inférieur à 0,5 % de la longueur de tube, notamment à savoir inférieur à 0,2 % de la longueur de tube, notamment à savoir est égal à zéro lorsque le transducteur est intact ou d'origine, un nœud de vibration de mouvements de vibration identiques, formé entre deux ventres de vibration de mouvements de vibration de l'au moins un tube dans un mode de vibration de deuxième ordre ou d'ordre supérieur différent du mode de vibration de premier ordre, notamment situé nominalement à une demi-longueur de tube, se trouvant à l'intérieur de la surface de section transversale de référence,
- et pour lequel l'électronique de système de mesure (20) est conçue pour alimenter l'excitateur de vibrations (31), à savoir pour injecter une puissance électrique dans l'excitateur de vibrations (31) au moyen d'un signal d'excitation électrique (e1) présentant un courant électrique variable dans le temps, de telle sorte que le tube exécute des vibrations mécaniques forcées, notamment des vibrations de flexion, avec une ou plusieurs fréquences de vibration prédéfinies par le signal d'attaque (e1) ;
- pour lequel l'agencement de capteurs présente un premier capteur de vibrations, notamment électrodynamique ou optique,
-- lequel capteur est positionné sur le tube, notamment à une distance de plus de 10 mm et/ou de plus d'un cinquième de la longueur de tube dans le sens de l'écoulement par rapport à l'excitateur de vibrations, notamment relié mécaniquement au moins partiellement au tube,
-- et lequel capteur est conçu pour détecter les mouvements de vibration du tube et les convertir en un premier signal de mesure de vibration représentant les mouvements de vibration, lequel signal est notamment électrique ou optique, notamment de telle sorte que le premier signal de mesure de vibration contienne une ou plusieurs composantes de signal sinusoïdales présentant chacune une fréquence correspondant à une fréquence de vibration des mouvements de vibration du tube,
- pour lequel l'agencement de capteurs présente au moins un deuxième capteur de vibration, notamment électrodynamique ou optique,
-- lequel capteur est positionné sur le tube, notamment relié mécaniquement au moins partiellement au tube, notamment à une distance de plus de 10 mm dans le sens de l'écoulement et/ou de plus d'un cinquième de la longueur de tube par rapport à l'excitateur de vibrations et/ou à une distance du premier capteur de vibration dans le sens de l'écoulement,
-- et lequel capteur est conçu pour détecter des mouvements de vibration du tube et les convertir en un deuxième signal de mesure de vibration, lequel signal est notamment électrique ou optique et représentant lesdits mouvements de vibration, notamment de telle sorte que le deuxième signal de mesure de vibration contienne une ou plusieurs composantes de signal sinusoïdales présentant chacune une fréquence correspondant à une fréquence de vibration des mouvements de vibration du tube,
- et pour lequel l'électronique de système de mesure est conçue pour recevoir et évaluer les premier et deuxième signaux de mesure de vibration, notamment pour déterminer et émettre des valeurs mesurées représentant au moins une grandeur de mesure ;
- pour lequel l'électronique de système de système est conçue,
-- à la fois pour fournir le signal d'attaque (e1) au moins par moments avec un premier courant utile (eN1) sinusoïdal présentant une première fréquence de courant alternatif, de telle sorte
--- que le tube exécute au moins en partie, notamment de manière prépondérante, des premières vibrations utiles, à savoir des vibrations mécaniques forcées par l'excitateur de vibrations alimenté, avec une première fréquence utile, à savoir une fréquence de vibration correspondant à la première fréquence de courant alternatif, notamment de telle sorte que la première fréquence utile s'écarte d'une fréquence de résonance, f1, du mode de vibration fondamental de moins de 1 % de la fréquence de résonance, f1, et/ou de moins de 1 Hz et/ou que la première fréquence utile s'écarte d'une fréquence de résonance, f2, du mode de vibration de deuxième ordre de plus de 5 % de la fréquence de résonance, f2, et/ou de plus de 10 Hz et/ou que les premières vibrations utiles sont aptes à provoquer dans le produit en écoulement des forces de Coriolis dépendant du débit massique,
--- et que chacun des premier et deuxième signaux de vibration (s1 ; s2), présentent respectivement une première composante de signal utile (s1N1 ; s2N1), à savoir une composante de signal sinusoïdale avec une fréquence de signal correspondant à la première fréquence utile,
-- et pour déterminer - à l'aide d'au moins les premières composantes de signal utiles (s1N1 ; s2N1), notamment à l'aide de leur fréquence de signal et/ou à l'aide d'une amplitude d'au moins l'une des premières composantes de signal utiles (s1N1 ; s2N1) et/ou à l'aide d'un angle de phase d'au moins l'une des premières composantes de signal utiles (s1N1 ; s2N1) - des valeurs mesurées représentant l'au moins une grandeur de mesure, notamment des valeurs mesurées de débit massique représentant le débit massique du produit mesuré et/ou des valeurs mesurées de densité représentant la densité du produit mesuré ;
- et pour lequel l'électronique de système est conçue,
-- à la fois pour fournir le signal d'attaque (e1) au moins par moments, notamment pendant un intervalle de test qui ne dure pas moins de 1 s (seconde) et/ou qui est limité dans le temps et/ou qui est lancé de manière répétée, avec un deuxième courant utile (eN2) sinusoïdal présentant une deuxième fréquence de courant alternatif, de telle sorte
--- que la deuxième fréquence de courant alternatif s'écarte, notamment pour deux ou plusieurs périodes de vibration et/ou une période de plus de 10 ms, d'une fréquence de résonance, f2, du mode de vibration de deuxième ordre de moins de 1 %, notamment de moins de 0,1 %, de ladite fréquence de résonance, f2, et/ou de moins de 1 Hz, notamment de moins de 0,1 Hz,
--- et que le tube exécute au moins en partie - notamment simultanément aux premières vibrations utiles et/ou de manière stationnaire, à savoir pendant deux ou plusieurs périodes de vibration et/ou une période de plus de 10 ms présentant une amplitude de vibration constante, différente de zéro - des deuxièmes vibrations utiles, à savoir des vibrations mécaniques forcées par l'excitateur de vibrations alimenté avec une deuxième fréquence utile, à savoir une fréquence de vibration correspondant à la deuxième fréquence de courant alternatif, ce par quoi chacun des premiers et deuxièmes signaux de vibration présente respectivement une deuxième composante de signal utile (s1N2 ; s2N2), à savoir une composante de signal sinusoïdale avec une fréquence de signal correspondant à la deuxième fréquence utile,
-- et, à l'aide d'au moins l'une des deuxièmes composantes de signal utiles (s1N2 ; s2N2), notamment à l'aide de leur fréquence de signal à l'aide d'une amplitude de signal d'au moins l'une des deuxièmes composantes de signal utiles (s1N2) et/ou à l'aide d'un angle de phase d'au moins l'une des deuxièmes composantes de signal utiles (s1N2),
--- pour surveiller une qualité du produit mesuré, notamment pour constater la présence d'un défaut du produit mesuré, à savoir une modification indésirable d'un ou de plusieurs paramètres du produit mesuré.

2. Système de mesure selon la revendication 1, pour lequel la première fréquence utile s'écarte d'une fréquence de résonance, f1, du mode de vibration fondamental de moins de 1 % de la même fréquence de résonance, f1, et/ou de moins de 1 Hz, notamment à savoir correspond à la fréquence de résonance, f1.

3. Système de mesure selon la revendication 1, pour lequel la première fréquence utile s'écarte d'une fréquence de résonance, f3, d'un mode de vibration de troisième ordre inhérent à l'au moins un tube, notamment d'un mode de vibration de flexion de troisième ordre, mode de vibration dans lequel les mouvements de vibration du tube présentent exactement trois ventres de vibration et deux nœuds de vibration, de moins de 1 % de la fréquence de résonance, f3, et/ou de moins de 1 Hz, notamment à savoir correspond à la fréquence de résonance, f3.

4. Système de mesure selon la revendication précédente, pour lequel un premier nœud de vibration des mouvements de vibration de l'au moins un tube dans le mode de vibration de troisième ordre est situé dans la première extrémité du tube et un deuxième nœud de vibration du mode de vibration de troisième ordre est situé dans la deuxième extrémité du tube.

5. Système de mesure selon l'une des revendications précédentes, pour lequel le mode de vibration supérieur correspond à un mode de vibration de deuxième ordre (mode f2), notamment à un mode de vibration de flexion de deuxième ordre, mode de vibration de deuxième ordre dans lequel les mouvements de vibration du tube présentent exactement deux ventres de vibration et trois nœuds de vibration.

6. Système de mesure selon la revendication précédente,
- pour lequel un nœud de vibration des mouvements de vibration, lequel nœud est formé entre les deux ventres de vibration des mouvements de vibration de l'au moins un tube dans le mode de vibration de deuxième ordre, lequel nœud est notamment situé nominalement à une demi-longueur de tube, se trouve à l'intérieur de la surface de section transversale de référence ;
- et/ou pour lequel un axe principal d'inertie de l'au moins un tube, perpendiculaire à la direction de vibration des mouvements de vibration du tube dans le mode de vibration de deuxième ordre, est situé à l'intérieur de la surface de section transversale de référence de l'au moins un tube ; et/ou
- pour lequel le décalage d'entraînement correspond à une distance entre un centre de gravité de surface, ou centre, de la surface de section transversale d'entraînement du tube et un centre de gravité de surface, ou centre, de la surface de section transversale de référence de l'au moins un tube ; et/ou
- une ligne d'action de la force d'entraînement étant perpendiculaire à une normale d'une surface de section transversale d'entraînement du tube ; et/ou
- une droite d'intersection de deux plans de symétrie mutuellement orthogonaux de l'au moins un tube se trouvant à l'intérieur de la surface de section transversale de référence ; et/ou
- un axe principal d'inertie de l'au moins un tube, lequel axe est perpendiculaire à la force d'entraînement, étant situé à l'intérieur de la surface de section transversale de référence de l'au moins un tube.

7. Système de mesure selon l'une des revendications précédentes,
- pour lequel l'électronique de système de mesure est conçue pour fournir le deuxième courant utile du signal d'attaque (e1) au moins par moments simultanément avec le premier courant utile, notamment de telle sorte qu'une amplitude du premier courant utile soit réglée plus petite qu'une amplitude du deuxième courant utile et/ou qu'une amplitude du deuxième courant utile soit réglée à plus de 40 %, notamment à pas moins de 50 %, d'une amplitude du premier courant utile ; et/ou
- pour lequel l'électronique de système de mesure est conçue pour régler la deuxième fréquence de courant alternatif en fonction de la première fréquence de courant alternatif, notamment de telle sorte que la deuxième fréquence de courant alternatif se situe à l'intérieur d'un intervalle de fréquence dont une limite d'intervalle supérieure et/ou une limite d'intervalle inférieure et/ou une fréquence centrale correspond à un multiple prédéfini de la première fréquence de courant alternatif, notamment à plus de 230 % de la première fréquence de courant alternatif et/ou à moins de 300 % des multiples de la première fréquence de courant alternatif correspondant à la première fréquence de courant alternatif.

8. Système de mesure selon l'une des revendications précédentes,
- pour lequel l'électronique de système de mesure est conçue pour déterminer une amplitude modale des premières vibrations utiles correspondant à une amplitude de signal d'une des premières composantes de signal utiles (s1N1), notamment à une différence des amplitudes de signal des premières composantes de signal utiles (s1N1 ; s2N1), notamment à savoir à l'aide d'au moins l'un des signaux de mesure de vibration, pour déterminer des valeurs d'amplitude représentant l'amplitude des premières vibrations utiles ;
et/ou
- pour lequel l'électronique de système de mesure est conçue pour déterminer une amplitude modale des premières vibrations utiles correspondant à une amplitude de signal d'une des deuxièmes composantes de signal utiles (s1N1), notamment à une différence des amplitudes de signal des deuxièmes composantes de signal utiles (s1N1 ; s2N1), notamment à l'aide d'au moins l'un des signaux de mesure de vibration, pour déterminer des valeurs d'amplitude représentant l'amplitude des deuxièmes vibrations utiles ;
et/ou
- pour lequel l'électronique de système de mesure est conçue pour déterminer un rapport d'amplitude x1/x2 correspondant à un rapport de l'amplitude modale des premières vibrations utiles et de l'amplitude modale des deuxièmes vibrations utiles, notamment pour déterminer, à l'aide d'au moins l'un des signaux de mesure de vibration, des valeurs de rapport d'amplitude représentant le rapport d'amplitude x1/x2 ; et/ou
- pour lequel l'électronique de système de mesure est conçue pour déterminer un amortissement modal des premières vibrations utiles correspondant à un rapport entre l'amplitude de signal d'une des premières composantes de signal utiles (s1N1), notamment une somme ou une différence des amplitudes de signal des premières composantes de signal utiles (s1N1, s2N1), et d'une amplitude de signal du premier courant utile (eN1), notamment pour déterminer, à l'aide du signal d'attaque d'au moins l'un des signaux de mesure de vibration, des valeurs d'amortissement représentant l'amortissement des premières vibrations utiles ; et/ou
- pour lequel l'électronique de système de mesure est conçue pour déterminer un amortissement modal des deuxièmes vibrations utiles correspondant à un rapport entre l'amplitude de signal d'une des deuxièmes composantes de signal utiles (s1N2), notamment une somme ou une différence des amplitudes de signal des deuxièmes composantes de signal utiles (s1N2, s2N2), et d'une amplitude de signal du deuxième courant utile (eN2), notamment pour déterminer, à l'aide du signal d'attaque d'au moins l'un des signaux de mesure de vibration, des valeurs d'amortissement représentant l'amortissement des deuxièmes vibrations utiles ; et/ou
- pour lequel l'électronique de système de mesure est conçue pour déterminer un rapport d'amortissement d1/d2 correspondant à un rapport de l'amortissement modal des premières vibrations utiles et de l'amortissement modal des deuxièmes vibrations utiles, notamment pour déterminer, à l'aide du signal d'attaque et/ou d'au moins l'un des signaux de mesure de vibration, des valeurs de rapport d'amortissement représentant le rapport d'amortissement d1/d2 ; et/ou
- pour lequel l'électronique de système de mesure est conçue pour déterminer des valeurs de fréquence représentant la fréquence de résonance f1 du premier mode de vibration de l'au moins un tube, notamment à l'aide du signal d'attaque et/ou d'au moins l'un des signaux de mesure de vibration ; et/ou
- pour lequel l'électronique de système de mesure est conçue pour déterminer des valeurs de fréquence représentant la fréquence de résonance f2 du deuxième mode de vibration de l'au moins un tube, notamment à l'aide du signal d'attaque et/ou d'au moins l'un des signaux de mesure de vibration ; et/ou
- pour lequel l'électronique de système de mesure est conçue pour déterminer un rapport de fréquences de résonance f1/f2 correspondant à un rapport de la fréquence de résonance f1 du premier mode de vibration de l'au moins un tube et de la fréquence de résonance f2 du deuxième mode de vibration de l'au moins un tube, notamment à l'aide des première et deuxième fréquences de courant alternatif du signal d'attaque et/ou à l'aide des fréquences de signal des première et deuxième composantes de signal utiles (s1N1, s1N2 ; s2N1, s2N2) d'au moins l'un des signaux de mesure de vibration.

9. Système de mesure selon l'une des revendications précédentes, pour lequel l'électronique de système de mesure est conçue pour déterminer, à l'aide du signal d'attaque et d'au moins l'un des signaux de mesure de vibration, des valeurs d'amortissement représentant un amortissement modal des deuxièmes vibrations utiles, notamment pour comparer une ou plusieurs des valeurs d'amortissement à une valeur de référence, ou valeur de référence d'amortissement, déterminée au préalable à cet effet.

10. Système de mesure selon la revendication précédente,
- pour lequel l'électronique de système de mesure est conçue, en vue de surveiller la qualité du produit mesuré, pour comparer une ou plusieurs des valeurs d'amortissement avec au moins une valeur de référence, ou valeur de référence d'amortissement, déterminée à cet effet au préalable et/ou au moyen d'un système de mesure intact, notamment pour émettre, même en cas d'écart d'une ou de plusieurs des valeurs d'amortissement par rapport à la valeur de référence, un message représentant cet écart, lequel message est notamment déclaré comme alarme de défaut ; et/ou
- pour lequel l'électronique de système de mesure est conçue, en vue de surveiller la qualité du produit mesuré à l'aide de plusieurs des valeurs d'amortissement, pour déterminer une modification dans le temps, notamment à savoir une tendance de modification et/ou un taux de modification et/ou une vitesse de modification, de l'amortissement des deuxièmes vibrations utiles, notamment à savoir, lorsque l'amortissement des deuxièmes vibrations utiles diminue, pour déterminer un défaut qui augmente et pour émettre un message représentant une augmentation d'un défaut, lequel message est notamment déclaré comme alarme de défaut ; et/ou
- pour lequel l'électronique de système de mesure est conçue, à l'aide d'une pluralité de valeurs d'amortissement, pour déterminer, notamment également pour émettre, une mesure de dispersion, notamment une variance empirique et/ou une étendue, pour l'amortissement des deuxièmes vibrations utiles de l'au moins un tube, et/ou pour comparer, afin de surveiller la qualité du produit mesuré, ladite mesure de dispersion avec une ou plusieurs valeurs de référence prédéfinies à cet effet.

11. Système de mesure selon l'une des revendications précédentes, pour lequel l'électronique de système de mesure est conçue pour déterminer, à l'aide du signal d'attaque et/ou d'au moins l'un des signaux de mesure de vibration, des valeurs de fréquence représentant la fréquence de résonance f2 du deuxième mode de vibration de l'au moins un tube, notamment pour comparer une ou plusieurs des valeurs de fréquence à une ou plusieurs valeurs de référence prédéfinies à cet effet et/ou pour utiliser plusieurs des valeurs de fréquence pour déterminer une mesure de dispersion pour la fréquence de résonance f2 du deuxième mode de vibration de l'au moins un tube.

12. Système de mesure selon la revendication précédente, pour lequel l'électronique de système de mesure est conçue, pour déterminer, notamment également pour émettre, à l'aide d'une pluralité de valeurs de fréquence, une mesure de dispersion pour la fréquence de résonance f2 du deuxième mode de vibration de l'au moins un tube, et/ou pour comparer la mesure de dispersion à une valeur de référence prédéfinie pour surveiller la qualité produit mesuré et, en cas d'écart entre la mesure de dispersion et la valeur de référence, pour émettre un message représentant cet écart.

13. Système de mesure selon l'une des revendications précédentes, pour lequel l'électronique de système de mesure est conçue pour déterminer - à l'aide du signal d'attaque et/ou d'au moins l'un des signaux de mesure de vibration - des valeurs de rapport de fréquences représentant un rapport entre la fréquence de résonance f1 du premier mode de vibration de l'au moins un tube et la fréquence de résonance f2 du deuxième mode de vibration de l'au moins un tube, notamment, pour comparer une ou plusieurs des valeurs de rapport de fréquence à une ou plusieurs valeurs de référence prédéfinies à cet effet et/ou pour utiliser plusieurs des valeurs de rapport de fréquence pour déterminer une mesure de dispersion pour le rapport de fréquence de résonance f1/f2 de l'au moins un tube.

14. Système de mesure selon la revendication précédente,
- pour lequel l'électronique de système de mesure est conçue, en vue de surveiller la qualité du produit mesuré, pour comparer une ou plusieurs des valeurs de rapport de fréquence avec au moins une valeur de référence, ou valeur de référence de rapport de fréquence, déterminée au préalable à cet effet, notamment pour émettre, également en cas d'écart d'une ou de plusieurs des valeurs de rapport de fréquence par rapport à la valeur de référence, un message représentant cet écart, lequel message est notamment déclaré comme alarme de défaut ; et/ou
- pour lequel l'électronique de système de mesure est conçue, à l'aide d'une pluralité de valeurs de rapport de fréquence, pour déterminer, notamment pour émettre, une mesure de dispersion, notamment une variance empirique et/ou une étendue, pour le rapport de fréquence de résonance f1/f2 de l'au moins un tube, et/ou pour comparer ladite mesure de dispersion à une valeur de référence prédéfinie à cet effet afin de surveiller la qualité du produit mesuré et, en cas d'écart entre la mesure de dispersion et la valeur de référence, pour émettre un message représentant cet écart.

15. Système de mesure selon l'une des revendications précédentes, pour lequel l'électronique de système de mesure est conçue pour déterminer, à l'aide des signaux de mesure de vibration, des valeurs de différence de phase représentant une différence de phase des deuxièmes composantes de signal utiles, à savoir une différence entre un angle de phase de la deuxième composante de signal utile (s1N2) du premier signal de mesure de vibration (s1) et un angle de phase de la deuxième composante de signal utile (s2N2) du deuxième signal de mesure de vibration (s2), notamment pour comparer une ou plusieurs des valeurs de différence de phase avec une valeur de référence, ou valeur de référence de différence de phase, déterminée au préalable à cet effet et/ou pour utiliser plusieurs des valeurs de différence de phase en vue de déterminer une mesure de dispersion pour la différence de phase des deuxièmes composantes de signal utiles de l'au moins un tube.

16. Système de mesure selon la revendication précédente,
- pour lequel l'électronique de système de mesure est conçue, en vue de surveiller la qualité du produit mesuré, pour comparer une ou plusieurs des valeurs de différence de phase avec au moins une valeur de référence (valeur de référence de différence de phase) déterminée au préalable à cet effet, notamment pour émettre, également en cas d'écart d'une ou plusieurs des valeurs de différence de phase par rapport à la valeur de référence, un message représentant cet écart, lequel message est notamment déclaré comme alarme de défaut ; et/ou
- pour lequel l'électronique de système de mesure est conçue, à l'aide d'une pluralité de valeurs de différence de phase, pour déterminer, notamment également pour émettre, une mesure de dispersion, notamment une variance empirique et/ou une étendue, pour la différence de phase des deuxièmes composantes de signal utiles, et/ou pour comparer, en vue de la surveillance de la qualité du produit mesuré, ladite mesure de dispersion à une valeur de référence prédéfinie à cet effet et, en cas d'écart entre la mesure de dispersion et la valeur de référence, pour émettre un message représentant cet écart.

17. Système de mesure selon l'une des revendications précédentes, pour lequel l'électronique de système de mesure est conçue pour déterminer, à l'aide d'au moins l'un des signaux de mesure de vibration, des valeurs de rapport d'amplitude représentant un rapport des amplitudes x1 des premières vibrations utiles et des amplitudes x2 des deuxièmes vibrations utiles, notamment pour comparer une ou plusieurs des valeurs de rapport d'amplitude avec une ou plusieurs valeurs de référence prédéfinies à cet effet et/ou pour utiliser plusieurs des valeurs de rapport d'amplitude pour déterminer une mesure de dispersion pour le rapport d'amplitude x1/x2 de l'au moins un tube.

18. Système de mesure selon la revendication précédente,
- pour lequel l'électronique de système de mesure est conçue - en vue de surveiller la qualité du produit mesuré - pour comparer une ou plusieurs des valeurs de rapport d'amplitude avec au moins une valeur de référence (valeur de référence de rapport d'amplitude) déterminée au préalable à cet effet, notamment pour émettre, également en cas d'écart d'une ou plusieurs des valeurs de rapport d'amplitude par rapport à la valeur de référence, un message représentant cet écart, lequel message est notamment déclaré comme alarme de défaut ; et/ou
- pour lequel l'électronique de système de mesure est conçue - à l'aide d'une pluralité de valeurs de rapport d'amplitude - pour déterminer, notamment également pour émettre, une mesure de dispersion, notamment une variance empirique et/ou une étendue, pour le rapport d'amplitude x1/x2 de l'au moins un tube, et/ou, en vue de surveiller la qualité du produit mesuré, pour comparer ladite mesure de dispersion à une valeur de référence prédéfinie à cet effet et, en cas d'écart entre la mesure de dispersion et la valeur de référence, pour émettre un message représentant cet écart.

19. Système de mesure selon l'une des revendications précédentes, pour lequel l'électronique de système de mesure est conçue pour fournir le deuxième courant utile (eN2) avec une amplitude de courant prédéterminée.

20. Système de mesure selon la revendication précédente, pour lequel l'électronique de système de mesure est conçue, en vue de surveiller la qualité du produit mesuré, pour comparer de manière répétée l'amplitude de signal d'au moins une des deuxièmes composantes de signal utiles (s1N2) avec une valeur dépendant de l'amplitude de signal du deuxième courant utile (eN2) et/ou prédéfinie à cet effet, notamment à savoir une valeur de référence ou valeur de référence d'amplitude correspondant à l'amplitude de signal d'au moins une deuxième composante de signal utile (s1N2) déterminée avec l'amplitude de courant prédéfinie du deuxième courant utile (eN2), notamment à savoir pour déterminer si ou dans quelle mesure l'amplitude de signal s'écarte de cette valeur de référence.

21. Système de mesure selon l'une des revendications précédentes,
- pour lequel les premières composantes de signal utiles (s1N1 ; s2N1) des premier et deuxième signaux de mesure de vibration suivent une modification d'un débit massique du produit guidé dans le tube avec une modification d'une différence de phase des premières composantes de signal utiles, à savoir une différence entre un angle de phase de la première composante de signal utile (s1N1) du premier signal de mesure de vibration (s1) et un angle de phase de la première composante de signal utile (s2N1) du deuxième signal de mesure de vibration (s2) ;
- et pour lequel l'électronique de système de mesure est conçue pour générer, à l'aide de la différence de phase des premières composantes de signal utiles (s1N1 ; s2N1), des valeurs mesurées de débit massique représentant le débit massique.

22. Système de mesure selon l'une des revendications précédentes, pour lequel l'électronique de système de mesure est conçue - notamment en vue de surveiller la qualité du produit mesuré à l'aide des deuxièmes composantes de signal utiles (s1N2 ; s2N2) d'au moins un des signaux de mesure de vibration, notamment à l'aide de leur fréquence de signal et/ou à l'aide d'une amplitude de signal d'au moins une des deuxièmes composantes de signal utiles (s1N2) et/ou à l'aide d'un angle de phase d'au moins une des deuxièmes composantes de signal utiles (s1N2) - pour calculer une ou plusieurs valeurs caractéristiques pour au moins un indice de mesure (MK1) qui caractérise un état de fonctionnement du système de mesure, notamment de telle sorte que l'indice du système de mesure dépend d'un ou de plusieurs paramètres d'une fonction du système de mesure qui est une relation entre la deuxième composante de courant utile du signal d'attaque (e1) et la deuxième composante de signal utile (s1N2 ; s2N2) de l'au moins un signal de mesure de vibration.

23. Système de mesure selon la revendication précédente, pour lequel l'électronique de système de mesure (20) est conçue, en vue de surveiller la qualité du produit mesuré, pour comparer une ou plusieurs valeurs caractéristiques pour l'indice du produit mesuré respectivement avec une ou plusieurs valeurs de référence déterminées pour l'indice du produit mesuré, notamment par le fabricant du système de mesure et/ou lors de la fabrication et/ou d'une mise en service du système de mesure et/ou en fonction du signal d'attaque, notamment une ou plusieurs valeurs de référence représentant une capacité de fonctionnement réduite du transducteur et/ou une ou plusieurs valeurs de référence représentant un dysfonctionnement du transducteur et/ou une ou plusieurs valeurs de référence représentant un transducteur défectueux, notamment pour évaluer et/ou pour quantifier un écart d'une ou de plusieurs des valeurs caractéristiques par rapport à une ou plusieurs des valeurs de référence.

24. Système de mesure selon l'une des revendications précédentes, pour lequel l'électronique de système de mesure est conçue pour fournir le signal d'attaque (e1) avec le deuxième courant utile (eN2) pendant un intervalle de test - notamment d'une durée supérieure à 10 ms et/ou limité dans le temps et/ou démarré de manière récurrente - avec une forme sinusoïdale présentant une deuxième fréquence de courant alternatif ; notamment de telle sorte que le deuxième courant utile (eN2) soit non volatil ou stationnaire, à savoir qu'il présente une amplitude sensiblement constante et non nulle pendant deux périodes de vibration ou plus et/ou pendant une durée supérieure à 10 ms (millisecondes).

25. Système de mesure selon l'une des revendications précédentes,
- pour lequel le circuit d'excitation ne comporte pas d'autre excitateur de vibrations relié au tube que l'excitateur de vibrations (31) ; et/ou
- pour lequel l'excitateur de vibrations (31) est positionné et orienté de telle sorte que le décalage d'entraînement soit inférieur à 0,5 mm, notamment qu'il soit nul, ou que le centre de gravité de la surface de la section transversale d'entraînement du tube corresponde au point de référence d'entraînement ou coïncide avec celui-ci, et/ou
- chacun des modes de vibration de premier et de deuxième ordre du tube présentant respectivement un premier nœud de vibration situé dans la première extrémité de tube de l'au moins un tube et un deuxième nœud de vibration situé dans la deuxième extrémité de tube de l'au moins un tube ; et/ou
- le tube étant courbé par sections, notamment en forme d'arc de cercle et/ou en forme de V, notamment de telle sorte que le tube présente un segment d'arc de sommet central et/ou qu'exactement un axe principal d'inertie de l'au moins un tube se trouve à l'intérieur de la surface de section transversale de référence de l'au moins un tube ; et/ou
- le tube étant rectiligne par sections, notamment sur toute la longueur du tube, notamment de telle sorte qu'un centre de masse se trouve à l'intérieur de la surface de section transversale de référence de l'au moins un tube.

26. Système de mesure selon l'une des revendications précédentes,
- pour lequel l'excitateur de vibrations (31) comporte un noyau magnétique, lequel est formé notamment au moyen d'un aimant permanent, ainsi qu'une bobine traversée par le champ magnétique de l'induit, notamment une bobine à air ;
- le noyau magnétique étant relié mécaniquement à l'au moins un tube en formant le point d'entraînement ; et
- la bobine étant raccordée électriquement à l'électronique de système de mesure et étant conçue pour recevoir le signal d'attaque (e1) et pour conduire ses premier et deuxième courants utiles (eN1, eN2).

27. Système de mesure selon l'une des revendications précédentes,
- pour lequel l'électronique de système de mesure est conçue - en vue de surveiller la qualité du produit mesuré à l'aide des deuxièmes composantes de signal utiles (s1N2 ; s2N2), notamment à l'aide aussi bien des deuxièmes composantes de signal utiles (s1N2 ; s2N2) que des premières composantes de signal utiles (s1N1 ; s2N1) - pour déterminer si et/ou dans quelle mesure il existe un défaut du produit mesuré, notamment à la suite d'une ségrégation indésirable du produit mesuré et/ou à la suite d'une charge indésirable du produit mesuré par un ou plusieurs produits étrangers ; et/ou
- pour lequel l'électronique de système de mesure est conçue pour déterminer si et/ou dans quelle mesure il existe une erreur de mesure en raison d'un défaut du produit mesuré lors de la détermination des valeurs mesurées.
